# EUROPEAN PATENT SPECIFICATION

(11) **EP 4 599 369 B1**
(45) Date of publication and mention of the grant of the patent: **09.12.2026**
(21) Application number: 23790082.4
(22) Date of filing: 04.10.2023
(51) Int. Cl.: G06N 10/60, G06N 10/20

(54) **QUANTUM INTERIOR POINT METHOD**
QUANTENINTERIEURPUNKTVERFAHREN
PROCÉDÉ DE POINT D'INTÉRIEUR QUANTIQUE

(30) Priority: 04.10.2022 US 202263413230 P
(43) Date of publication of application: 13.08.2025
(73) Proprietor: Goldman Sachs & Co. LLC, New York, NY 10282 (US)
(72) Inventor: DALZELL, Alexander M., New York, New York 10282 (US); CLADER, Brian David, New York, New York 10282 (US); SALTON, Grant, New York, New York 10282 (US); BERTA, Mario, New York, New York 10282 (US); LIN, Cedrick Yen-Yu, New York, New York 10282 (US); BADER, David Albert, New York, New York 10282 (US); ZENG, William Joseph, New York, New York 10282 (US)
(74) Representative: Boult Wade Tennant LLP
(86) International application number: PCT/IB2023/059980
(87) International publication number: WO 2024/075046

(56) References cited:
- B. AUGUSTINO ET AL: "An inexact-feasible quantum interior point method for second-order cone optimization", LEHIGH UNIVERSITY ISE TECHNICAL REPORT, no. 21T-009a, 21 January 2022 (2022-01-21), XP093117182, Retrieved from the Internet <URL:https://web.archive.org/web/20220409212301if_/https://engineering.lehigh.edu/sites/engineering.lehigh.edu/files/_DEPARTMENTS/ise/pdf/tech-papers/21/21T_009a.pdf> [retrieved on 20220409]
- M. MOHAMMADISIAHROUDI ET AL: "Efficient use of quantum linear system algorithms in interior point methods for linear optimization", ARXIV.ORG, CORNELL UNIVERSITY LIBRARY, 201 OLIN LIBRARY CORNELL UNIVERSITY ITHACA, NY 14853, 2 May 2022 (2022-05-02), XP091220259, DOI: 10.48550/arXiv.2205.01220
- B. D. CLADER ET AL: "Preconditioned quantum linear system algorithm", PHYSICAL REVIEW LETTERS, vol. 110, 250504, 18 June 2013 (2013-06-18), XP055684504, DOI: 10.1103/PhysRevLett.110.250504
- B. D. CLADER ET AL: "Quantum resources required to block-encode a matrix of classical data", ARXIV.ORG, CORNELL UNIVERSITY LIBRARY, 201 OLIN LIBRARY CORNELL UNIVERSITY ITHACA, NY 14853, 7 June 2022 (2022-06-07), XP091241806, DOI: 10.48550/arXiv.2206.03505

## Description

### CROSS-REFERENCE TO RELATED APPLICATION

This application claims priority to U.S. Provisional Patent Application Serial No. 63/413,230, "End-to End Analysis for Quantum Interior Point Methods with Improved Block-Encodings," filed on October 4, 2022.

### BACKGROUND

### 1. Technical Field

This disclosure relates generally to quantum interior point methods (QIPMs), and more particularly to implementing quantum interior point methods (QIPMs).

### 2. Description of Related Art

The practical utility of finding optimal solutions to well-posed optimization problems has been known since the days of antiquity. With the advent of the quantum era, there has been great interest in developing quantum algorithms that solve optimization problems with provable speedups over classical algorithms. Unfortunately, it can be difficult to implement these quantum algorithms and evaluate whether these quantum algorithms will be practically useful.

On 21 January 2022, Augustino et al. (An inexact-feasible quantum interior point method for second-order cone optimization; ISE TR, no. 21T-009a) disclosed an inexact-feasible (IF) QIPM for second-order conic optimization problems (SOCOP), establishing the polynomial convergence for a short-step primal-dual algorithms based on the Monteiro-Zhang (MZ) family of directions, by combining recent progress in quantum linear system solvers (QLSS) and on the block-encoding technique with a classical optimization tool known as iterative refinement.

On 2 May 2022, Mohammadisihroudi et al. (Efficient use of quantum linear system algorithms in interior point methods for linear optimization; arXiv:2205.01220v1; doi: 10.48550/arXiv.2205.01220) reviewed that QIPM have been proposed to solve convex optimization problems, such as linear/semi-definite optimization problems and SOCOP, then disclosed how to efficiently use QLSS in QIPM, despite challenges such as ill-conditioned systems and errors from quantum solvers, by developing an inexact infeasible (II) QIPM to solve linear optimization problems and, in order to get an exact solution, using iterative refinement.

### SUMMARY

The invention is defined in the claims. The techniques described herein relate to a quantum interior point method (QIPM) for solving a second-order cone program (SOCP) instance using a computing system, the computing system comprising a quantum computing system and a classical computing system, the method including: receiving the SOCP instance; defining a Newton system for the SOCP instance by constructing matrix G and vector h, where matrix G and vector *h* describe constrains for a linear system *Gu = h* based on the SOCP instance; preconditioning, by the classical computing system, matrix G and vector ***h*** via row normalization, wherein the preconditioning reduces a condition number of matrix G, wherein preconditioning matrix G and vector h comprises: determining a diagonal matrix D where at least one entry Dᵢᵢ is equal to the norm of row i of matrix G; and redefining matrix G and vector h according to: G = D⁻¹G and h = D⁻¹h; iteratively determining u until a predetermined iteration condition is met, the iterations including: causing the quantum computing system to apply matrix G and vector ***h*** to a quantum linear system solver (QLSS) to generate a quantum state; causing the quantum computing system to perform quantum state tomography on the quantum state; and updating a value of ***u*** based on a current value of ***u*** and the output of the quantum state tomography; and determining a solution to the SOCP instance based on the updated value of u.

Other aspects include components, devices, systems, improvements, methods, processes, applications, computer readable mediums, and other technologies related to any of the above.

### BRIEF DESCRIPTION OF THE DRAWINGS

Embodiments of the disclosure have advantages and features which will be more readily apparent from the following detailed description and the appended claims, when taken in conjunction with the examples in the accompanying drawings, in which:
FIG. 1 is a diagram of an example quantum circuit configured to enact a unitary *U[s]* on registers on a set of registers, according to some embodiments;
FIG. 2 is a diagram of an example Quantum singular value transform (QSVT) circuit, according to some embodiments;
FIG. 3 is a diagram of an example-controlled version of the quantum circuit in FIG. 1, controlled on qubit c, according to some embodiments;
FIG. 4 is a diagram illustrating an example decomposition of the *U_{Q**h**}* gate into a state-preparation unitary *U**ₕ*** and multi-controlled-Toffoli gates, according to some embodiments;
FIG. 5 is a diagram illustrating an example decomposition of the *CR*⁰(*s*) gate (top) and controlled-*CR*⁰(*s*) gate (bottom), as defined in eq. (55), according to some embodiments;
FIG. 6 is a diagram illustrating an example decomposition of the *V_{G}* unitary (top) and controlled-*V_{G}* unitary (bottom), as defined in eq. (57), according to some embodiments;
FIG. 7 is a plot illustrating simulation results of the QIPM on an SOCP instance corresponding to portfolio optimization on 30 randomly chosen stocks, according to some embodiments;
FIG. 8 includes plots of the Median Frobenius condition number for 128 randomly sampled stock portfolios from the DWCF index, according to some embodiments;
FIG. 9 is a plot of the Median Frobenius condition number *κ_{F}* for 128 randomly sampled stock portfolios from the DWCF index, according to some embodiments;
FIG. 10 is a plot of the median value of the square of the inverse tomography precision used to remain in the neighborhood of the central path for 128 randomly sampled stock portfolios from the DWCF index, according to some embodiments;
FIG. 11 is a plot of the median value of the estimated algorithm scaling factor, according to some embodiments;
FIG. 12 is a diagram illustrating the breakdown of quantum resources used for a single coherent run of the uncontrolled version of a quantum algorithm, according to some embodiments;
FIG. 13 includes two plots of the Median Frobenius condition number for 128 randomly sampled stock portfolios from the DWCF index, according to one or more embodiments;
FIG. 14 includes two plots of the Median value of the square of the required inverse tomography precision used to remain in the neighborhood of the central path for 128 randomly sampled stock portfolios from the DWCF index, according to one or more embodiments;
FIG. 15 includes two plots of the Median value of the estimated algorithm scaling factor computed as the median of *n*^{1.5}*κ_{F}*/*ξ*² for 128 randomly sampled stock portfolios from the DWCF index, according to one or more embodiments;
FIG. 16 is a flowchart of an example method, specifically a quantum interior point method (QIPM), for solving a second-order cone program (SOCP) instance using a quantum computing system, according to one or more embodiments;
FIGS. 17A-17B are block diagrams of a computing system including a classical computing system and a quantum computing system, according to some embodiments;
FIG. 17C-17D are block diagrams of components of a quantum computing system, according to some embodiments;
FIG. 17E is a flow chart that illustrates an example execution of a quantum routine on the computing system; and
FIG. 18 is an example architecture of a classical computing system, according to some embodiments.

### DETAILED DESCRIPTION

The figures and the following description relate to preferred embodiments by way of illustration only. It should be noted that from the following discussion, alternative embodiments of the structures and methods disclosed herein will be readily recognized as viable alternatives that may be employed without departing from the scope of protection defined by the claims.

### I. OVERVIEW

This disclosure studies quantum interior point methods (QIPMs) for second-order cone programming (SOCP), guided by the example use case of portfolio optimization (PO). This disclosure provides a complete quantum circuit-level description of the algorithm from problem input to problem output, making several improvements to the implementation of the QIPM. This disclosure reports the number of logical qubits and the quantity/depth of non-Clifford T-gates used to run the algorithm, including constant factors. The determined resource counts depend on instance-specific parameters, such as the condition number of certain linear systems within the problem. To determine the size of these parameters, numerical simulations of small PO instances are performed, which lead to concrete resource estimates for the PO use case. The numerical results do not probe large enough instance sizes to make conclusive statements about the asymptotic scaling of the algorithm. However, already at small instance sizes, the analysis suggests that, due primarily to large constant prefactors, poorly conditioned linear systems, and a fundamental reliance on costly quantum state tomography, fundamental improvements to the QIPM are desired for it to lead to practical quantum advantage.

### A. Introduction

The practical utility of determining optimal solutions to well-posed optimization problems has been known since the days of antiquity, with Euclid considering the minimal distance between two points using a line. In the modern era, optimization algorithms for business and financial use cases continue to be ubiquitous. Partly as a result of this utility, algorithmic techniques for optimization problems have been well studied since even before the invention of the computer, including a famous dispute between Legendre and Gauss on who was responsible for the invention of least squares fitting. With the advent of the quantum era, there has been great interest in developing quantum algorithms that solve optimization problems with provable speedups over classical algorithms.

Unfortunately, it can be difficult to evaluate whether these quantum algorithms will be *practically* useful. In some cases, the algorithms are heuristic, and their performance can only be measured empirically once it is possible to run them on actual quantum hardware. In other cases, the difficulty in evaluating practicality stems from the inherent complexity of combining many distinct ingredients, each with their own caveats and bottlenecks. To make an apples-to-apples comparison and quantify advantages of a quantum algorithm, an end-to-end resource analysis that accounts for all costs from problem input to problem output may be performed.

Such an end-to-end analysis for a *quantum interior point method* (QIPM) was performed for solving second-order cone programs (SOCPs). In particular, this disclosure focuses on a concrete use case with very broad applications, but of interest in the financial services sector: *portfolio optimization* (PO). In general, PO is the task of determining the optimal resource allocation to a collection of possible classes to optimize a given objective. In finance, one seeks to determine the optimal allocation of funds across a set of possible assets that maximizes returns and minimizes risk, subject to constraints. Noteworthy, many variants of the PO problem can be cast as a SOCP and subsequently solved with a classical or quantum interior point method. Indeed, classical interior point methods (CIPMs) are efficient not only in theory, but also in practice; they are the method of choice within fast numerical solvers for SOCPs and other conic programs, which encompass a large variety of optimization problems that appear in industry. Notably, QIPMs structurally mirror CIPMs, and seek improvements by replacing certain subroutines with quantum primitives. Thus, compared to other proposed quantum algorithms for conic programs not based on widely used classical techniques (e.g., solvers that leverage the multiplicative weights update method), QIPMs are uniquely positioned to provide not only a theoretical asymptotic advantage, but also a practical quantum solution for this common class of problem.

However, the QIPM is a complex algorithm that delicately combines some purely classical steps with multiple distinct quantum subroutines. The runtime of the QIPM is stated in terms of several parameters that can only be evaluated once a particular use case has been specified; depending on how these parameters scale, an asymptotic speedup may or may not be achievable. Additionally, any speedup is contingent on access to a large quantum random access memory (QRAM), an ingredient that in prior asymptotic-focused analyses has typically been assumed to exist without much further justification or cost analysis.

The resource analysis is detailed and takes care to study aspects of the end-to-end pipeline, including the QRAM component. This disclosure reports results in terms of relevant problem parameters, and then describes numerical experiments to determine the size and scaling of these parameters for actual randomly chosen instances of the PO problem, based on historical stock data. This approach allows us to estimate the exact resource cost of the QIPM for an example PO problem, including a detailed breakdown of costs by various subroutines. This estimate incorporates several optimizations to the underlying subroutines, and technical improvements to how they are integrated into the QIPM. Consequently, our analysis allows us to evaluate the prospect that the algorithm may exhibit a practical quantum advantage, and it reveals the computational bottlenecks within the algorithm that are most in need of further improvement.

While this disclosure focuses on the QIPM and its application to the PO problem, this disclosure has more general applications and more general takeaways for quantum algorithms and for quantum computing applications. Firstly, the results emphasize the importance of end-to-end analysis when evaluating a proposed application. Furthermore, the modular treatment of the underlying algorithmic primitives produces quantitative and qualitative takeaways that are relevant for end-to-end treatments of a large number of other algorithms that also rely on these subroutines, especially those in the area of machine learning, where data access via QRAM and quantum linear algebra techniques are often used.

### B. Results

The resource analysis focuses on three central quantities that determine the overall cost of algorithms implemented on fault-tolerant quantum computers: the number of *logical* qubits, the total number of *T* gates ("*T-count"),* and the number of parallel layers of *T* gates ("T-depth") useed to construct quantum circuits for solving the problem. The T-depth acts as a proxy for the overall runtime of the algorithm, whereas the *T*-count and number of logical qubits are helpful for determining how many physical qubits may be used for a full, fault-tolerant implementation. We justify the focus on *T* gates by pointing out that, in many prominent approaches to fault-tolerant quantum computation, quantum circuits are decomposed into Clifford gates and *T* gates, and the cost of implementing the circuit is dominated by the number and depth of the *T* gates. The fault-tolerant Clifford gates can be performed transversally or even in software, whereas the *T* gates use the expensive process of magic state distillation. This disclosure stops short of a full analysis of the algorithm at the physical level, as the logical analysis seems to suffice to evaluate the overall outlook for the algorithm and identify its main bottlenecks.

At the core of any interior point method (IPM) is the solving of a linear system of equations. The QIPM performs this step using a quantum linear system solver (QLSS) together with pure state quantum tomography. The cost of QLSS depends on a parameter *κ_{F}*, the Frobenius condition number ∥*G*∥*_{F}*∥*G*⁻¹∥ of the matrix G that is inverted (where ∥·∥*_{F}* denotes the Frobenius norm, and ∥·∥ denotes the spectral norm), while the cost of tomography depends on a parameter *ξ*, a precision parameter. These parameters are evaluated empirically by simulating the QIPM on small instances of the PO problem.

Table I reports a summary of overall resource calculation, in which the asymptotically leading term is shown (along with its constant prefactor) in terms of parameters *κ_{F}* and *ξ*, as well as n, the number of assets in the PO instance, and *ε*, the desired precision to which the portfolio should be optimized. It is determined (numerically) that *κ_{F}* grows with n, and that *ξ* shrinks with *n*; it is estimated that, at *n* = 100 and *ε* = 10⁻⁷, the implementation of the QIPM may use 8 × 10⁶ qubits and 8 × 10²⁹ total *T* gates spread out over 2 × 10²⁴ layers. These resource counts are decidedly out of reach both in the near and far term for quantum hardware, even for a problem of modest size by classical standards. Even if quantum computers one day match the gigahertz-level clock-speeds of modern classical computers, 10²⁴ layers of *T* gates would take millions of years to execute. By contrast, the PO problem can be easily solved in a matter of seconds on a laptop for n = 100 stocks.

This disclosure cautions that the numbers reported should not be interpreted as the final word on the cost of the QIPM for PO. Further examination of the algorithm may uncover many improvements and optimizations that may reduce the costs compared to the current calculations. On the other hand, the results do already incorporate several innovations made to reduce the resource cost, including preconditioning the linear system.

Besides the main resource calculation, this disclosure makes several additional contributions and observations:
1. This disclosure provides explicit example quantum circuits for useful (e.g., important) subroutines of the QIPM, namely the state-of-the-art QLSS based on the discrete adiabatic theorem and pure state tomography, which complement the circuits for block-encoding (using QRAM). These example quantum circuits, and their precise resource calculations, may be useful elsewhere, as these subroutines are ubiquitous in quantum algorithms. See section IV F and section V for additional details.
2. This disclosure breaks down the resource calculation into its constituents to illustrate which parts of the algorithm are most costly. This disclosure determines that many independent factors create significant challenges toward realizing quantum advantage with QIPMs, and this work underscores aspects of the algorithm that may be improved. This disclosure also notes that the conditions under which QIPMs would be most successful (e.g., when *κ_{F}* is small) also allow for classical IPMs based on iterative classical linear system solvers to be competitive. See section VII for additional details.
3. This disclosure numerically simulates several versions of the full QIPM solving the PO problem on portfolios as large as n = 120 stocks, and this disclosure reports the empirical size and scaling of the relevant parameters *κ_{F}* and *ξ*. There is considerable variability in the trends observes, depending on which version of the QIPM is chosen, and when the QIPM is terminated, which makes it difficult to draw robust conclusions. However, this disclosure determines that both *κ_{F}* and *ξ*⁻¹ appear to grow with n. Note that previous numerical experiments on a similar formulation of the PO problem suggested *κ_{F}* does not grow with problem size, but those pervius experiments scaled the number of "time epochs" while keeping n constant. Additionally, this disclosure observes that the "infeasible" version of the QIPM originally empirically performs similarly to more sophisticated "feasible" versions, despite not enjoying the same theoretical guarantees of fast convergence. Finally, contrary to theoretical expectation, this disclosure observes that *κ_{F}* and *ξ*⁻¹ do *not* diverge as *ε* → 0. See section VI for additional details.
4. This disclosure makes various technical improvements to the underlying ingredients of QIPMs:
   - Tomographic precision: Performing tomography on the output of a QLSS necessarily causes the classical estimate of the solution to the linear system to be inexact. This disclosure describes how the allowable amount of tomography precision can be determined adaptively rather than relying on theoretical bounds. Nonetheless, this disclosure also improves the constant prefactor in the tomographic bounds. The total number of state preparation queries used to learn an unknown L-dimensional pure state to *ξ* error using a tomography method is to leading order at most 115*L*ln(*L*)/ξ².
   - Norm of the linear system: Since QLSSs output a normalized quantum state, tomography does not directly yield the norm of the solution to the linear system. The norm can be learned through more complicated protocols, but it is observed that in the context of QIPMs, a sufficient estimate for the norm can be learned classically.
   - Preconditioning: a preconditioning method is proposed that is compatible with the QIPM, while reducing the parameter *κ_{F}*. The numerical simulations suggest the reduction is more than an order of magnitude for the portfolio optimization problem.
   - Feasible QIPM: A "feasible" version of a QIPM is implemended which includes determining a basis for the null space of the SOCP matrix. This disclosure identifies an explicit basis for the PO problem, thereby avoiding a costly QR decomposition. However, this disclosure observes that determines the basis via QR decomposition leads to more stable numerical results.
TABLE I illustrates asymptotic, leading-order contributions to the total quantum resources for an end-to-end portfolio optimization (including constant factors), in terms of the number of assets in the portfolio (n), the desired precision to which the portfolio should be optimized (*ε*), the maximum Frobenius condition number of matrices encountered by the QIPM (*κ_{F}*), and the minimum tomographic precision for the algorithm to succeed (*ξ*). The T-depth and *T-count* expressions represent the cumulative cost of 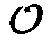 (*ξ*⁻²*n*^{1.5}log(*n*)log(*ε*⁻¹)) individual quantum circuits performed serially, a quantity that we estimate evaluates to 6 × 10¹² circuits at n = 100; see table X for a detailed accounting. The right column uses a numerical simulation of the quantum algorithm (see section VI) to compute the instance-specific parameters in the resource expression and estimate the resource cost at n = 100 and *ε* = 10⁻⁷.

**TABLE I**

| **Resource** | **QIPM complexity** | **Estimated at** *n* = 100 |
|---|---|---|
| **Number of logical qubits** | 800*n*² | 8 × 10⁶ |
| ***T*-depth** | (2 × 10¹⁰)*κ_{F}n*^{1.5}*ξ*⁻²log₂(*n*)log₂(*ε*⁻¹)log₂(*κ_{F}n*^{14/27}*ξ*⁻¹) | 2 × 10²⁴ |
| ***T*-count** | (7 × 10¹¹)*κ_{F}n*^{3·5}ξ⁻²log₂(*n*)log₂(*ε*⁻¹)log₂(*κ_{F}ξ*⁻¹) | 8 × 10²⁹ |

The outline for the remainder of this disclosure is as follows. Section II describes and defines the portfolio optimization problem in terms of Markowitz portfolio theory. Section III describes Second Order Cone Programming (SOCP) problems, illustrate how portfolio optimization can be represented as an instance of SOCP, and discuss how IPMs can be used for solving SOCPs. Section IV review the *quantum* ingredients used to turn an IPM into a QIPM. In particular, this dislosure reviews quantum linear system solvers, block-encoding for data loading, and quantum state tomography for data read out. This disclosure also presents better bounds on the tomography procedure than were previously known. Section V describes the implementation of using QIPM and quantum algorithms for SOCP for the portfolio optimization problem, including a detailed resource estimate for the end-to-end problem. Section VI shows numerical results from simulations of the full problem, and section VII reflects on the calculations performed, identifying the main bottlenecks and drawing conclusions about the outlook for quantum advantage with QIPM.

The QIPM has many moving parts using several mathematical symbols. While all symbols are defined as they are introduced in the text, this disclosure also provides a full list of symbols for the reader's reference in the section Additional Information A. Throughout the paper, all vectors are denoted in bold lowercase letters to contrast with scalar quantities (unbolded lowercase) and matrices (unbolded uppercase). The only exception to this rule will be the symbols *N*, *K*, and *L,* which are positive integers (despite being uppercase), and denote the number of rows or columns in certain matrices related to an SOCP instance.

### II. PORTFOLIO OPTIMIZATION (PO)

### A. Introduction

Portfolio optimization is the process widely used, for example, by financial analysts to assign allocations of capital across a set of assets within a portfolio, given optimization criteria such as maximizing the expected return and minimizing the financial risk. The creation of the mathematical framework for modern portfolio theory (MPT) is credited to Harry Markowitz, for which he received the 1990 Alfred Nobel Memorial Prize in Economic Sciences. Markowitz describes the process of selecting a portfolio in two stages, where the first stage starts with "observation and experience" and ends with "beliefs about the future performances of available securities." The second stage starts with "the relevant beliefs about future performances" and ends with "the choice of portfolio." The theory is also known as *mean-variance analysis.*

Typically, portfolio optimization strategies include diversification, which is the practice of investing in a wide array of asset types and classes as a risk mitigation strategy. Some popular asset classes are stocks, bonds, real estate, commodities, and cash. After building a portfolio, one may expect a return (or profit) after a specific period of time. *Risk* is defined as the fluctuations of the asset value. MPT describes how high variance assets can be combined with other uncorrelated assets through diversification to create portfolios with low variance on their return. Naturally, among equal-risk portfolios, investors prefer those with higher expected return, and among equal-return portfolios, they prefer those with lower risk.

### B. Mathematical formulation

Within a portfolio, *wᵢ* represents the amount of an asset *i* being held over some period of time. Often, this amount is given as the asset's price in dollars at the start of the period. When the price is positive (*wᵢ >* 0), this is referred to as a *long* position; and when the price is negative (*wᵢ* < 0), this is referred to as a *short* position with an obligation to buy this asset at the end of the period. Typically, investment banks hold long positions, while hedge funds build portfolios with short positions that have higher risk due to the uncertainty of the price to buy the asset at the end of the period. The optimization variable in the portfolio optimization problem is the vector of n assets $w ∈ {ℝ}^{n}$ in the portfolio.

The price of each asset *i* varies over time. *uᵢ* is defined to be the relative change (positive or negative) during the period of interest. Then, the return of the portfolio for that period is defined as *r̅ = **u***^{T}***w*** dollars. The relative changes $u ∈ {ℝ}^{n}$ follow a stochastic process, and this can be modeled with a random vector with mean ***û*** and covariance Σ. The return ***r̅*** is then a random variable with mean ***û*^{T}*w*** and covariance ***w*^{T}Σ*w***.

To capture realistic problem formulations, one or more mathematical constraints may be added to the optimization problem corresponding to the problem-specific considerations. For example, two common constraints in portfolio optimization problems are no short positions (*wᵢ* ≥ 0 for all *i*, denoted by ***w*** ≥ 0) and that the total investment budget is limited (**1**^{T}***w*** = 1, where **1** denotes the vector of ones). This forms the classical portfolio optimization problem from Markowitz's mean-variance theory: $\begin{matrix}{min}_{w} {w}^{⊤} Σ w \\ \begin{matrix}s . t . & {\hat{u}}^{⊤} w \geq {\overline{r}}_{min} \\ & {1}^{⊤} w = 1 \\ & w \geq 0\end{matrix}\end{matrix}$ (1) This formulation is a quadratic optimization problem where risk is minimized, while achieving a target return of at least *r̅*ₘᵢₙ with a fixed budget and no short positions. In practice, the portfolio optimization problem is often reformulated in other ways, for example, to maximize return subject to a fixed amount of risk, or to optimize an objective function that weighs risk against return. The current application follows the latter approach, formulated as follows, where *q* is a tunable *risk-aversion coefficient:* $\begin{matrix}{min}_{w} - {\hat{u}}^{⊤} w + q \sqrt{{w}^{⊤} Σ w} \\ \begin{matrix}s . t . & {1}^{⊤} w = 1 \\ & w \geq 0\end{matrix}\end{matrix}$ (2) This optimization problem is no longer a QO problem, but it can be mapped to a conic problem, as described later in section III B. Depending on the problem, additional constraints can be added. For instance, constraints can be added to allow short positions, component-wise short sale limits, or a total short sale limit. Another variant of this is a constraint for a collateralization requirement, which limits the total of short positions to a fraction of the total long positions. Often, buying or selling an asset results in a transaction fee that is proportional to the amount of asset that is bought or sold. Linear transaction costs or maximum transaction amounts are often included as constraints in portfolio optimization. Diversification constraints can limit portfolio risk by limiting the exposure to individual positions and groups of assets within particular sectors. To illustrate the flexibility of this analysis, a maximum transaction constraint is included and use the following problem formulation is used in the analysis in the rest of the disclosure: $\begin{matrix}{min}_{w} & - {\hat{u}}^{⊤} w + q \sqrt{{w}^{⊤} Σ w} \\ s . t . & \begin{matrix}{1}^{⊤} w = 1 \\ \left|w-\overline{w}\right| \leq ζ \\ w \geq 0 ,\end{matrix}\end{matrix}$ (3) where ***w̅*** denotes the current portfolio, so that |***w** - **w̅***| is the vector of transaction quantities for each asset, which are constrained to be smaller than maximum values contained in the vector ζ.

### III. SECOND ORDER CONE PROGRAMMING (SOCP) AND INTERIOR POINT METHODS (IPM)

### A. Definitions

Second-order cone programming (SOCP) is a type of convex optimization that allows for a richer set of constraints than linear programming (LP), without many of the complications of semidefinite programming (SDP). Indeed, SOCP is a subset of SDP, but SOCP admits interior point methods (IPMs) that may be just as efficient as IPMs for LP. Many real-world problems can be cast as SOCP, including the example portfolio optimization problem of interest.

For any k-dimensional vector v, the following may be used v = (*v*₀; ***ṽ***), where v₀ is the first entry of ***v***, and ***ṽ*** contains the remaining *k* - 1 entries.

**Definition 1.** *A k**-dimensional second-order cone** (for k* ≥ *2) is the convex set* ${Q}^{k} = \left\{\left({x}_{0}; {x}^{˜}\right)∈{ℝ}^{k}\left|{x}_{0}\geq \left‖{x}^{˜}\right‖\right.\right\} ,$ (4) *where* ∥·∥ *denotes the vector two-norm (standard Euclidean norm). For k = 1,* ${Q}^{1} = \left\{{x}_{0}∈ℝ\left|{x}_{0}\geq 0\right.\right\}$ .

**Definition 2.** *In general, a **second-order cone problem** is formulated as* $\begin{matrix}{min}_{x} & {c}^{⊤} x \\ s . t . & A x = b \\ & x ∈ Q ,\end{matrix}$ (5) *where* 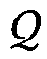 *=* 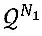 × ··· × 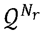 *is a Cartesian product of r second-order cones of combined dimension N = N*₁ *+* ··· *+ Nᵣ, and A is a full-rank K* × *N matrix encoding K linear equality constraints, with K* ≤ *N.*

Note that the special case of linear programming is immediately recovered if *Nᵢ* = 1 for all *i*. We say that a point *x* is *primal feasible* whenever *Ax = **b*** and ***x*** ∈ 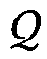 . It is *strictly primal feasible* if additionally it lies in the interior of Q*.*

The dual to problem in eq. (5) is a maximization problem over a variable $y ∈ {ℝ}^{K}$ *,* given as follows: $\begin{matrix}{max}_{y} & {b}^{⊤} y \\ s . t . & {A}^{⊤} y + s = c \\ & s ∈ Q .\end{matrix}$ (6)

We say that a pair *(s; y)* is *dual feasible* whenever *A*^{T}***y*** + ***s** = c and **s*** ∈ 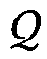 *.* For any point *(x; y; s)* with *x, s* ∈ 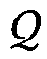 *,* the *duality gap* may be defined as $μ \left(x, s\right) : = \frac{1}{r} {x}^{τ} s = \frac{1}{r} \left({c}^{τ}x-{b}^{τ}y\right) ,$ (7) where *r̅* is the number of cones, as in definition 2, and the second equality holds under the additional assumption that the point is primal and dual feasible. The fact that *x, s* ∈ 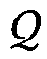 implies that *µ*(***x***, ***s***) ≥ 0. Moreover, assuming that both the primal and dual problems have a strictly feasible point, the optimal primal solution ***x**** and the optimal dual solution ***(y*; s*)*** are guaranteed to exist and satisfy ***c***^{T}***x*** = **b***^{T}***y***,* and hence $μ = \frac{1}{r} {x}^{∗ τ} {s}^{∗} = {x}^{∗ τ} \left(c-{A}^{τ}{y}^{∗}\right) = {c}^{τ} {x}^{∗} - {b}^{τ} {y}^{∗} = 0$ . Thus, the primal-dual condition of optimality can be expressed by the system $\begin{matrix}A x = b \\ {A}^{⊤} y + s = c \\ {x}^{⊤} s = 0 \\ x ∈ Q , s ∈ Q .\end{matrix}$ (8)

### B. Portfolio optimization as SOCP

The portfolio optimization problem can be solved by reduction to SOCP, and this reduction is often made in practice. Here this disclosure describes one way of translating the portfolio optimization problem, as given in eq. (3) into a second-order cone program.

The objective function in eq. (3) has a non-linear term $q \sqrt{{w}^{τ} Σ w}$, which may be linearized by introducing a new scalar variable *t,* and a new constraint $t \geq \sqrt{{w}^{τ} Σ w}$. This results in the equivalent optimization problem ${min}_{x = \left(w; t\right)} \begin{matrix}{\left[-\hat{u};q\right]}^{⊤} \left(w; t\right) \\ s . t . {1}^{⊤} w = 1 \\ \left|{w}_{i}-{\overline{w}}_{i}\right| \leq {ζ}_{i} \\ {w}_{i} \geq 0 \\ {t}^{2} \geq {w}^{⊤} Σ w .\end{matrix}$ (9)

A goal now is to express the constraints in eq. (9) as second-order cone constraints. Given an *m* × *n* matrix *M* for which Σ = *M*^{T}*M*, the constraint on *t* can be expressed by introducing an m-dimensional variable ***η*** subject to the equality constraint ***η*** = *M**w*** and the second-order cone constraint (*t*; ***η***) ∈ 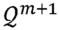 .

The matrix *M* can be determined from Σ via a Cholesky decomposition, although for large matrices Σ, this computation may be costly. Alternatively, if Σ and ***µ̂*** are calculated from stock return vectors ***u***⁽¹⁾, ··· , ***u***^{(*m*)} during m independent *time epochs* (e.g. returns for each of *m* days or each of *m* months), then a valid matrix *M*^{T} is given by (***u***⁽¹⁾ - ***û***, ··*· , **u***^{(*m*)} - ***û***), i.e. the columns of *M*^{T} are given by the deviation of the returns from the mean in each epoch. This is the approach taken in the numerical experiments herein (presented later).

The absolute value constraints are handled by introducing a pair of n-dimensional variables ***ϕ*** and ***ρ**,* subject to equality constraints ***ϕ*** = ***ζ** - **(w** - **w̅***) and ***p** = **ζ** +* **(*****w** - **w̅***). The absolute value constraints are then imposed as positivity constraints *ϕᵢ* ≥ *0, ρᵢ* ≥ 0, which are included as second-order cone constraints of dimension 1. Alternatively, the absolute value constraints may be encoded with n second-order cone constraints of dimension 2; these formulations are equivalent up to a simple coordinate change, and one may opt to use 1-dimensional cones for their simplicity of presentation.

In summary, the portfolio optimization problem from eq. (3) may be described as the following SOCP that minimizes over the variable $x = \left(w; ϕ; ρ; t; η\right) ∈ {ℝ}^{3 n + m + 1}$: $\begin{matrix}{min}_{x} {\left[-\hat{u}; 0; 0; q; 0\right]}^{⊤} \left(w; ϕ; ρ; t; η\right) = : {c}^{⊤} x \\ s . t . \left(\begin{matrix}{1}^{⊤} & {0}^{⊤} & {0}^{⊤} & 0 & {0}^{⊤} \\ I & I & 0 & 0 & 0 \\ I & 0 & - I & 0 & 0 \\ M & 0 & 0 & 0 & - I\end{matrix}\right) \left(\begin{matrix}w \\ ϕ \\ ρ \\ t \\ η\end{matrix}\right) = \left(\begin{matrix}1 \\ \overline{w} + ζ \\ \overline{w} - ζ \\ 0\end{matrix}\right) \\ \left(w; ϕ; ρ; t; η\right) ∈ {{{Q}^{1} \times ⋯ \times {Q}^{1}}_{︸}}_{n positivity constraints} \\ \times {{{Q}^{1} \times ⋯ \times {Q}^{1}}_{︸}}_{2 n budget constraints} \\ \times {{{Q}^{m + 1}}_{︸}}_{risk} ,\end{matrix}$ (10) where I denotes an identity block, 0 denotes a submatrix of all 0s, **0** is a vector of all 0s, **1** is a vector of all 1s, and the size of each block of *A* can be inferred from its location in the matrix. Thus, the total number of cones is r = 3n + 1, and the combined dimension is *N = 3n* + *m* + 1. Note that r = *2n* + 1 cones if the absolute value constraints are represented using dimension-2 cones. The SOCP constraint matrix *A* is a *K* × N matrix, with *K* = *2n + m* + 1.

Notice that many of the rows of the *K* × *N* matrix *A* are sparse and contain only one or two nonzero entries. However, the final m rows of the matrix *A* will be dense and contain *n* + 1 nonzero entries due to the appearance of the matrix M containing historical stock data; in total a constant fraction of the matrix entries will be nonzero, so sparse matrix techniques will provide only limited benefit.

Additionally, note that the primal SOCP in eq. (10) has an interior feasible point as long as ***ζ*** has strictly positive entries. To better understand this, choose w to be any strictly positive vector that satisfies |***w** - **w̅***| < ***ζ***, and let ***ϕ*** = ***ζ** +* (***w̅** - **w***), ***ρ** = **ζ** -* (***w̅** - **w**), **η*** = *M**w**,* and *t* equal to any number strictly greater than ∥***η***∥. It can be verified that the dual program likewise has a strictly feasible point; this guarantees that the optimal primal-dual pair for the SOCP exists and satisfies eq. (8).

### C. Interior point methods for SOCP

### 1. Introduction

Interior point methods (IPMs) are a class of efficient algorithms for solving convex optimization problems including LPs, SOCPs, and SDPs, where (in contrast to the simplex method) intermediate points generated by the method lie in the *interior* of the convex set, and they are guaranteed to approach the optimal point after a polynomial number of iterations of the method. Each iteration involves forming a linear system of equations that depends on the current intermediate point. The solution to this linear system determines the *search direction*, and the next intermediate point is formed by taking a small step in that direction. This disclosure considers path-following primal-dual IPMs, where, if the step size is sufficiently small, the intermediate points are guaranteed to approximately follow the *central path*, which ends at the optimal point for the convex optimization problem.

### 2. Central path

To define the central path, first establish some notation related to the algebraic properties of the second-order cone. Let the product **u** o ***v*** of two vectors **u** = (*u*₀; ***ũ***), ***v** =* (*v*₀; ***ṽ***) ∈ 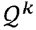 be defined as $u ∘ v = \left({u}^{τ}v;{u}_{0}{v}^{˜}+{v}_{0}{u}^{˜}\right)$ (11) and the identity element for this product is denoted by the vector **e** = (1; **0**) ∈ 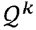 *.* For the Cartesian product 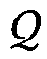 *=* 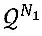 × ··· × 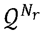 of multiple second-order cones, the vector e is defined as the concatenation of the identity element for each cone, and the circle product of two vectors is given by the concatenation of the circle product of each constituent. A consequence of this definition is the that ***e***^{T}***e*** is equal to the number of cones r.

Now, for the SOCP problem of eq. (5), the central path *(x(v); y(v); s(v))* is the one-dimensional set of *central points,* parameterized by v ∈ [0, ∞), which satisfies the conditions: $\begin{matrix}A x \left(ν\right) = b \\ {A}^{⊤} y \left(ν\right) + s \left(ν\right) = c \\ x \left(ν\right) ∘ s \left(ν\right) = v e \\ x \left(ν\right) ∈ Q , s \left(ν\right) ∈ Q .\end{matrix}$ (12) Note that the central path point *(x(v); y(v); s(v))* has a duality gap that satisfies *µ*(***x***(*v*), ***s***(*v*)) *= v,* and that when v = 0, eq. (12) recovers eq. (8).

### 3. Determining an initial point on the central path via self-dual embedding

Path-following primal-dual interior point methods determine the optimal point by beginning at a central point with v > 0 and following the central path to a very small value of v, which is taken to be a good approximation of the optimal point. For a given SOCP, determining an initial point on the central path is non-trivial and, in general, can be just as hard as solving the SOCP itself. One solution to this problem is the homogeneous self-dual embedding, a slightly larger self-dual SOCP is formed with the properties that (i) the optimal point for the original SOCP can be determined from the optimal point for the self-dual SOCP and *(ii)* the self-dual SOCP has a trivial central point that can be used to initialize the IPM.

To do this, introduce new scalar variables *τ*, *θ*, and *κ,* which are used to give more flexibility to the constraints. Previously, *Ax = **b*** was used. In the larger program, this constraint is relaxed to read *Ax = **b**_{τ} - **(b** - A**e***)*θ,* such that the original constraint is recovered when *τ* = 1 and *θ* = 0, but *x =* e is a trivial solution when *τ* = 1 and *θ* = 1. Similarly, the constraint *A*^{T}***y** + s = c is* relaxed to read *A*^{T}***y** + s = **c**_{τ} - (c - **e***)*θ,* which has the trivial solution ***y** =* **0, *s*** = e when *τ* = *θ* = 1. These can be complemented with two additional linear constraints to form the program: $\begin{matrix}{min}_{\left(x; y; τ; θ; s; κ\right)} \left(r+1\right) θ \\ \left(\begin{matrix}0 & {A}^{⊤} & - c & \overline{c} \\ - A & 0 & b & - \overline{b} \\ {c}^{⊤} & - {b}^{⊤} & 0 & - \overline{z} \\ - {\overline{c}}^{⊤} & {\overline{b}}^{⊤} & \overline{z} & 0\end{matrix}\right) \left(\begin{matrix}x \\ y \\ τ \\ θ\end{matrix}\right) + \left(\begin{matrix}s \\ 0 \\ κ \\ 0\end{matrix}\right) = \left(\begin{matrix}0 \\ 0 \\ 0 \\ r + 1\end{matrix}\right) \\ x , s ∈ Q ; τ , κ \geq 0 ; y , θ free ,\end{matrix}$ (13) where ***b̅ = b** - A**e**, **c̅ = c** - **e**, z̅ = **c***^{T}***e*** + 1, and r = ***e***^{T}***e*** is the number of cones in the original SOCP. While eq. (13) is not exactly of the form given in eq. (5), it can still be considered a primal SOCP. Since the block matrix in eq. (13) is skew-symmetric and the objective function coefficients are equal to the right-hand-side of the equality constraints, when the dual program (c.f. eq. (6)) is computed, an equivalent program is arrived at; thus, eq. (13) is *self-dual.* Thus, when applying path-following primal-dual IPMs to eq. (13), in some embodiments, only the primal variables (that is ***x, y,** τ, θ, **s,** κ*) may need to be tracked. Taking into account the addition of *τ* and *κ,* which are effectively an extra pair of primal-dual variables, the duality gap (c.f. eq. (7)) is defined as $μ \left(x, τ, s, κ\right) : = \frac{1}{r + 1} \left({x}^{τ}s+κτ\right) .$ (14) Note that if the point *(x; **y**; τ; θ; **s**; κ*) is feasible, i.e., if it satisfies the four linear constraints in eq. (13), then the following identity is determined: $\begin{matrix}μ \left(x, τ, s, κ\right) = \frac{- {x}^{⊤} {A}^{⊤} y + {x}^{⊤} c τ - {x}^{⊤} \overline{c} θ + κτ}{r + 1} \\ = \frac{- {b}^{⊤} y τ + {\overline{b}}^{⊤} y θ + {x}^{⊤} c τ - {x}^{⊤} \overline{c} θ + κτ}{r + 1} \\ = \frac{{\overline{b}}^{⊤} y θ - {x}^{⊤} \overline{c} θ + \overline{z} τθ}{r + 1} \\ = θ ,\end{matrix}$ (15) where the first, second, third, and fourth rows of eq. (13) are invoked above in lines one, two, three, and four, respectively. This equality justifies the redefinition in eq. (14): noting that the primal objective function in eq. (13) is (r + 1)*θ*, and (since the program is self-dual) the associated dual objective function is *-*(*r* + 1)*θ*, note that the *gap* between primal and dual objective functions, divided by the number of conic constraints (2r + 2), is exactly equal to *θ*.

The central path for the augmented SOCP in eq. (13) is defined by the feasibility conditions for the SOCP combined with the relaxed complementarity conditions ***x*** o ***s*** = *v**e*** and *κτ = v.* Thus, the point **(*****x** = **e***; ***y** =* 0; *τ* = 1; *θ* = 1; ***s** = **e***; *κ =* 1) is not only a feasible point for the SOCP in eq. (13), but also a central point with v = 1.

Finally, a noteworthy property of the self-dual SOCP in eq. (13) is that the optimal point for the original SOCP in eq. (5) can be derived from the optimal point for the SOCP in eq. (13). Specifically, let ( ${x}_{sd}^{∗}$; ${y}_{sd}^{∗}$*; τ*; θ*;* ${s}_{sd}^{∗}$*; κ**) be the optimal point for eq. (13) (it can be shown that *θ** = 0). Then if *τ** > 0, $\left({x}^{∗}; {y}^{∗}; {s}^{∗}\right) = \left(\frac{{x}_{sd}^{∗}}{{τ}^{∗}}; \frac{{y}_{sd}^{∗}}{{τ}^{∗}}; \frac{{s}_{sd}^{∗}}{{τ}^{∗}}\right)$) is an optimal primal-dual point for eqs. (5) and (6). If *τ** = 0, then at least one of the original primal SOCP in eq. (5) and the original dual SOCP in eq. (6) must be infeasible. As previously demonstrated, the specific SOCP for portfolio optimization in eq. (10) is primal and dual feasible, so *τ** ≠ 0 for that example.

What if there is only a point that is *approximately* optimal for the self-dual SOCP? An approximately optimal point for the original SOCP can still be determined. Suppose a feasible point for which *µ*(***x**, **τ**, s, κ*) *= ε.* The point (***x***/*τ ; **y***/*τ ; **s***/*τ*) is 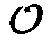 (*ε*) close to feasible for the original SOCP in the sense that the equality constraints are satisfied up to 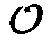 (*ε*) error $\left‖A\frac{x}{τ}-b\right‖ = \frac{ϵ}{τ} \left‖b-Ae\right‖$ (16) $\left‖{A}^{τ}\frac{y}{τ}+\frac{s}{τ}-c\right‖ = \frac{ϵ}{τ} \left‖c-e\right‖ .$ (17) Moreover, since *κ* > 0 and *θ* = *ε*, assert using the third row of eq. (13) that the difference in objective function achieved by the primal and dual solutions is also 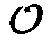 (*ε*), that is ${c}^{⊤} \frac{x}{τ} - {b}^{⊤} \frac{y}{τ} \leq \frac{\left|{c}^{⊤}e+1\right|}{τ} ϵ .$ (18) In summary, by using the self-dual SOCP of eq. (13), a trivial point is obtained from which to start the IPM, and given an (approximately) optimal point, the following is obtained: either an (approximately) optimal point to the original SOCP or a certificate that the original SOCP was not feasible to begin with.

### 4. Iterating the IPM

Each iteration of the IPM takes as input an intermediate point *(**x; y**; τ; θ; **s**; κ*) that is feasible (or in some formulations, nearly feasible), has duality gap $\frac{1}{r + 1} \left({x}^{τ}s+κτ\right)$ equal to *µ*, and is close to the central path with parameter v = *µ*. The output of the iteration is a new intermediate point ***(x + Δx; y** + **Δy;** τ* + Δ*τ; θ* + Δ*θ*; ***s** + **Δs;** κ +* Δ*κ*) that is also feasible and close to the central path, with a reduced value of the duality gap. Thus, many iterations lead to a solution with duality gap arbitrarily close to zero.

One additional input is the step size, governed by a parameter *σ* < 1. The IPM iteration aims to bring the next intermediate point onto the central path with parameter v = *σµ*. This is accomplished by taking one step using Newton's method, where the vector ***(Δx; Δy;*** Δ*τ;* Δ*θ*; **Δ*s***; Δ*κ*) is uniquely determined by solving a linear system of equations called the Newton system. The first part of the Newton system is the conditions to be met for the new point to be feasible, given in the following system of *N + K +* 2 linear equations: $\begin{matrix}\left(\begin{matrix}0 & {A}^{⊤} & - c & \overline{c} \\ - A & 0 & b & - \overline{b} \\ {c}^{⊤} & - {b}^{⊤} & 0 & - \overline{z} \\ - {\overline{c}}^{⊤} & {\overline{b}}^{⊤} & \overline{z} & 0\end{matrix}\right) \left(\begin{matrix}Δ x \\ Δ y \\ Δ τ \\ Δ θ\end{matrix}\right) + \left(\begin{matrix}Δ s \\ 0 \\ Δ κ \\ 0\end{matrix}\right) \\ = \left(\begin{matrix}- {A}^{⊤} y + c τ - \overline{c} θ - s \\ A x - b τ + \overline{b} θ \\ - {c}^{⊤} x + {b}^{⊤} y + \overline{z} θ \\ {\overline{c}}^{⊤} x - {\overline{b}}^{⊤} y - \overline{z} τ\end{matrix}\right)\end{matrix}$ (19) Note that if the point is already feasible, the right-hand-side is equal to zero.

The second part of the Newton system is the linearized conditions for arriving at the point on the central path with duality gap *σµ*. That is, aim for ***(x + Δx) o (s** +* **Δ*s***) *= σµ**e*** and (*κ +* Δ*κ*)(*τ* + Δ*τ*) *= σµ*. By ignoring second order terms (i.e., the 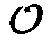 (**Δ*****x** o* **Δ*s***) and 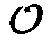 (Δ*κ*Δ*τ*) terms), these become $\begin{matrix}x ∘ Δ s + s ∘ Δ x = σμ e - x ∘ s \\ κ Δ τ + τ Δ κ = σμ - κτ .\end{matrix}$ (20)

The expression above can be rewritten as a matrix equation by first defining the arrowhead matrix *U* for a vector u = (*u*₀; ***ũ***) ∈ 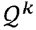 as $U = \left(\begin{matrix}{u}_{0} & {{u}^{˜}}^{τ} \\ {u}^{˜} & {u}_{0} I\end{matrix}\right) = u {e}^{τ} + e {u}^{τ} + {u}_{0} I - 2 {u}_{0} e {e}^{τ} .$ (21) When ***u*** ∈ 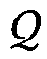 lies in the direct product of multiple second-order cones, the arrowhead matrix is formed by placing the appropriate matrices of the above form on the block diagonal. The arrowhead matrix has the property that for any vector *v, Uv = **u*** ∘ ***v**.*

Using this notation, the Newton equations in eq. (20) can be written as $\left(\begin{matrix}S & 0 & 0 & 0 & X & 0 \\ 0 & 0 & κ & 0 & 0 & τ\end{matrix}\right) \left(\begin{matrix}Δ x \\ Δ y \\ Δ τ \\ Δ θ \\ Δ s \\ Δ κ\end{matrix}\right) = \left(\begin{matrix}σμ e - X s \\ σμ - κτ\end{matrix}\right) ,$ (22) where *X* and *S* are the arrowhead matrices for vectors ***x*** and ***s*.**

Equations (19) and (22) together form the Newton system. It is observered that there are *2N + K +* 3 constraints to match the *2N + K +* 3 variables in the vector ***(Δx;* Δ*y***; Δ*τ;* Δ*θ*; **Δ*s***; Δ*κ*). As long as the duality gap is positive and ***(x; y;** τ; θ; **s;** κ*) is not too far from the central path (which will be the case as long as *σ* is chosen sufficiently close to 1 in every iteration), the Newton system has a single unique solution. Note that one can choose different *search directions* than the one that arises from solving the Newton system presented here; this includes first applying a scaling transformation to the product of second-order cones, then forming and solving the Newton system that results, and finally applying the inverse scaling transformation. Alternate search directions are explained in section Additional Information D, but in the main text the basic search direction illustrated above is maintained, since in the numerical simulations the simple search direction gave equal or better results than more complex alternatives, and it enjoys the same theoretical guarantee of convergence.

### 5. Solving the Newton system

The Newton system formed by combining eqs. (19) and (22) is an L × L linear system of the form *G**u** = **h,*** where *L = 2N + K +* 3. Classically this can be solved *exactly a* number of ways, the most straightforward being Gaussian elimination, which scales as 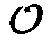 (*L*³). Using Strassen-like tricks, this can be asymptotically accelerated to 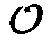 (*L^{ω}*) where *ω* < 2.38, although practically the runtime is closer to 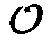 (*L*³)*.* Meanwhile, the linear system can be *approximately* solved using a variety of iterative solvers, such as conjugate gradient descent or the randomized Kaczmarz method. The complexity of these approaches depends on the condition number of the Newton matrix. Section IV discusses *quantum* approaches to solving the Newton system.

It is noteworthy to distinguish methods that exactly solve the Newton system, and methods that solve it inexactly, because inexact solutions typically lead to infeasible intermediate points. As presented above, the Newton system in eqs. (19) and (22) can tolerate infeasible intermediate points; the main consequence is that the right-hand-side of eq. (19) becomes non-zero. As discussed in section IV, exact feasibility is difficult to maintain in quantum IPMs, since the Newton system cannot be solved exactly.

The *inexact-feasible IPM* (IF-IPM) is a workaround by which exact feasibility can be maintained despite an inexact linear system solver. For the IF-IPM, this disclosure assumes access to a basis for the null space of the feasibility constraint equations, that is, a linearly independent set of solutions to eq. (19) when the right-hand-side is zero. These basis vectors are arranged as the columns of a matrix *B;* since there are *N + K +* 2 linear feasibility constraints and *2N + K +* 3 variables, the matrix *B* should have *N +* 1 columns. In the case of portfolio optimization, a matrix B satisfying this criterion can be deduced by inspection, as discussed in section Additional Information C; however, this choice does not yield a B with orthogonal columns. Generating a B with orthonormal columns can be done by performing a QR decomposition of the matrix in eq. (19), which would incur a large one-time classical cost of *O((N + K*)³) operations. Better asymptotic scaling for QR decomposition can be accomplished using fast matrix multiplication. In either case, since B is a basis for the null space of the constraint equations, there is a one-to-one correspondence between vectors $Δ z ∈ {ℝ}^{N + 1}$, and vectors that satisfy eq. (19) via the relation ***(Δx; Δy;*** Δ*τ*; Δ*θ*; ***Δs;*** Δ*κ*) *= B**Δz.*** Thus, the Newton system can be reduced to $\left[\left(\begin{matrix}S & 0 & 0 & 0 & X & 0 \\ 0 & 0 & κ & 0 & 0 & τ\end{matrix}\right)B\right] Δ z = \left(\begin{matrix}σμ e - Xs \\ σμ - κτ\end{matrix}\right)$ (23) $\left(Δx;Δy;Δτ;Δθ;Δs;Δκ\right) = B Δ z .$ (24) The Newton system above can be solved by first computing **Δz** by inverting the quantity in brackets in the first line and applying it to the right-hand-side, and then computing ***(Δx; Δy;*** Δ*τ*; Δ*θ*; ***Δs;*** Δ*κ*) by performing the multiplication *B***Δ*z***. This matrix-vector product can be accomplished classically in 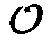 (*N*²) operations. Note that matrix-matrix products where one of the matrices is an arrowhead matrix (*S* or *X)* can also be carried out in (*N*²) classical time, as the form of arrowhead matrices given in eq. (21) implies that the product can be computed by summing several matrix-vector products. Finally, note that since the second and fourth block columns of the first matrix in eq. (22) are zero, the second and fourth block rows of *B* (e.g., in eq. (C1)) can be completely omitted from the calculation.

Thus, there are three main choices for how to run the IPM when the solution to linear systems is inexact: first, by solving eqs. (19) and (22) directly and allowing intermediate solutions to be infeasible; second, by determining a matrix B by inspection as described in section Additional Information C and then solving eqs. (23) and (24); third, by determining a matrix B via QR decomposition and then solving eqs. (23) and (24). When the linear system is solved using a quantum algorithm, as discussed in section IV, this disclosure refers to the algorithm that results from each of these three options by II-QIPM, IF-QIPM, and IF-QIPM-QR, respectively. The pros and cons of each method are summarized in table II.

### 6. Neighborhood of the central path and polynomial convergence

Prior literature establishes that if sufficiently small steps are taken (i.e., if *σ* is sufficiently close to 1), then each intermediate point stays within a small neighborhood of the central path. This disclosure now reviews these conclusions. For a vector ***u*** = (*u*₀; ***ũ***) ∈ 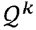 *,* the following matrix is defined: ${T}_{u} = \left(\begin{matrix}{u}_{0} & {{u}^{˜}}^{⊤} \\ {u}^{˜} & \sqrt{{u}_{0}^{2} - {\left‖{u}^{˜}\right‖}^{2} I} + \frac{{u}^{˜} {{u}^{˜}}^{⊤}}{{u}_{0} + \sqrt{{u}_{0}^{2} - {\left‖{u}^{˜}\right‖}^{2}}}\end{matrix}\right) ,$ (25) which, as for the arrowhead matrix, generalizes to the product of multiple cones by forming a block diagonal of matrices of the above form. This disclosure uses the following distance metric ${d}_{F} \left(x, τ, s, κ\right) = \sqrt{2} \sqrt{{\left‖{T}_{x}s-μ\left(x, τ, s, κ\right)e\right‖}^{2} + {\left(τκ-μ\left(x, τ, s, κ\right)\right)}^{2}} .$ (26) The distance metric induces a neighborhood 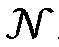 , which includes both feasible and infeasible points, as well as the neighborhood 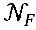 , which includes only feasible points $N \left(γ\right) = \left\{\begin{matrix}\left(x; y; τ; θ; s; κ\right) : \\ {d}_{F} \left(x, τ, s, κ\right) \leq γμ \left(x, τ, s, κ\right)\end{matrix}\right\}$ (27) ${N}_{F} \left(γ\right) = N \left(γ\right) ∩ {P}_{F} ,$ (28) where 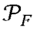 denotes the set of feasible points for the self-dual SOCP. Note that the vector *Tₓs* can be computed classically in *O(N)* time given access to the entries of ***x*** and **s.** Thus, whether or not a point lies in 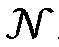 (*γ*) can be determined in *O(N)* time.

So long as 0 ≤ y ≤ 1/3 and *(x; **y**; τ; θ; s; κ*) ∈ 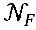 (*γ*), then the following may be true: $\left(x+Δx;y+Δy;τ+Δτ;θ+Δθ;s+Δs;κ+Δκ\right) ∈ {N}_{F} \left(Γ\right) ,$ (29) where $Γ = \frac{4 \left({γ}^{2}+2\left(r+1\right){\left(1-σ\right)}^{2}\right)}{{\left(1-3γ\right)}^{2} σ} .$ (30)

**TABLE II. Choices on which version of the Newton system to solve lead to different versions of the QIPM, even with the same underlying quantum subroutines.**

| | **II-QIPM** | **IF-QIPM** | **IF-QIPM-QR** |
|---|---|---|---|
| **Newton system** | Equations (19) and (22) | Equations (23) and (24) | Equations (23) and (24) |
| **Size of Newton system** (*L*) | *2N + K + 3* | *N +* 1 | *N +* 1 |
| **Feasible intermediate points** | No | Yes | Yes |
| **Caveats** | Theoretical convergence guarantee uses 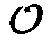 (*r*²) (rather than $O \left(\sqrt{r}\right)$) iterations | Ill-conditioned null-space basis leads to large condition number of Newton system | Uses classical QR decomposition, which could dominate overall runtime |

Thus, if Γ ≤ *γ*, and assuming the Newton system is solved exactly, every intermediate point will lie in 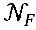 (*γ*)*.* This condition is met, for example, if *γ* = 1/10 and $σ = 1 - {\left(20\sqrt{2}\sqrt{\left(r+1\right)}\right)}^{- 1}$ . Since each iteration reduces the duality gap by a factor σ, the duality gap can be reduced to *ε* after roughly only $20 \sqrt{2 \left(r+1\right)} ln \left(1/ϵ\right)$ iterations. If the Newton system is solved inexactly, but such that feasibility is preserved (e.g., by solving inexactly for **Δ*z*** and then multiplying by B, as described above), then an error ***δ*** on the vector ***(x;** τ; **s**; κ*) can be tolerated, and the resulting vector can still be within the neighborhood at each iteration.

On the other hand, if the Newton system is not solved exactly, then the resulting vector may not be feasible. Thus, the II-QIPM version of the QIPM does not enjoy the theoretical guarantee of convergence in $O \left(\sqrt{r}\right)$ iterations that the IF-QIPM and IF-QIPM-QR versions do (see table II). The best guarantees for the II-QIPM would imply convergence only after 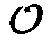 (*r*²) iterations. Nevertheless, it is unclear if a small amount of infeasibility makes a substantial difference in practice: multiple versions of the QIPM were simulated and similar overall performance was observed when intermediate solutions were allowed to be infeasible, despite an inferior theoretical guarantee of success. Thus, in sections V and VI, where the QIPM implementation, resource count, and numerical analysis are described, this disclosure focuses on the II-QIPM. This disclosure presents some of the results of the numerical simulations of the IF-QIPM and IF-QIPM-QR results in the section Additional Information.

### IV. QUANTUM INTERIOR POINT METHODS (QIPM)

### A. Introduction to QIPM

As discussed in section III, each iteration of an IPM SOCP solver involves forming and solving a linear system of equations that depends on the intermediate point at the current iteration. For classical IPM implementations for SOCP, the linear systems of equations are typically solved exactly; for example, the numerical SOCP solving package ECOS solves linear systems with a sparse LDL (Cholesky) factorization. For arbitrary dense systems, the runtime of solving an *L* × *L* system this way is 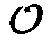 (*L*³), but by exploiting sparsity the actual runtime in practice could be much faster, by an amount that is hard to assess. Alternatively, it would, in principle, be possible to employ classical iterative approximate linear system solvers such as conjugate gradient descent or the randomized Kaczmarz method. The choice of the linear system solver thereby determines the overall complexity of the IPM SOCP solver. An idea of QIPM is to use a quantum subroutine to solve the linear system of equations. Other steps of QIPMs may be classical and may remain the same as described in section III. As a quantum linear system solver (QLSS) does not solve the exact same mathematical problem as classical linear system solvers and, moreover, a QLSS uses coherent (quantum) access to the classical data as given by the entries of the relevant matrices, there are various additional tools (discussed herein) that allow embedded QLSS subroutines as a step of IPM SOCP solvers.

First, this disclosure discusses in section IV B the input and output model of QLSSs and present the complexity of state-of-the-art QLSSs. Then, section IV C provides constructions based on quantum random access memory (QRAM) to load classical data as input into a QLSS and discusses the complexity overhead arising from that step. Subsequently, section IV D presents so-called pure state quantum tomography that allows to convert the output of the QLSS into an estimate of the classical solution vector of the linear system of equations. Section IV E puts all the steps together and states the overall classical and quantum complexities of using QLSSs as a subroutine in IPM SOCP solvers. The idea is to compare these costs to the complexities of classical IPM SOCP solvers and point out regimes where quantum methods can potentially scale better that any purely classical methods (e.g., in terms of the SOCP size N, the matrix condition number *κ,* etc.)

### B. Quantum linear system solvers

For current purposes, a linear system of equations is given by a real invertible *L* × *L* matrix G together with a real vector ***h** =* (*h*₁, ··· , *h_{L}*), and one is looking to give an estimate of the unknown solution vector u = (*u*₁, ··· , *u_{L}*) defined by *Gu = **h**.* The (Frobenius) condition number is defined as ${κ}_{F} \left(G\right) : = {\left‖G\right‖}_{F} \left‖{G}^{- 1}\right‖ ,$ (31) where ∥·∥*_{F}* denotes the Frobenius norm and ∥·∥ for a matrix argument denotes the spectral norm.

For this setting, the input to a QLSS is then comprised of: *(i)* a preparation unitary *U**ₕ*** that creates the $l : = \left⌈log L\right⌉$ qubit quantum state $\left|h\right〉 : = {\left‖h\right‖}^{- 1} ⋅ {\sum }_{i = 1}^{L} {h}_{i} \left|i\right〉 via \left|h\right〉 = {U}_{h} {\left|0\right〉}^{⊗ l} ,$ (32) where ∥·∥ for a vector argument denotes the vector two-norm (standard Euclidean norm), *(ii)* a block encoding unitary *U_{G}* in the form ${U}_{G} : = \left(\begin{matrix}\frac{G}{{\left‖G\right‖}_{F}} & ⋅ \\ ⋅ & ⋅\end{matrix}\right)$ (33) on *ℓ + ℓ_{G}* qubits for some ${l}_{G} ∈ ℕ$, and *(iii)* an approximation parameter *ε*_{QLSP} ∈ (0,1]. The quantum linear system problem (QLSP) is stated as follows: For a triple *(G, h, ε*_{QLSP}) as above, the goal is to create an ℓ-qubit quantum state |***ṽ***〉 such that $\left‖\left|{v}^{˜}\right〉-\left|v\right〉\right‖ \leq {ε}_{QLSP} for \left|v\right〉 : = \frac{{\sum }_{i = 1}^{L} {u}_{i} \left|i\right〉}{\left‖{\sum }_{i = 1}^{L} {u}_{i} \left|i\right〉\right‖} ,$ (32) defined by *Gu = **h*** with **u** = (*u*₁, ··· , *u_{L}*), by employing as few times as possible the unitary operators *U_{G}, U**ₕ**,* their inverses ${U}_{G}^{†} , {U}_{h}^{†}$, controlled versions of *U_{G}, U**ₕ**,* and additional quantum gates on potentially additional ancilla qubits. The state-of-the-art QLSS using the fewest calls to *U_{G}, U**ₕ*** and their variants, is based on ideas from discrete adiabatic evolution. This disclosure notes the following explicit complexities. In this formulation, the quantum state |***v***〉 corresponds to the normalized solution vector of the normalized linear system *Gu = **h***. Thus, the state |***v***〉 does not carry information on the norm of the solution ∥***u***∥. This norm is related to v by the relationship **∥*u*∥** *=* ∥***h***∥/∥*G**v***∥.

**Proposition 1.** *The QLSP for (G, **h,** ε*₁) *can be solved with a quantum algorithm on* $\left⌈{log}_{2}\left(L\right)\right⌉ + 4$ *qubits for* ${ε}_{1} \leq C ⋅ \frac{{κ}_{F} \left(G\right)}{Q} + O \left(\frac{\sqrt{{κ}_{F} \left(G\right)}}{Q}\right)$ (35) *for some constant C* ≤ 15307 *using Q* ≥ *κ_{F}*(*G*) *controlled queries to each of U_{G} and* ${U}_{G}^{†}$*, and 2Q queries to each of U**ₕ** and* ${U}_{h}^{†}$*, and constant quantum gate overhead. If G is positive semi-definite, then C* ≤ 5632 *instead.*

Note that a stronger version of above proposition works with the (regular) condition number *κ*(*G*) := ∥*G*∥∥*G*⁻¹∥, but it uses a block-encoding of the form eq. (33) in which the normalization factor is ∥*G*∥ rather than ∥*G*∥*_{F}.* In the current case, the Frobenius version *κ_{F}*(*G*) is used, since there may not a straightforward method to perform *U_{G}* with normalization factor ∥*G*∥*_{F}*, described in section IV C. It is then sufficient to give upper bounds for the remaining *κ_{F}*(*G*) to run the algorithm from proposition 1. In practice, such upper bounds are given by using appropriate heuristics (cf. section V on implementations).

Note that proposition 1 implies a solution to the QLSP in eq. (34) with an asymptotic query complexity of 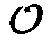 (*κ_{F}*/*ε*_{QLSP}) to *U_{G}, U**ₕ*** and their variants and under standard complexity-theoretic assumptions this is optimal in terms of the scaling 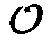 (*κ*), but not in terms of the scaling 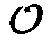 (*ε*_{QLSp}). To get to an improved 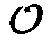 (log(1/*ε*_{QLSP})) scaling, an eigenstate filtering method may be used that additionally invokes a quantum singular value transform based on a minimax polynomial. The following overall complexities are provided.

**Proposition 2.** *The QLSP problem for (G, **h,** ε*₂) *can be solved with a quantum algorithm on* $\left⌈{log}_{2}\left(L\right)\right⌉ + 5$ *qubits that produces a quantum state* $\sqrt{p} \left|{0}^{5}\right〉 \left|{v}^{˜}\right〉 + \sqrt{1 - p} \left|⊥\right〉 \left|fail\right〉$ (36) *with* 〈0⁵|⊥〉 = *0 and success probability p* ≥ *1*/*2. With that, the sought-after ε*₂*-approximate solution quantum state* |***ṽ***〉 *can be prepared using Q + d controlled queries to each of U_{G} and* ${U}_{G}^{†}$*, and 2Q + 2d queries to each of Uₕ and* ${U}_{h}^{†}$*, where* $Q = 2 {Cκ}_{F} \left(G\right) + O \left(\sqrt{{κ}_{F} \left(G\right)}\right)$ (37) $d = 2 {κ}_{F} \left(G\right) ln \left(2/{ε}_{2}\right) .$ (38) *Here, C* ≤ 15307 *is the same constant as in proposition 1.*

This version of the algorithm basically uses proposition 1 with constant choice of *ε*₁ ≤ 1/4, and then uses eigenstate filtering to measure whether the final state is the correct solution state. On average the algorithm is repeated no more than twice to produce the desired state |***ṽ***〉. The resulting scaling that proposition 2 implies for the QLSP problem in eq. (34) is 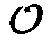 (*κ*log(1/*ε*_{QLSP})), which under standard complexity-theoretic assumptions is optimal in both *κ* and *ε*_{QLSP}. In practice the *Q =* 2*Cκ_{F}*(*G*) dominates over d and all other terms can be safely neglected for typical settings-even for finite scale analyses. Moreover, the constant C is typically an order of magnitude smaller than the estimates given; for positive semi-definite G the constant is estimated as 638. No direct estimates for general matrices G are available, but this disclosure henceforth assumes C = 2000 for the numerical estimates. Additionally, note that for the eigenstate filtering step via QSVT, the minimax polynomial and its corresponding quantum signal processing angles have to be computed. This is done as part of classical pre-processing.

Note that the implementation of the QLSS in each of proposition 1 and proposition 2 assume perfect implementation of the underlying circuits, without additional gate synthesis errors. In practice, however, these circuits will not be implemented perfectly, and hence additional sources of error are later included (e.g., block-encoding error, imperfect rotation gates, etc.) that also contribute to *ε*_{QLSP}. These additional contributions are in section IV D, for example.

The following continues by laying out the additional classical and quantum resources used to employ QLSS for estimating in an end-to-end fashion the classical solution vector v *=* (*v*₁*,* ··· *, v*₁) instead of the quantum state |***v***〉.

### C. Block-encoding via quantum random access memory (QRAM)

Many quantum algorithms (and in particular for the current use case), use coherent access to classical data for use in the algorithm. *Block-encodings* of matrices provide a commonly used access model for the classical data by encoding matrices into unitary operators, thereby providing oracular access to the data. As mentioned above, for a matrix $G ∈ {ℝ}^{L \times L}$, a unitary matrix *U_{G}* block-encodes G when the top-left block of *U_{G}* is proportional to *G,* i.e. ${U}_{G} = \left(\begin{matrix}G / α & ⋅ \\ ⋅ & ⋅\end{matrix}\right) ,$ (39) where *α* ≥ ∥*G*∥ is a normalization constant, chosen as *α =* ∥*G*∥*_{F}* for the use case. The other blocks in *U_{G}* are irrelevant, but they are encoded such that *U_{G}* is unitary. For current real matrices G are focused on, but the extension to complex matrices is straightforward. A block-encoding makes use of unitaries that implement (controlled) state preparation, as well as quantum random access memory (QRAM) data structures for loading the classical data. Specifically, QRAM is referred to as the quantum circuit that allows query access to classical data in superposition: ${\sum }_{j} {ψ}_{j} \left|j\right〉 \left|0\right〉 {\to }^{QRAM} {\sum }_{j} {ψ}_{j} \left|j\right〉 \left|{a}_{j}\right〉 ,$ (40) where *j* is the address in superposition with amplitude *ψⱼ* and |*aⱼ*〉 is the classical data loaded into a quantum state. There are several models of QRAM one can use that differ in the way in which the data is loaded. The two most notable QRAM models are the select-swap (SS) model, which is particularly efficient in terms of T-gate utilization, and the bucket-brigade (BB) model, which has reduced susceptibility to errors when operated on potentially faulty hardware.

The block-encoding unitary *U_{G}* acts on *ℓ* + *ℓ_{G}* qubits, where $l = \left⌈{log}_{2}\left(L\right)\right⌉$and, in our construction, *ℓ_{G}* = *ℓ.* To build it, *U_{G}* may be formed as the product of a pair of controlled-state preparation unitaries *U_{L}* and *U_{R}*. Specifically,${U}_{G} = {U}_{R}^{†} {U}_{L} ,$ (41) $\begin{matrix}{U}_{G} = {U}_{R}^{†} {U}_{L} , & \left(41\right) \\ {U}_{R} : {\left|0\right〉}^{⊗ l} \left|j\right〉 ↦ \left|{ψ}_{j}\right〉 \left|j\right〉 & \left(42\right)\end{matrix}$ ${U}_{L} : {\left|0\right〉}^{⊗ l} \left|k\right〉 ↦ \left|k\right〉 \left|{ϕ}_{k}\right〉$ (43) where the ℓ-qubit states |*ψⱼ*〉 and |*ϕₖ*〉 are determined from the matrix elements *Gⱼₖ* of *G,* as follows: $\left|{ψ}_{j}\right〉 = {\sum }_{k} \frac{{G}_{jk}}{\left‖{G}_{j , ⋅}\right‖} \left|k\right〉$ (44) $\left|{ψ}_{k}\right〉 = {\sum }_{j} \frac{\left‖{G}_{j , ⋅}\right‖}{{\left‖G\right‖}_{F}} ,$ (45) where *Gⱼ*, denotes the *j*th row of *G.* That is, controlled on the second ℓ-qubit register in the state |*j*〉, *U_{R}* prepares the ℓ-qubit state |*ψⱼ*〉 into the first ℓ-qubit register, and *U_{L}* performs the same operation for the states |*ϕₖ*〉 modulo a swap of the two registers. Both *U_{L}* and *U_{R}* utilize an additional ℓ' QRAM ancilla qubits that begin and end in the state |0〉. These controlled-state preparation unitaries *U_{R}* and *U_{L}* are implemented by combining a QRAM-like data-loading step with a protocol for state preparation of ℓ-qubit states. There are several combinations of state preparation procedure and QRAM model one can choose with varying benefits and resource requirements. Reference arXiv:2206.03505 (hereafter "Clader") studies the resources used to implement these block-encodings and provides explicit circuits for their implementation. This disclosure simply imports the relevant resource estimates from that work in table III. In the current setting, the matrices to block encode are typically dense, which is why the general constructions from Clader are sufficient. For the current purposes, this disclosure works with the minimum depth circuits that achieve a T-gate depth of 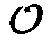 (log *L*), at the price of using a total number of 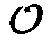 (*L*²) many qubits for the data structure implementing the block encoding unitary *U_{G}.* Additionally, the ℓ-qubit unitary *U**ₕ*** defined by |***h***〉 = *U***ₕ**|0〉^{⊗ℓ} corresponds to the special case of quantum state preparation and is directly treated by the methods outlined in Clader. The resources used to synthesize *U**ₕ*** up to error *ε**ₕ*** are also reported in table III.

**TABLE III. Logical quantum resources used to block-encode (left column) and control-block-encode (right column) an L × L matrix G to precision ε_{G} ∈ [0,1], where L = 2^{ℓ} is assumed. Here terms are suppressed doubly and triply logarithmic in L and 1/ε_{G} (see Clader).**

| **Resource** | **Block Encoding** | **Controlled Block Encoding** |
|---|---|---|
| **# of qubits** | *N_{Qbe}* := 4*L*² - 3*L* + 2ℓ - 1 | *N_{Qcbe}* := *N_{Qbe}* + *L* |
| ***T*-depth** | *T_{Dbe}* := 10ℓ + 24log₂(1/*ε_{G}*) + 44 | *T_{Dcbe}* := *T_{Dbe} +* 4 |
| ***T*-count** | *T_{Cbe}* := (12 log₂(1/*ε_{G}*) + 56)*L*² - 24*L* - 12 log₂(1/*ε_{G}*) - 32ℓ - 32 | *T_{Ccbe}* := *T_{Cbe}* + 16(*L* - 1) |

**TABLE IV. Logical quantum resources used to prepare an arbitrary ℓ-qubit quantum state |h〉 from classical data (left column) and a single-qubit controlled version (right column) to precision εₕ ∈ [0,1]. Here terms are suppressed doubly and triply logarithmic in L and 1/εₕ (see Clader). For a single-qubit control, there are no additional Clifford gates used, which can be observed by examining the state-preparation procedure in Clader and noting that the state |0〉|0〉^{⊗ℓ} +|1)|ψ〉 can be prepared with minor modifications to the procedure that prepares |Ψ〉. First, use the "flag" qubits to control both the angle loading and unloading steps (rather than just the unloading steps), and second, control every flip of the flag qubits in that procedure with the first single-qubit control, thus turning NOT gates into CNOT gates, which are also Clifford. When the control is ON, the procedure works as before, and when the control is OFF, none of the qubits leave the |0〉 state.**

| **Resource** | **State Preparation** | **Controlled State Preparation** |
|---|---|---|
| **# of qubits** | *N_{Qsp}* := 4*L + ℓ* - 6 | *N_{Qcsp}* := *N_{Qsp} +* 1 |
| ***T*-depth** | *T_{Dsp}* := 3ℓ + 12 log₂ (1/*ε**ₕ***) *+* 24 | *T_{Dcsp}* := *T_{Dsp}* |
| ***T*-count** | *T_{Csp}* := (12 log₂(1/*ε**ₕ***) + 40)*L* - 12 log₂(1/*ε**ₕ***) - 16ℓ - 40 | *T_{Ccsp}* := *T_{Csp}* |

The minimum-depth block encodings of Clader also incur some classical costs. Specifically, the quoted depth values are only achievable assuming a number of angles have been classically pre-computed and for each angle a gate sequence of single-qubit Clifford and *T* gates that synthesizes a single-qubit rotation by that angle up to small error. Calculating one of the angles can be done by summing a subset of the entries of *G* and computing an arcsin. Meanwhile, circuit synthesis uses applying a version of the Solovay-Kitaev algorithm. For the block-encoding procedure, *L(L -* 1) angles and their corresponding gate sequences are computed, which uses a total runtime of *L*²polylog(1/*ε_{G}*), although this computation is amenable to parallelization. For the state preparation procedure, *L* - 1 angles and their sequences are used.

### D. Quantum state tomography

This disclosure described how a quantum state |***ṽ***〉 approximating the (real-valued) solution |***v***〉 of a linear system up to precision *ε*_{QLSP} can be produced. As mentioned in section IV B, in the actual circuit implementation, the approximation error *ε*_{QLSP} accounts for both the inherent error from eigenstate filtering captured in proposition 2 as well as additional gate synthesis error arising from imperfect implementation of block-encoding unitaries and single-qubit rotations. The next step is to approximately read out the amplitudes of |***ṽ***〉 into classical form. To start out, this disclosure proves the following proposition, which communicates how many copies of a quantum state are used to provide a good enough classical description of it, up to a phase on each amplitude.
**Proposition 3.** *Let* 0 < *ε,δ* < 1 *and* |*ψ*〉 = Σ*j*[*L*] *αⱼ* |*j*〉 *be a quantum state. Then,* $\frac{5 + \sqrt{21}}{3 {ε}^{2}} ln \left(2L/δ\right) < 3.1942 {ε}^{- 2} ln \left(2L/δ\right)$ *measurements* of |*ψ*〉 *in the computational basis suffice to learn an ε-ℓ_{∞}-norm estimate* |***α̃***| *of* |***α***|, *with success probability at least 1 - δ*.

The proof is provided in the section Additional Information B1. Recall that proposition 2 gives a unitary *U* such that $U \left|{0}^{5}\right〉 \left|{0}^{l}\right〉 = \sqrt{p} \left|{0}^{5}\right〉 \left|{v}^{˜}\right〉 + \sqrt{1 - p} \left|⊥\right〉 \left|fail\right〉$ (46) with $\left|{v}^{˜}\right〉 : = {\sum }_{i = 1}^{N} {{v}^{˜}}_{i} \left|i\right〉$, 〈0⁵|⊥〉 = 0, and *p* ≥ 1/2. The vector ***ṽ*** may have complex coefficients, but it approximates a real vector v up to some error *ε*_{QLSP} in ℓ₂ norm. A goal is to obtain an estimate ${v}^{˜} ′ = \left({v}_{1}^{′}, ⋯, {v}_{N}^{′}\right)$ such that $\left‖v-{v}^{˜}′\right‖ \leq ξ for an error parameter ξ ∈ \left[0, 1\right] .$ (47) where ξ captures other (e.g., all) sources of error. Proposition 3 is not quite sufficient because it only gives us an estimate of the absolute value of ***ṽ***. However, the following procedure is sufficient:
1. Create *k* = 57.5*L*ln(6*L*/*δ*)/(*ε*²(1 - *ε*²/4)) many copies of the quantum state $U \left|{0}^{5 + l}\right〉 = \sqrt{p} \left|{0}^{5}\right〉 \left|{v}^{˜}\right〉 + \sqrt{1 - p} \left|⊥\right〉 \left|fail\right〉$, and measure them all in the computational basis to give empirical estimates ${\left\{{p}_{i}\right\}}_{i = 1}^{L}$ of the probabilities *p*|*ṽᵢ*|².
2. Using controlled applications of *U,* create *k* = 57.5*L*ln(6*L*/*δ*)/(*ε*²(1 - *ε*²/4)) copies of ${2}^{- 1 / 2} \left|{0}^{5}\right〉 \left|0\right〉 \sqrt{p} \left|{v}^{˜}\right〉 + {2}^{- 1 / 2} \left|{0}^{5}\right〉 \left|1\right〉 {\sum }_{i = 1}^{L} \sqrt{{p}_{i}^{′}} \left|i\right〉 + \left|⊥′\right〉 \left|fail′\right〉 ,$ (48) which by applying a Hadamard can be mapped to $\left|{0}^{5}\right〉 \left|0\right〉 \frac{\sqrt{p} \left|{v}^{˜}\right〉 + {\sum }_{i = 1}^{L} \sqrt{{p}_{i}^{′}} \left|i\right〉}{2} + \left|{0}^{5}\right〉 \left|1\right〉 \frac{\sqrt{p} \left|{v}^{˜}\right〉 - {\sum }_{i = 1}^{L} \sqrt{{p}_{i}^{′}} \left|i\right〉}{2} + \left|⊥′\right〉 \left|fail"\right〉 .$ (49) Here |⊥'〉 is an arbitrary state orthogonal to |0⁵〉 and |fail') and |fail"〉 are arbitrary unnormalized states. The quantities $\sqrt{{p}_{i}^{′}}$ are (possibly complex) amplitudes that satisfy $\left|\sqrt{{p}_{i}^{′}}-\sqrt{{p}_{i}}\right| \leq {ε}_{tsp}$ for all *i*; they arise because the state ${\sum }_{i = 1}^{L} \sqrt{{p}_{i}^{′}} \left|i\right〉$ can only be prepared up to some error. Next, measure this state in the computational basis, denoting the measurement count of the result 0⁶*i* as ${k}_{i}^{+}$ and the result 0⁵1*i* as ${k}_{i}^{-}$.
3. Define ${a}_{i}^{+} = min \left(\sqrt{{p}_{i}}, \frac{{k}_{i}^{+} - {k}_{i}^{-}}{\sqrt{{p}_{i}}}\right)$ (50) ${a}_{i}^{-} = max \left(-\sqrt{{p}_{i}},\frac{{k}_{i}^{+} - {k}_{i}^{-}}{\sqrt{{p}_{i}}}\right)$ (51) and let ${{a}^{˜}}_{i} = \left\{\begin{matrix}0 & if \sqrt{{p}_{i}} \leq \frac{2}{3 \sqrt{2 L}} ε \sqrt{1 - \frac{{ε}^{2}}{4}} + {ε}_{tsp} \\ {a}_{i}^{+} & if {{a}^{˜}}_{i} \neq 0 and {k}_{i}^{+} \geq {k}_{i}^{-} \\ {a}_{i}^{-} & if {{a}^{˜}}_{i} \neq 0 and {k}_{i}^{+} < {k}_{i}^{-}\end{matrix}.\right.$ (52)

Output the estimate $\left|{v}^{˜}′\right〉 = {\sum }_{i = 1}^{L} {{a}^{˜}}_{i} \left|i\right〉 \sqrt{{\sum }_{i = 1}^{L} {{a}^{˜}}_{i}^{2}}$.
**Proposition 4.** *Suppose that* ∥***ṽ*** - ***v***∥ ≤ *ε*_{QLSP} *and that v is a real-valued vector. Let ε and εₜₛₚ be constants that satisfy* $ε + \sqrt{2 L} {ε}_{tsp} + \sqrt{2} {ε}_{QLSP} \leq 1 / 2$. *Then the algorithm above outputs an estimate* ***ṽ****' such that* $\left‖{v}^{˜}′-v\right‖ < ε + 1.58 \sqrt{L} {ε}_{tsp} + 1.58 {ε}_{QLSP}$ *with probability* 1 - *δ*.

The proof is provided in the section Additional Information B1. The statement is used to bound the total error parameter ξ by the quantity $ε + 1.58 \sqrt{L} {ε}_{tsp} + 1.58 {ε}_{QLSP}$. Proposition 4, together with proposition 2, produces with high probability an 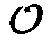 (*ε*) good estimate ***ṽ***' of v by using 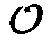 (*L*ln(*L*)/*ε*²) many samples. If a goal is to resolve the initial linear system *G**u** = **h,*** then the vector ***ṽ***' produced as in Section IV D as an estimate for the normalized vector v = ***u***∥***u***∥, gives an estimate for u via ${u}^{˜} : = {v}^{˜} ′ ⋅ \frac{\left‖h\right‖}{\left‖G{v}^{˜}′\right‖} ,$ for which the following is found: $\left‖u-{u}^{˜}\right‖ \leq \left‖v-{v}^{˜}′\right‖ ⋅ \left(1+κ\left(G\right)\right) ⋅ \frac{\left‖h\right‖}{\left‖G{v}^{˜}′\right‖} .$

There are other methods in the literature that allow to perform pure state quantum tomography with comparable query complexities, but this disclosure favors the above method because of its computational simplicity, and the fact that it does not require solving any potentially costly additional optimization problems. The sample complexity has been improved to 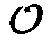 (*L*ln(*L*)/*ε*²), which comes at the cost of more complicated quantum circuits and higher constant overheads (See Reference arXiv:2206.03505). It would be interesting to work out the more involved finite complexity of this result, and further comment on the potential impact of this are provided in section VII.

### E. Asymptotic quantum complexity

Putting things together, the steps of our QLSS for given real *L* × *L* matrix G and real vector ***h*** of size *L* may be:
1. Construct the circuits that implement the block-encoding unitaries *U_{G}* and *U**ₕ*** up to error *ε_{G}* and *ε**ₕ*** via quantum state preparation and QRAM, which involves a classical pre-processing cost scaling as *L*²polylog(1/*ε_{G,**h**}*). The quantum resources used are described in table III. The *T-gate* depth (referred to as "time complexity") is 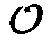 (*log L*) and the total *T-gate* count is 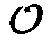 (*L*²)*.*
2. Employ the QLSS unitary from proposition 2 to approximately solve the corresponding QLSP, leading to the quantum state |***ṽ***〉. The query complexity to *U_{G}, U**ₕ**,* their controlled versions, and their inverses, is 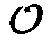 (*κ_{F}*(*G*) log(1/*ε*)). The number of qubits useed is $\left⌈log L\right⌉ + 5$.
3. Repeat the previous step 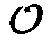 (*L*ln(*L*/*δ*)*ε*⁻²) many times to implement the pure state quantum tomography scheme from section IV D, which also includes the use of an *O(L)* qubit QRAM structure, and one ancilla qubit. Tomography leads to the sought-after classical vector estimate ***ṽ***' with ∥***ṽ***' - ***v***∥ ≤ *ε*.

The QLSS can then be used for each iteration of an IPM SOCP solver, which involves forming and solving a linear system of equations, resulting in the QIPM SOCP solver. This disclosure provides the quantum circuits used to implement the solver in the section IV D.

### F. Quantum circuits

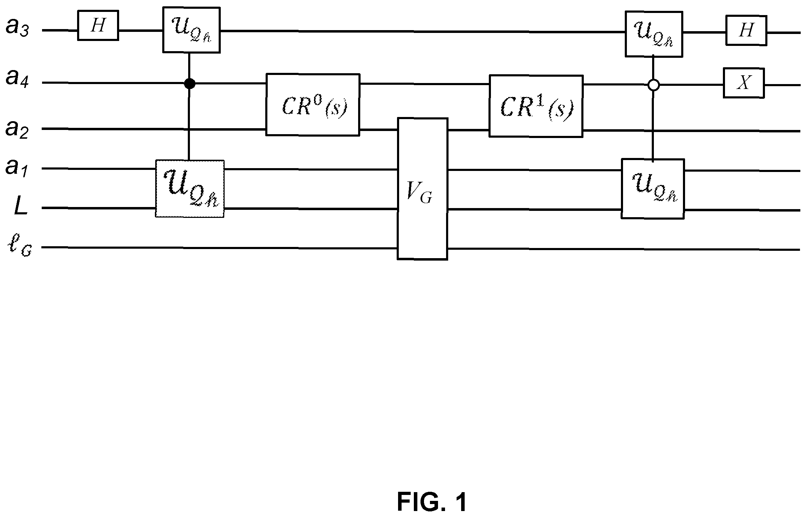

The following are the quantum circuits used for the QLSS of proposition 1. The QLSS includes applying a unitary *U[s]* for many different values of s, where *U[s]* is a block-encoding of a certain Hamiltonian related to *G* and ***h***, as specified below. The unitary acts on 4 + *ℓ* + *ℓ_{G}* total qubits, where the final *ℓ_{G}* qubits are ancillas associated with *U_{G}.* The four single-qubit registers are referred to with labels *a*₁, *a*₂, *a*₃, *a*₄, the ℓ-qubit register with label L, and the ℓ*_{G}*-qubit register with label *ℓ_{G}.* These labels are used as subscripts on bras, kets, and operators to clarify the register to which they apply. The circuit for *U*[*s*] is depicted in FIG. 1. Specifically, the unitary U[s] is a block-encoding of the (2 + ℓ)-qubit Hamiltonian *c(s) ·* 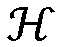 [*s*] := (1 *- f*(*s*)) 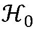 *+ f*(*s*) 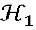 on registers *a*₄*a*₁*L*, where *c(s)* is a normalization factor (defined later in eq. (60)), ${H}_{0} : = \left(\begin{matrix}0 & 0 & {I}_{L} - \left|h\right〉 {\left〈h\right|}_{L} & 0 \\ 0 & 0 & 0 & - {I}_{L} \\ {I}_{L} - \left|h\right〉 {\left〈h\right|}_{L} & 0 & 0 & 0 \\ 0 & - {I}_{L} & 0 & 0\end{matrix}\right)$ (53) and ${H}_{1} : = \left(\begin{matrix}0 & 0 & 0 & G \\ 0 & 0 & {G}^{†} \left({I}_{L}-\left|h\right〉{\left〈h\right|}_{L}\right) & 0 \\ 0 & \left({I}_{L}-\left|h\right〉{\left〈h\right|}_{L}\right) G & 0 & 0 \\ {G}^{†} & 0 & 0 & 0\end{matrix}\right) ,$ (54) and where *I_{L}* denotes the identity operation on subsystem *L,* and the four rows and columns correspond to the sectors with qubits *a*₄, *a*₁ set to (0,0), (0,1), (1,0), (1,1). FIG. 1 features the expressions: ${CR}^{0} \left(s\right) : = \left|0\right〉 {\left〈0\right|}_{{a}_{4}} ⊗ R {\left(s\right)}_{{a}_{2}} + \left|1\right〉 {\left〈1\right|}_{{a}_{4}} ⊗ {H}_{{a}_{2}}$ (55) ${CR}^{1} \left(s\right) : = \left|1\right〉 {\left〈1\right|}_{{a}_{4}} ⊗ R {\left(s\right)}_{{a}_{2}} + \left|0\right〉 {\left〈0\right|}_{{a}_{4}} ⊗ {H}_{{a}_{2}}$ (56) ${V}_{G} : = \left|0\right〉 {\left〈0\right|}_{{a}_{2}} ⊗ {Z}_{{a}_{1}} ⊗ {I}_{L {l}_{G}} + \left|1\right〉 {\left〈1\right|}_{{a}_{2}} ⊗ {\left(\begin{matrix}0 & {U}_{G} \\ {U}_{G}^{†} & 0\end{matrix}\right)}_{{a}_{1} L {l}_{G}} ,$ (57) where H denotes the single-qubit Hadamard gate, and *R(s)* is given by $R \left(s\right) : = \frac{1}{\sqrt{{\left(1-f\left(s\right)\right)}^{2} + f {\left(s\right)}^{2}}} \left(\begin{matrix}1 - f \left(s\right) & f \left(s\right) \\ f \left(s\right) & - \left(1-f\left(s\right)\right)\end{matrix}\right)$ (58) $f \left(s\right) : = \frac{{κ}_{F} \left(G\right)}{{κ}_{F} \left(G\right) - 1} ⋅ \left(1-{\left(1+s\left(\sqrt{{κ}_{F} \left(G\right)}-1\right)\right)}^{- 2}\right)$ (59) The normalization factor of *R(s)* above combines with a factor of $1 / \sqrt{2}$ introduced by the Hadamard gate to give an overall normalization factor for 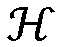 (*s*) of $c \left(s\right) = {\left(2\left({\left(1-f\left(s\right)\right)}^{2}+f{\left(s\right)}^{2}\right)\right)}^{- 1 / 2} ∈ \left[{2}^{- 1 / 2}, 1\right]$ (60) and scheduling function *f*(*s*) with *f*(0) = 0 and *f*(1) = 1. Note the self-inverse property *U*[*s*]² = 1 ∀*s* ∈ [0,1]. The overall quantum circuit *U* for the quantum algorithm of proposition 1 is then given as: $U : = {\prod }_{□ = 1}^{Q} P \left[1-j/Q\right]$ (61) with the walk operator $P \left[s\right] : = WU \left[s\right] ,$ where W is the operator that acts as identity on registers *a*₄*a*₁*L* (which host the Hamiltonian 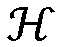 [*s*]) while performing the reflection (2|0〉〈0|_{*a*₂*a*₃}*_{ℓG} -I*_{*a*₂a₃*ℓG*}) on the remaining qubits. The unitary *U* makes Q controlled queries to each of *U_{G}* and ${U}_{G}^{†}$*,* and 2Q queries to each of *U**ₕ*** and ${U}_{h}^{†}$, and it has constant quantum gate overhead.

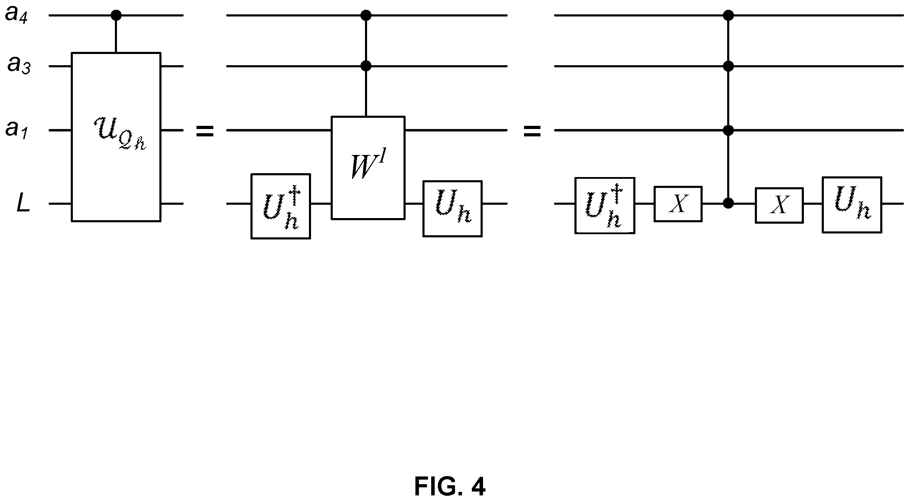

FIG. 1 is a diagram of an example quantum circuit that is a main component of the example quantum circuit for proposition 1, enacting the unitary *U*[*s*] on registers *a*₃*a*₄*a*₂*a*₁*Lℓ_{G}* of the scaled Hamiltonian *c(s) ·* 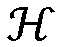 [*s*], where 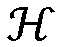 [*s*] *=* (1 *- f*(*s*) 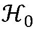 *+ f*(*s*) 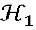 *,* on registers *a*₄*a*₁*L.* The quantum gates and functions are defined in eqs. (53) to (59) except for sub-circuit *U_{Q**ₕ**}*, which is depicted in FIG. 4. The unitary U[s] is then used in eq. (61) to define the overall quantum circuit U for proposition 1.

Next, give the remaining QSVT eigenstate filtering quantum circuit for the refined quantum linear system solver of proposition 2. The null space of *c(1)* · 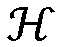 [1] is of interest, which has ground-state energy equal to zero and spectral gap at least $c \left(1\right) {κ}_{F}^{- 1} \left(G\right) = {\left(\sqrt{2}{κ}_{F}\right)}^{- 1}$ . As such, employ the Chebyshev minimax polynomial: ${R}_{l} \left(x,{κ}_{F}^{- 1}\left(G\right)\right) : = \frac{{T}_{l} \left(-1+2\frac{{x}^{2} - {κ}_{F}^{- 2} \left(G\right) / 2}{1 - {κ}_{F}^{- 2} \left(G\right) / 2}\right)}{{T}_{l} \left(-1+2\frac{- {κ}_{F}^{- 2} \left(G\right) / 2}{1 - {κ}_{F}^{- 2} \left(G\right) / 2}\right)} ,$ (62) where *Tₗ*(·) is *l*-th Chebyshev polynomial of the first kind, as part of the corresponding QSVT quantum circuit. *Rₗ* has even degree d equal to $d : = 2 l = 2 \left⌈{κ}_{F}\left(G\right)ln\left(2/{ε}_{qsp}\right)\right⌉ for some {ε}_{qsp} ∈ \left(0, 1\right]$ (63) where *ε*_{qsp} is the precision to which *Rₗ* approximates the optimal filter operator. The QSP subscript stands for "quantum signal processing."

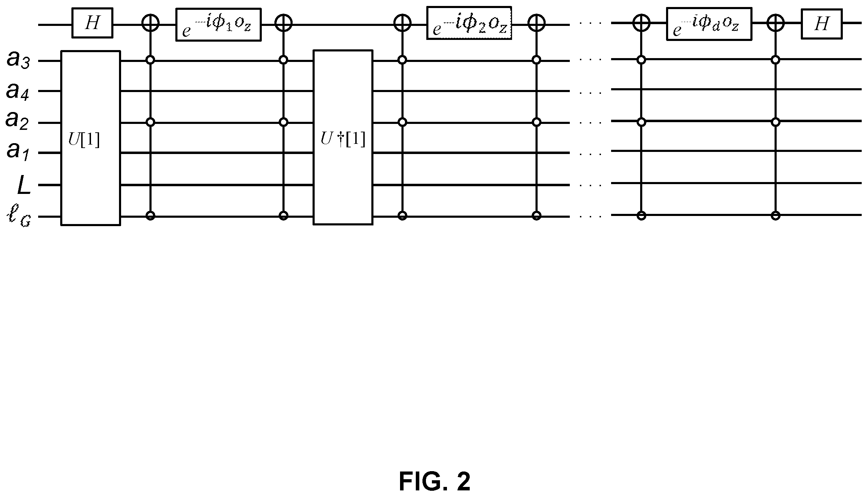

The circuit for the eigenstate filtering step is depicted in FIG. 2. To implement it, one may classically pre-compute the corresponding QSP angles {*ϕ*₁, ··· *, ϕ_{d}*}. The query complexity to the block encoding *U*[1] is given by d, the additional gate overhead is as in FIG. 2, and the total number of qubits is 1 + 4 + ℓ. Finally, using the overall quantum circuit U from proposition 1 with constant approximation parameter *ε*₁ = 1/4 therein (to produce an input state to the quantum circuit of FIG. 2), gives the overall quantum circuit of the QLSS from proposition 2, which then solves the QLSP to error *ε*₂ = *ε*_{qsp}.

FIG. 2 is a diagram of an example Quantum singular value transform (QSVT) circuit, acting on the block-encoding U[1] of $H \left(1\right) = {H}_{1} / \sqrt{2}$, as defined in eq. (54). The circuit features one additional ancilla qubit and depends on the classically precomputed rotation angles {*ϕ*₁, ··· , *ϕ_{d}*}.

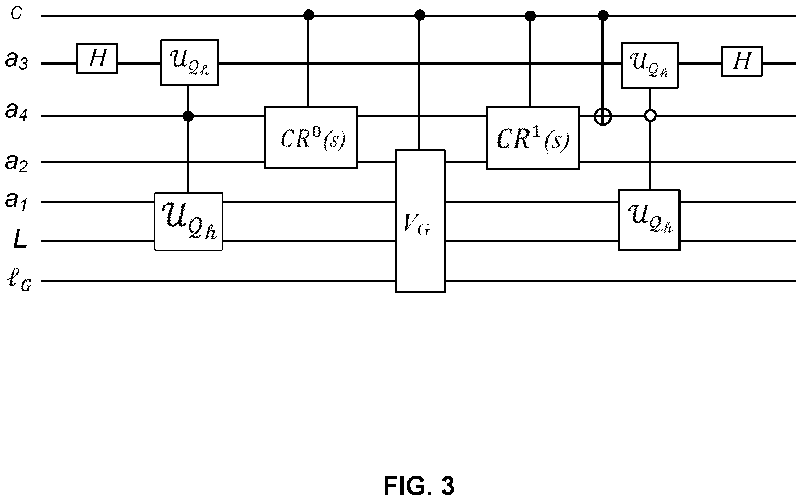

A quantum tomography routine may also include performing controlled versions of the above circuits as described in eq. (49) and illustrated in FIG. 3 (which replaces FIG. 1). More specifically, FIG. 3 is a diagram of an example-controlled version of the quantum circuit in FIG. 1, controlled on qubit c. Note that not all gates need to be controlled on c, as their inverses follows in the circuit. The controlled circuits can be accomplished by modifications to the circuits in Figs. 1 and 2 as follows.

Any QSVT circuit can be made controlled by simply controlling the application of the z rotation gates, since the rest of the circuit contains only symmetric applications of unitary gates and their inverses. Thus, a controlled version of FIG. 2 may be created by simply performing controlled-*σ_{z}* rotations, which uses two CNOT gates and an extra single qubit *σ_{z}* rotation gate.

Controlling the linear system portion is not enough to implement eq. (49). This may (e.g., must) be followed up with a controlled state-preparation routine, controlled on the value of the qubit c being in the |1〉 state. The resource analysis for controlled state-preparation is reported in Ref. Clader. The resource counts are reported here in table IV.

### V. IPM IMPLEMENTATION AND RESOURCE ESTIMATES FOR PO

The previous section reviewed the ingredients used to implement the QIPM, namely, QLSS, block-encoding, and tomography. Here, combine those ingredients to describe how the QIPM is actually implemented, making several observations that go beyond prior literature. Also perform a full resource analysis of the entire protocol and report resources used to run the algorithm.

### A. QIPM loop and pseudo-code

A QIPM is formed from an IPM by performing the step of solving a linear system with a quantum algorithm; the rest of the steps are classical. Example Algorithm 1 presents pseudocode for the interior point method where the single quantum subroutine-approximately solving a linear system-appears in blue text. The input to Algorithm 1 is an SOCP instance with *N* variables, *K* linear constraints, and r second-order cone constraints, along with a tolerance parameter *ε*. Here note that *K = O(N)* in the case of the formulation of the PO problem simulated in section VI. The output of the QIPM is a vector *x* that is 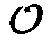 (*ε*) close to feasible, and 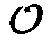 (*ε*) close to optimal.

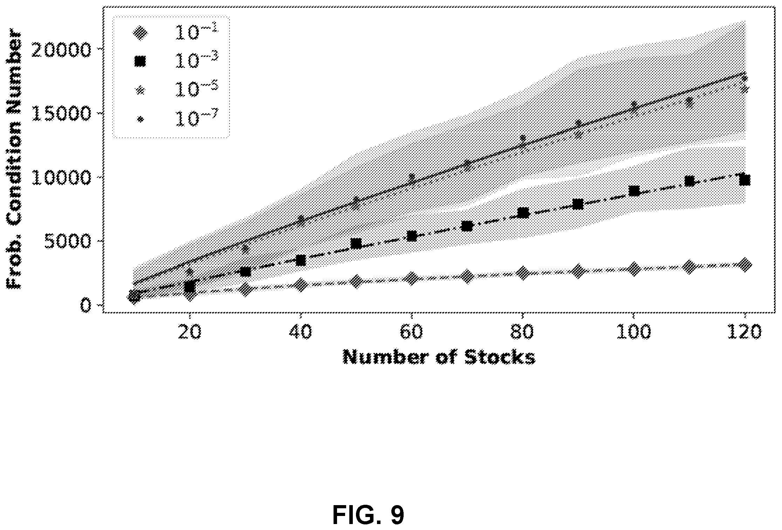

A description of the QIPM algorithm is provided herein along with the following new observations:
- **Classical costs:** The IPM uses $O \left(\sqrt{r} log\left(1/ϵ\right)\right)$ iterations. In the classical case, when solving the PO problem via SOCP with an IPM, the cost of an iteration is dominated by the time used to solve a linear system of size *L* × *L,* which is 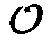 (*N*³) if done via Gaussian elimination, since *L ~* 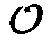 (*N*) in the PO problem. In the quantum case, this step is performed quantumly. However, even in the quantum case, some classical costs are incurred: the left-hand and right-hand sides of the Newton system in eq. (19) and eq. (22) are classically computed to load this classical data into quantum circuits that perform the QLSS and tomography to gain a classical estimate of the solution to the linear system. In particular, constructing the linear system includes classical matrix-vector multiplication to compute the residuals on the right-hand-side of the Newton system in eq. (19). If the SOCP constraint matrix *A* is *O(N)* × *N* and the number of cones *r =* 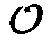 (*N*), then this classical matrix-vector multiplication takes (*N*²) time in each of the $O \left(\sqrt{N}\right)$ iterations. Thus, the QIPM uses at least 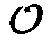 (*N*^{2.5}) classical time. Additionally, in the resource counts the minimal depth block-encoding circuits from Reference Clader are used, which use *N*²polylog(1/*ε*) classical time per iteration (although this can be parallelized) to compute angles and corresponding gate sequences to precision *ε*. These classical costs limit the maximum possible speedup of the QIPM over the classical IPM, but if the quantum subroutine is sufficiently fast that classical matrix-vector multiplication and angle computation is the bottleneck step, then this is a good signal for the utility of the QIPM.
- **Preconditioning:** Since the runtime of the QLSS depends on the condition number of the matrix *G* that appears in the linear system *G**u** = **h,*** it is worth examining preconditioning techniques for reducing the condition number. In the implementation proposed, a simple form of preconditioning may be preformed. Let *D* be a diagonal matrix where entry *Dᵢᵢ* is equal to the norm of row *i* of the matrix *G*. Instead of solving the linear system *G**u** = **h,*** solve the equivalent system (*D*⁻¹*G*)***u** = D*⁻¹***h**.* Note that *D*⁻¹*G* and *D*⁻¹***h*** can each be classically computed in (*N*²) time, roughly equal to the time used to compute ***h*** in the first place (see previous bullet), so this step is unlikely to be a bottleneck in the algorithm. In the numerical experiments herein, the condition number of D⁻¹G is typically more than an order of magnitude smaller than G, and sometimes several orders of magnitude (see FIG. 9 in section VI).
- **Norm of linear system and step length:** As discussed in section IV B, QLSSs produce a normalized state **|*u*〉,** where ***u*** is the solution to *G**u** = **h,*** and quantum state tomography on |***u***〉 can only reveal the direction of the solution ***u*** and not its norm. The norm can be estimated separately with a comparable amount of resources, but in the context of QIPMs, *it is not necessary to learn the norm of the solution.* If the direction of the solution is known, the amount by which to update the vector in that direction can be determined classically in *O(N)* time as follows. If ***(Δx; Δy;*** Δ*τ*; Δ*θ*; **Δ*s***; Δ*κ*) is the normalized solution to the Newton linear system in eqs. (19) and (22), then the amount to step in that direction is equal to $\frac{μ \left(x, τ, s, κ\right) \left(1-σ\right) \left(r+1\right)}{- {\left(Δx\right)}^{⊤} s - {\left(Δs\right)}^{⊤} x - \left(Δκ\right) τ - \left(Δτ\right) κ} .$ (64) This expression is chosen such that the duality gap of the new point is (e.g., exactly) a factor of *σ* smaller than the old point, up to deviations that are second order in the step length. Note that if the old point is feasible and the solution to the linear system is exact, the second and higher order contributions vanish anyway.
- **Adaptive tomographic precision and neighborhood detection:** In conventional work, the choice of tomography precision parameter is determined by a formula that aimed to guarantee staying within the neighborhood of the central path under a worst-case outcome. However, since determining whether a point is within the neighborhood of the central path can be done in classical *O(N)* time (see section III C 6), the tomography precision parameter ξ herein may instead be determined adaptively for optimal results. For example: start with ξ = 1/2, solve the linear system to precision ξ and check if the resulting point is within the neighborhood of the central path. If yes, continue to the next iteration; if no, repeat the tomography with ξ ← ξ/2. Since the complexity of tomography is 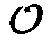 (1/*ξ*²), the cost of this adaptive scheme is proportional to a geometric series 4 + 16 + 64 + ··· + 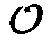 (1/*ξ*²) of which the final term makes up most of the cost (accordingly, for simplicity, the resource calculation may only account for the final term). This cost could be much lower than the theoretical value if the typical errors are not as adverse for the IPM as a worst-case error of the same size.

The pseudocode in Algorithm 1 illustrates the "infeasible" version of the example algorithm (II-QIPM from table II). The numbers on the left refer to steps of Algorithm 1. Text in Algorithm 1 bookended by "/*" and "*/" are comments on one or more of the steps. To implement the feasible versions (IF-QIPM and IF-QIPM-QR), minor modifications are made to reflect the process described in section III.

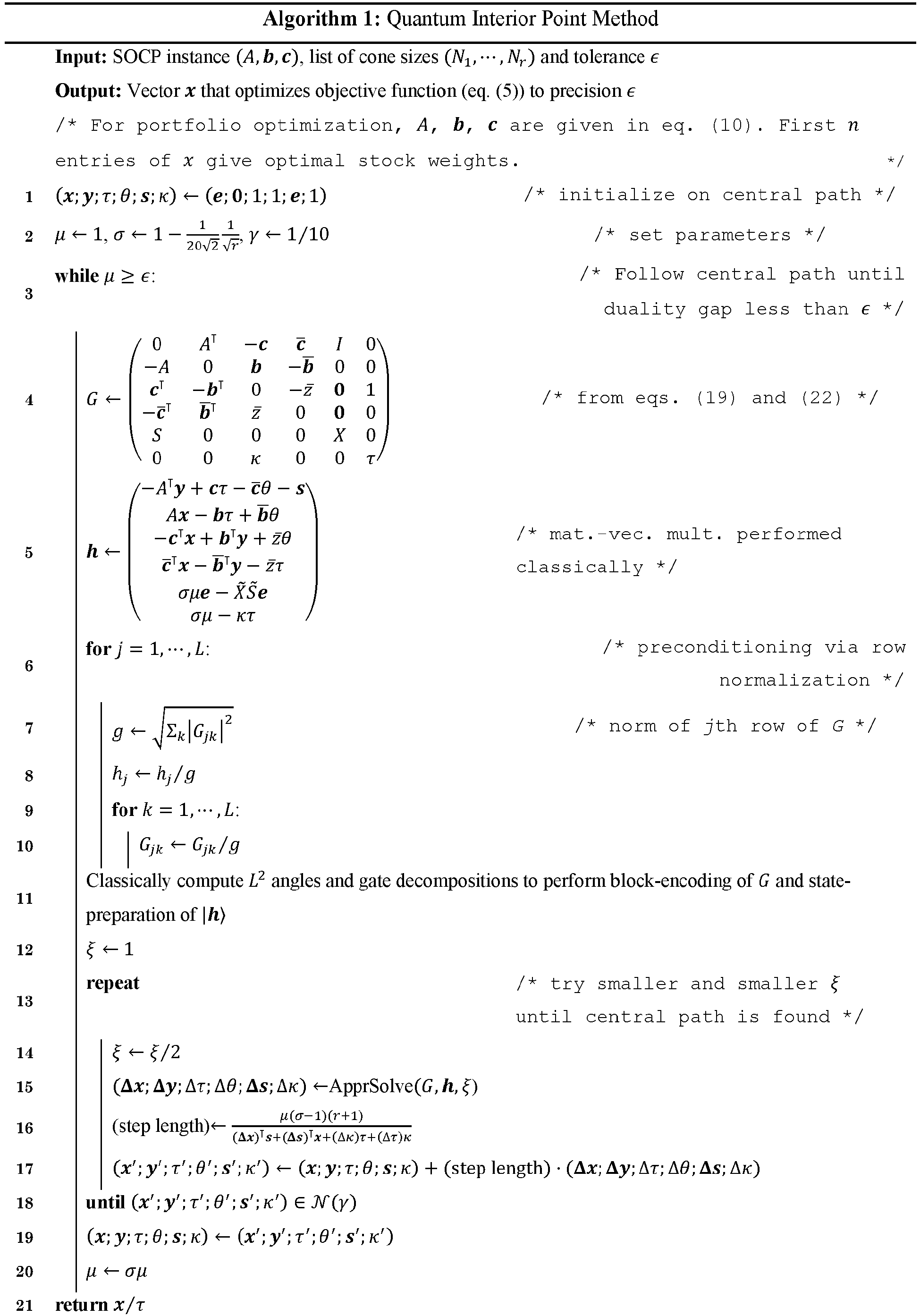

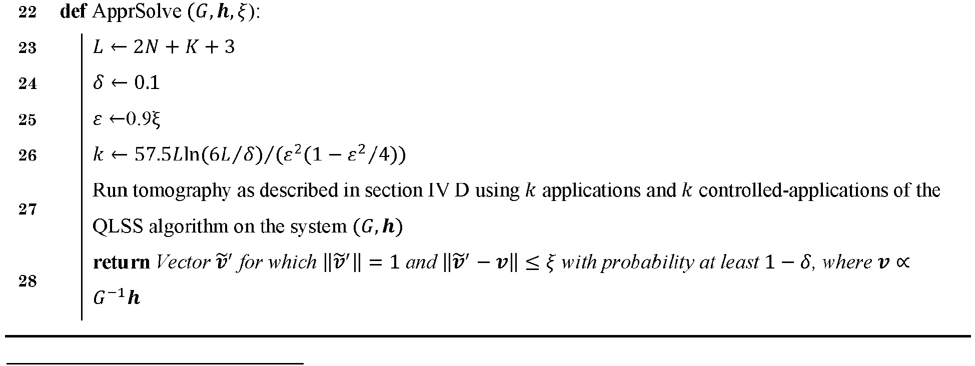

### B. End-to-end quantum resource estimates

The QIPM described in the pseudocode takes $20 \sqrt{2} \sqrt{r} ln \left({ϵ}^{- 1}\right)$ iterations to reduce the duality gap to *ε*, where *r* is the number of second-order cone constraints. In the case of the portfolio optimization problem, *r* = 3n + 1, where *n* is the number of stocks in the portfolio. Choosing the constant pre-factor to be $20 \sqrt{2}$ allows us to utilize theoretical guarantees of convergence (modulo the issue of infeasibility discussed in section III C 5); however, it would not be surprising if additional optimization of the parameters or heuristic changes to the implementation of the algorithm (e.g. adaptive step size during each iteration) would lead to constant-factor speedups in the number of iterations. Since the number of iterations would be the same for both the quantum and classical IPM, these sorts of improvements would not impact the performance of the QIPM relative to its classical counterpart.

### 1. Quantum circuit compilation and resource estimate for quantum circuits appearing within QIPM

The QIPM includes repeatedly performing a quantum circuit associated with the QLSS and measuring in the computational basis. The costs of each of these individual quantum circuits is accounted for herein. There are two kinds of circuits that are used: first, the circuit that creates the output of the QLSS subroutine, given by the state in eq. (36), and second, the circuit that creates the state used to determine the signs of the amplitudes during the tomography subroutine corresponding to a controlled-QLSS subroutine, given in eq. (49).

To simplify the analysis, first compile the circuits from the previous section into a primitive gateset that includes Toffoli gates (and multi-controlled versions of them), rotation gates, block-encoding unitaries, state-preparation and controlled state-preparation unitaries. This compilation allows combining previous in-depth resource analysis for these primitive routines (See Ref. Clader) with the additional circuits shown here.

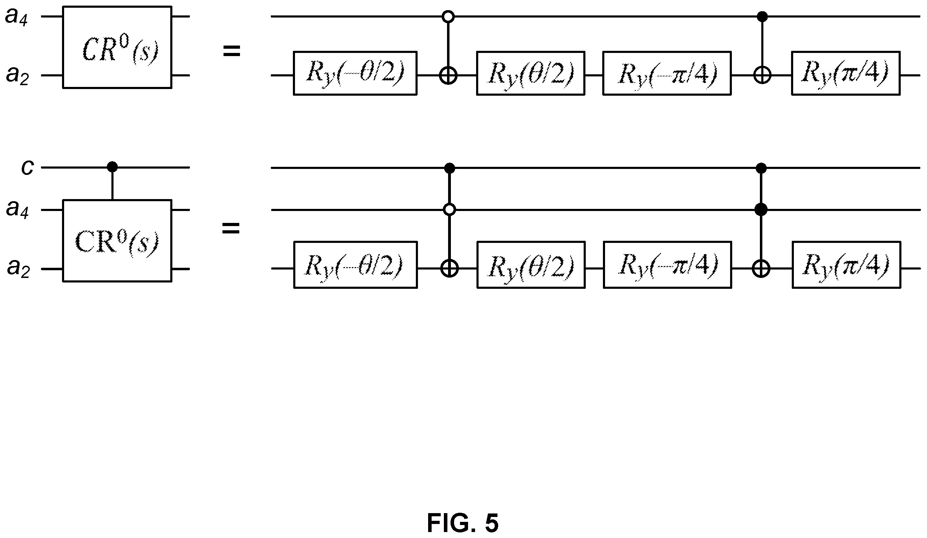

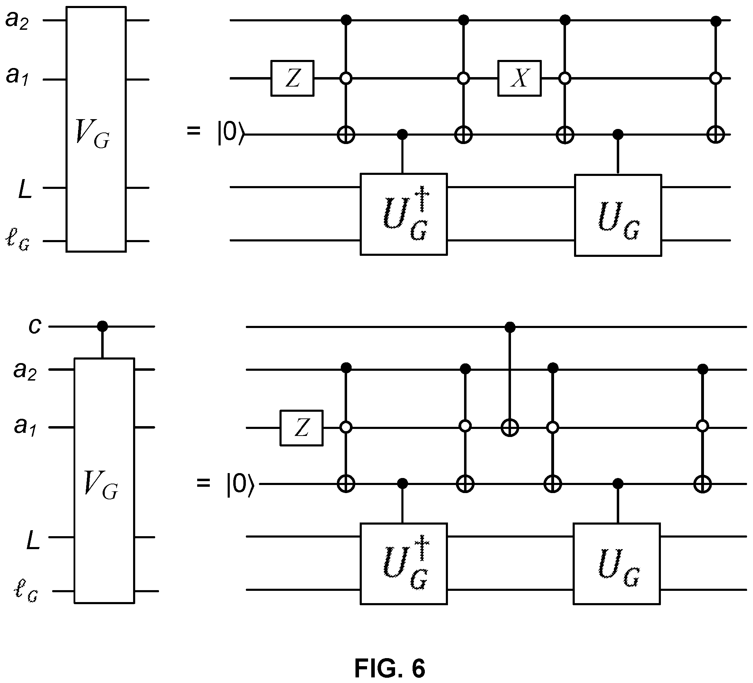

From left to right in the *U[s]* circuit shown in FIG. 1, the circuits for *U_{Q**h**}, CR*⁰(*s*) (and equivalently *CR*¹(*s*)), and *V_{G}* in FIGS. 4 to 6, respectively. In addition to these circuits, controlled versions of them may be performed within the tomography routine to estimate the sign of the amplitudes. The controlled-U[s] gate is given in FIG. 3. The implementation of the controlled versions of *CR*⁰(*s*) (and equivalently *CR*¹(*s*)), and *V_{G}* are also depicted in figs. 5 and 6, respectively.

With these decompositions in place, table V reports the resources used to perform each of the two kinds of quantum circuits involved in the QIPM (which are each performed many times over the course of the whole algorithm). The resource quantities are reported in terms of the number of calls *Q* to the block-encoding (which scales linearly with the condition number), as well as the controlled-block-encoding and state-preparation resources given previously in tables III and IV. The expressions also depend on various error parameters which must be specified to obtain a concrete numerical value.

In section VI, after observing empirical scaling of certain algorithmic parameters, error parameters are described to arrive at a concrete number for a specific problem size.

### 2. Resource estimate for producing classical approximation to linear system solution

The resource estimates described above capture the quantum resources used for a single coherent quantum circuit that appears during the algorithm. The output of this quantum circuit is a quantum state, but the QIPM includes a classical estimate of the amplitudes of this quantum state. This classical estimate is produced through tomography, as described in section IV D, by performing *k* = 57.5*L*ln(6*L*/*δ*)/(*ε*²(1 - *ε*²/4)) repetitions each of the QLSS and controlled-QLSS circuits, where *ε* is the desired tomography precision and ***δ*** is the probability that the tomography succeeds. In the example implementation given in Algorithm 1, fix ***δ*** = 0.1. Thus, to estimate the quantum resources of a single *iteration* of the QIPM, the previous resource estimates reported in table V should each be multiplied by *k.* With P processors large enough to prepare the output of the QLSS, these *k* copies may be prepared in *k*/*P* parallel steps, saving a factor of P in the runtime at the expense of a factor of P additional space. The resources and scaling estimates do not account for any parallelization, and completely serial execution and runtime is assumed.

After multiplication by *k*, these expressions give the quantum resources used to perform the single quantum line of the QIPM, ApprSolve. This subroutine has both classical input and output and can thus be compared to classical approaches for approximately solving linear systems.

FIG. 4 is a diagram illustrating an example decomposition of the *U_{Q**h**}* gate (shown, e.g., in FIG. 1) into a state-preparation unitary *U**ₕ*** and multi-controlled-Toffoli gates. The reflection operator W is given by *W'* := *I*_{*a*₁*L*} - 2|1〉〈1|_{*a*₁} ⊗|0〉〈0|*_{L}*. Not pictured are additional ancillas that begin and end in |0〉 and are utilized to implement the unitary *U**ₕ*** in shallower depth.

FIG. 5 is a diagram illustrating an example decomposition of the *CR*⁰(*s*) gate (top) and controlled-*CR*⁰(*s*) gate (bottom), as defined in eq. (55), into single qubit rotation gates and CNOTs (top) or Toffolis (bottom). The gate *R_{y}*(*ϕ*) is defined to map |0〉 ↦ cos(*ϕ*/2)|0〉 + sin(*ϕ*/2)|1〉 and |1〉 ↦ - sin(*ϕ*/2|0〉 + cos(*ϕ*/2)|1〉. The rotation angle $q = 2 arctan \left(\frac{1 - f \left(s\right)}{f \left(s\right)}\right)$, where *f*(*s*) given in eq. (59). The *CR*¹(*s*) gate is identical but with the control bit sign flipped. Note that the *R_{y}*(± π/4) gates are Clifford conjugate to a single *T* or *T*^{†}gate.

FIG. 6 is a diagram illustrating an example decomposition of the *V_{G}* unitary (top) and controlled-*V_{G}* unitary (bottom), as defined in eq. (57), into calls to a standard block-encoding unitary *U_{G}* and other elementary gates, using a single ancilla qubit initialized to the |0〉 state. Not pictured are additional ancillas that begin and end in |0〉 and are utilized to implement the unitary *U_{G}* in shallower depth.
TABLE V shows quantum resources used to create the state output by the quantum linear system solver, given in eq. (36) (QLSS, left) or the state used to compute the signs during the tomography subroutine, given in eq. (49) (Controlled QLSS, right) for a square linear system of size *L* = 2^{ℓ}. Note that these resource quantities do not yet account for the *k* classical repetitions used in order to perform tomography on the output state. The parameters *Q* and *d* each scale linearly with the condition number of the linear system, as defined in proposition 2. The symbols *N_{Qcbe}, T_{Dcbe}*, and *T_{Ccbe}* denote the number of logical qubits, the *T*-depth, and the *T-count,* respectively, for performing a *controlled*-block-encoding, as reported in table III. The symbols *T_{Dsp},* and *T_{Csp}* are analogous quantities for state-preparation, as reported in table IV. The parameters *ε*ₐᵣ, *ε*ₜₛₚ and *ε*_{z} ∈ (0,1] are error parameters corresponding to the gate synthesis precision used for the *CR*⁰(*s*) and *CR*¹(*s*) rotations, controlled state-preparation step used by tomography, and the QSVT phases, respectively.

**TABLE V**

| **Resource** | **QLSS** | **Controlled QLSS** |
|---|---|---|
| **# Qubits** | *N_{Qcbe} +* 5 | *N_{Qcbe} +* 6 |
| ***T*-depth** | 12*Q* log₂(1/*ε*ₐᵣ) + 2(*Q* + *d*)*T_{Dcbe} +* 4(*Q + d*)*T_{Dsp}* | 12*Q* log₂(1/*ε*ₐᵣ) + 2(*Q + d*)*T_{Dcbe} +* 4(*Q + d)T_{Dsp}* |
| | + *Q*(24ℓ *+* 31) | + *Q*(24ℓ + 36) |
| | + 3*d* log₂(1/*ε_{z}*) + *d*(32*ℓ* -2) | + 6*d* log₂(1/*ε_{z}*) + *d*(32ℓ -2) |
| | | + 12 log₂(1/*ε*ₜₛₚ) + 3(ℓ - 1) |
| ***T*-count** | 12*Q log*₂(1/*ε*ₐᵣ) + 2(*Q + d*)*T_{Ccbe} +* 4(*Q + d*)*T_{Csp}* | 12*Q* log₂(1/*ε*ₐᵣ) + 2(*Q* + *d*)*T_{Ccbe} +* 4(*Q + d*)*T_{Csp}* |
| | *+ Q*(24ℓ *+* 31) | *+ Q*(24*ℓ +* 51) |
| | + 3*d* log₂(1/*ε_{Z}*) + *d*(32ℓ -2) | + 6*d* log₂(1/*ε_{z}*) + *d*(32ℓ -2) |
| | | + 12 (*L* - 1)log₂(1/*ε*ₜₛₚ) |
| | | + 16(*L* - ℓ - 1) |

### 3. Estimate for end-to-end portfolio optimization problem

Recall that the full QIPM algorithm is an iterative algorithm, where each iteration involves approximately solving a linear system by preparing many copies of the same quantum states. The duality gap *µ*, which measures the proximity of the current interior point to the optimal point, begins at 1 and decreases by a constant factor *σ* with each iteration. Thus, the number of iterations to reach a final duality gap *ε* is given by: ${N}_{it} = \left⌈ln\left(ϵ\right)/ln\left(σ\right)\right⌉ = \left⌈\frac{ln \left(ϵ\right)}{ln \left(1-\frac{1}{20 \sqrt{2 r}}\right)}\right⌉ \approx \left⌈20\sqrt{2} ln\left({ϵ}^{- 1}\right)\sqrt{r}\right⌉ .$ (65) Recall from the discussion in section III C 3 that the output of the QIPM will achieve an 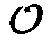 (*ε*) approximation to the optimal value of the objective function.

Pulling this all together, the resources to perform the full QIPM algorithm can be estimated, including the multiplicative factors used to perform tomography as well as the number of iterations to converge to the optimal solution. Note that the relevant condition number *κ_{F}*(*G*) and linear-system precision *ξ* may vary from iteration-to-iteration as the Newton matrix *G* changes. The overall runtime can be upper bounded using the maximum observed value of *κ_{F}*(*G*)*,* which is denoted by *κ_{F}*, and minimum observed value of *ξ* across all iterations. At each iteration, to achieve overall precision *ξ*, the tomography precision *ε* is chosen to be just smaller than *ξ* (e.g., choose *ε* = 0.9*ξ*), while all other error parameters (*ε*ₐᵣ, *ε*ₜₛₚ, *ε_{z}*, etc.) are chosen to be small constant fractions of *ξ*, such that a total error budget of *ξ* is not exceeded. As the non-tomographic error parameters all appear underneath logarithms, these small constant factors will drop out of a leading order analysis, and it suffices to replace all of these error parameters with *ξ*.

The overall runtime may then be expressed in terms of *κ_{F}*, *ξ*, *L* (the size of the Newton system), and *r* (the number of second-order cone constraints) up to leading order and including (e.g., all) constant factors, which are reported in table VI. Recall that for the infeasible version of the QIPM acting on the self-dual embedding, *L* = 2*N* + *K* + 3, where *N* is the number of SOCP variables and *K* is the number of linear constraints. Note that in the leading order expression, it is assumed that the contributions proportional to *Q* = 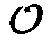 (*κ_{F}*) dominate over terms proportional to *Q* = 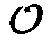 (*κ_{F}*) at practical choices of *ξ* due to the large constant prefactor in the definition of *Q* (see proposition 2 and surrounding discussion). The left column of table I from the introduction is formed using the expressions in table VI, and substituting the corresponding relations between *L* and *n,* where *n* is the number of stocks in the portfolio optimization problem given in eq. (10). That is, substitute *r* = 3*n* + 1 and *L* = *2N + K +* 3 = 8*n* + 3*m* + 6 = 14*n* + 6 when m = *2n* is taken, where *N* is the number of SOCP variables, *K* is the number of SOCP constraints, *n* is the number of stocks, and m is the number of time epochs used to create the matrix *M* as described in section II.

TABLE VI shows leading order contribution to the logical qubit count, *T*-depth, and *T-count* for the entire QIPM, including constant factors. The parameter *L* denotes the size of the Newton linear system and *r* denotes the number of second-order cone constraints, while *ε* denotes the final duality gap that determines when the algorithm is terminated. For the infeasible QIPM running on an n-asset instance of portfolio optimization, as given in eq. *(10), L* = 14*n* + 6 and *r* = 3*n* + 1; these substitutions yield the results in table I. The parameter *κ_{F}* denotes the maximum observed Frobenius condition number and *ξ* denotes the minimum observed tomographic precision parameter across all iterations.

**TABLE VI**

| **Resource** | **QIPM complexity** |
|---|---|
| **# Qubits** | 4*L*² |
| ***T*-depth** | $\left(7\times {10}^{8}\right) {κ}_{F} L \sqrt{r} {ξ}^{- 2} {log}_{2} \left({ϵ}^{- 1}\right) {log}_{2} \left(L\right) {log}_{2} \left({κ}_{F}{L}^{14 / 27}{ξ}^{- 1}\right)$ |
| ***T*-count** | $\left(2\times {10}^{8}\right) {κ}_{F} {L}^{3} \sqrt{r} {ξ}^{- 2} {log}_{2} \left({ϵ}^{- 1}\right) {log}_{2} \left(L\right) {log}_{2} \left({κ}_{F}{ξ}^{- 1}\right)$ |

### VI. NUMERICAL EXPERIMENTS WITH HISTORICAL STOCK DATA

The resource expressions in table VI include constant factors but leave parameters *κ_{F}* and *ξ* unspecified. These parameters depend on the specific SOCP being solved. As a final step, numerical simulations of small PO problems can be used to study the size of these parameters for different PO problem sizes. This information enables us to give concrete estimates for the resources used to solve realistic PO problems with our implementation of the QIPM and sheds light on whether there could be an asymptotic quantum advantage.

The numerical experiments simulate the entirety of Algorithm 1. The (e.g., only) quantum part of the algorithm is to carry out the subroutine ApprSolve (*G*, ***h***, *ξ*). The quantum algorithm for this subroutine can be simulated by solving the linear system exactly using a classical solver and then adding noise to the resulting estimated values to simulate the output of tomography. Since the tomography scheme illustrated in section IV D repeatedly prepares the same state and draws *k* samples from measurements in the computational basis, the result is a sample from the multinomial distribution. In the numerical simulations herein, samples from this same multinomial distribution are drawn, thus capturing tomographic noise in a more precise way than by simply adding uniform Gaussian noise, as was done in conventional work. For simplicity, this disclosure assumes that the part of the tomography protocol that calculates the signs of each amplitude correctly computes each sign. To numerically estimate resource counts, it is helpful to understand what level of precision *ξ* is used to stay close enough to the central path throughout the algorithm, as well as how large the Frobenius condition number *κ_{F}* of the Newton system is. Noteworthy, it may be desirable to know how these quantities scale with system size and duality gap *µ*, which decreases by a constant factor with each iteration of the QIPM.

Section III C 5 discussed three formulations of the QIPM (see table II). The first (II-QIPM) is closely related to the original formulation, which does not guarantee that the intermediate points generated by the IPM are feasible. The other two are instantiations of the inexact-feasible formulation, which uses pre-computing a basis for the null-space of the SOCP constraint matrix. The first of these computes a valid basis by hand (IF-QIPM), while the second uses a QR decomposition to determine the basis (IF-QIPM-QR). All three versions were simulated, and it was determined that the II-QIPM stayed close to the central path, despite the lack of a theoretical guarantee that this would be the case. Here the results of the II-QIPM are presented. For comparison, in the section Additional Information E, some numerical results are presented for the feasible QIPMs, which do benefit from a theoretical convergence guarantee, but have other drawbacks.

As discussed in section V A, a simple preconditioner is implemented that reduces the condition number by about at least an order of magnitude with negligible additional classical cost. Resources estimates are reported assuming a preconditioned matrix.

### A. Example instance

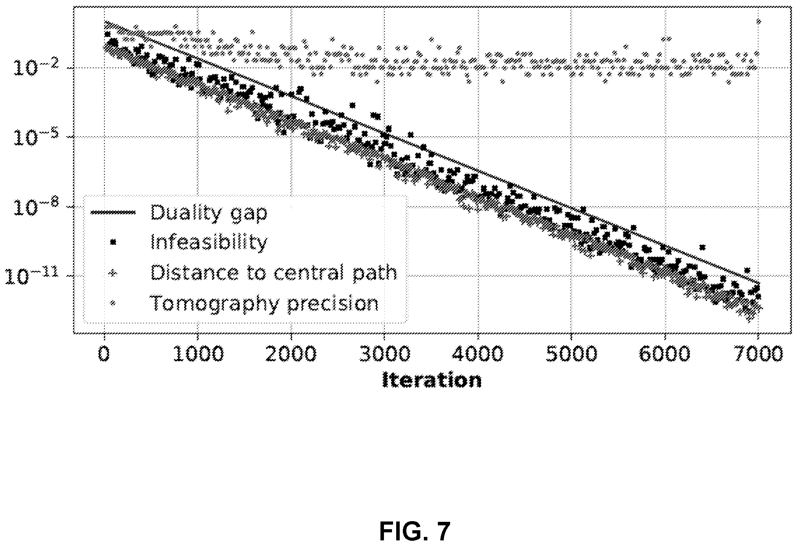

FIG. 7 presents as an example the results of one of the simulations. A portfolio optimization instance of eq. (3) was constructed by randomly choosing *n* = 30 stocks from the Dow Jones U.S. Total Stock Market Index (DWCF). The following parameters were, for example, arbitrarily set to *q* = 1, ***ζ*** = 0.05 · **1**, and it was assumed the previous portfolio ***w̅*** allocates weight to each stock in proportion to its market capitalization. The returns of the 30 stocks on the first *m* = 2*n* = 60 days in the dataset were used to construct an average return vector ***û*** and an *m* × *n* matrix *M* for which *M*^{τ}*M* = Σ, the covariance matrix for the stock returns, as described in section III B.

The infeasible QIPM acting on the corresponding SOCP in eq. (10) was also simualted. The figure illustrates how the simulation successfully follows the central path to the optimal solution after many iterations. The duality gap decreases with each step, and, notably, the infeasibility and distance to the central path also decrease (exponentially) with iteration. Also plotted is the tomography precision *ξ* that was used to ensure that each iteration stayed sufficiently close to the central path (determined adaptively as described in the pseudocode in Algorithm 1). The plot exemplifies how, despite the lack of theoretical convergence guarantees, our simulations suggest that in practice the II-QIPM acting on the PO SOCP will yield valid solutions.

FIG. 7 is a plot illustrating simulation results of the QIPM on an SOCP instance corresponding to portfolio optimization on *n* = 30 randomly chosen stocks using *m* = 60 time epochs. The duality gap *µ* (defined in eq. (14)), the distance to the central path *d_{F}* (defined in eq. (26)), and the infeasibility (defined as the norm of the residual on the right-hand-side in eq. (19)) each decrease exponentially with the number of iterations. The tomography precision *ξ* to stay near the central path (defined adaptively as outlined in Algorithm 1) initially decreases and then plateaus at about 10⁻².

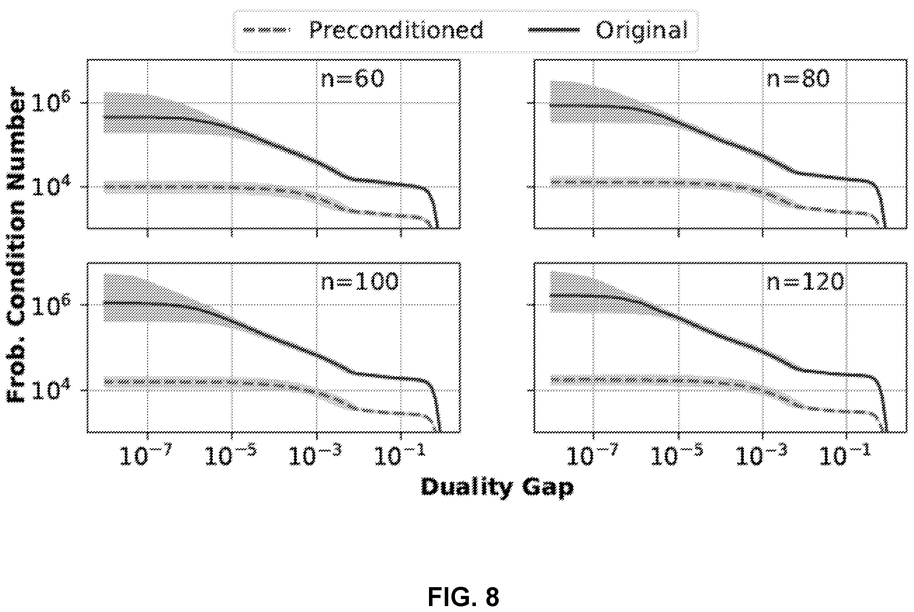

Remarkably, for this instance, observe that both the Frobenius condition number *κ_{F}* and the inverse tomography precision *ξ*⁻¹ initially increase but ultimately plateau with the iteration number, even as the duality gap gets arbitrarily small (see FIG. 8 for data on *κ_{F}*)*.* This scaling behavior was a generic feature of the simulations across all the instances simulated. This contrasts with the worst-case expectation that the condition number can increase as *κ_{F}* = 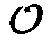 (1/*µ*) or *κ_{F}* = 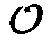 (1/*µ*²) (depending on the formulation of the Newton system). Prior literature does not say much about whether the quantity *ξ*⁻¹ should be expected to diverge. One might expect that, since the neighborhood of the central path gets smaller as *µ* gets smaller (e.g., radius is proportional to *µ* in eq. (27)), the precision requirement to stay close to the central path would get more stringent in proportion to *µ*. However, recall that the step size from one iteration to the next also shrinks with *µ*, and that *ξ* represents the size of the error on the *normalized* Newton system solution; thus the neighborhood does not shrink *relative* to the distance to the optimum and the length of the next step, and there is no immediate reason that *ξ*⁻¹, as defined, must diverge as *µ* → 0. However, one does expect that in the worst case, if the condition number *κ* diverges, then *ξ*⁻¹ should also diverge, as errors of constant size *ξ* on the estimate of ***u***/∥***u***∥ can lead to residual errors of divergent size *κξ* on the normalized product *G**u***/∥*G**u***∥.

FIG. 8 includes plots of the Median Frobenius condition *κ_{F}* number for 128 randomly sampled stock portfolios from the DWCF index as a function of the duality gap for portfolios of size 60, 80, 100, and 120 stocks. The shaded regions indicate the 16th to 84th percentile. Observe that the condition number appears to plateau at small values of the duality gap.

### B. Scaling of condition number

To understand the problem scaling with portfolio size, example problem instances are generated by randomly sampling n stocks from the DWCF, using returns over *m* = 2*n* time epochs (days) to construct our SOCP as in eq. (10). Parameters *q*, ***ζ***, ***w̅***, ***û*** and *M* are all chosen in the same way as described above. The Frobenius condition number of the Newton matrix is plotted as well as the preconditioned Newton matrix as a function of the duality gap in FIG. 8 for portfolios of size *n* ∈ {60, 80, 100, 120}. As previously mentioned, the condition number appears to plateau at a certain value of the duality gap, especially for the preconditioned matrix.

To help understand the asymptotic scaling of the quantum algorithm it may be helpful is to determine how the condition number scales as a function of the number of assets, as the runtime of the QLSS algorithm grows linearly with the condition number. FIG. 9 plots the Frobenius condition number *κ_{F}* as a function of n, the number of stocks, observed at duality gaps *µ* ∈ {10⁻¹, 10⁻³, 10⁻⁵, 10⁻⁷}. At duality gaps of 10⁻⁵ and 10⁻⁷, the condition number *κ_{F}* has plateaued as observed in FIG. 8. A non-linear fit to the data is performed using a power law *κ_{F} = an^{b}* model, where *a* and b are fit parameters, and the exponents b are reported in table VII. All exponents appear to be near or less than unity.

FIG. 9 is a plot of the Median Frobenius condition number *κ_{F}* for 128 randomly sampled stock portfolios from the DWCF index as a function of portfolio size for duality gaps of 10⁻¹, 10⁻³, 10⁻⁵, and 10⁻⁷. The shaded regions correspond to the 16th to 84th percentile. The lines represent power-law fits of the form *an^{b},* where the values for b are reported in table VII. In all four cases, the exponent is less than 1 and in the latter three cases it is greater than 0.9 suggesting a nearly linear-in-n trend.

### C. Scaling of tomography precision

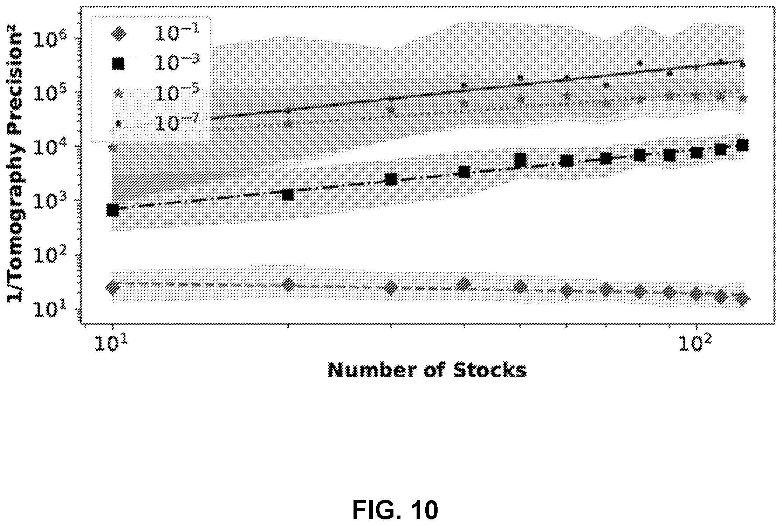

While the depth of the individual quantum circuits that compose the QIPM scales only with the Frobenius condition number, the QIPM also includes a number of repetitions of this circuit for tomography that scales as 1/*ξ*², the inverse of the tomography precision squared. To see how this scales with problem size, an analysis for *ξ*⁻² is performed similar to the analysis performed for *κ_{F}*. These results are presented in FIG. 10 for the same four duality gaps of {10⁻¹, 10⁻³, 10⁻⁵, 10⁻⁷}. To reduce the iteration-to-iteration variation in the tomography precision (which results from our adaptive approach to tomography in Algorithm 1), in calculating *ξ*⁻² at duality gap *µ*, one may take the average over the value of *ξ*⁻² at the five iterations with duality gap nearest to *µ*. The median of *ξ*⁻² can be fit at each value of n to a linear model on a log-log plot, corresponding to a relationship *ξ*⁻² = *an^{b}.* The implied exponent *b* is in table VIII. In this case, it is hard to draw robust conclusions from the fits. The fit suggests that the median of *ξ*⁻² is increasing with *n* on the interval *n* ∈ [10, 120]. However, the most striking feature of the data is that the instance-to-instance variation of *ξ*⁻² is significantly larger than that of *κ_{F}.* In fact, at *µ* = 10⁻⁷, the 84th percentile of in stances at *n* = 10, the smallest size simulated, had a larger value of *ξ*⁻² than the 50th percentile of instances at *n* = 120, the largest size simulated.

FIG. 10 is a plot of the median value of the square of the inverse tomography precision *ξ*⁻² used to remain in the neighborhood of the central path for 128 randomly sampled stock portfolios from the DWCF index as a function of portfolio size for duality gaps of 10⁻¹, 10⁻³, 10⁻⁵, and 10⁻⁷. To reduce iteration-to-iteration variation, an artifact of the adaptive approach to tomography, average over the observed value of *ξ*⁻² at the five iterations for which the duality gap is nearest the indicated value. The shaded regions correspond to the 16th to 84th percentile. Here logarithmic axes are used since (unlike for *κ_{F}*) instance-to-instance variation covers multiple orders of magnitude even for a fixed value of n. The dashed lines correspond to a linear fit to the log-log data, where the slope is reported in table VIII.

**TABLE VII. Estimated exponent parameters for the Frobenius condition number κ_{F} obtained from the fits that are plotted in FIG. 9.**

| **Duality Gap** | **Condition Number Scaling** |
|---|---|
| 10⁻¹ | 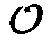 (*n*^{0.60±0.02}) |
| 10⁻³ | 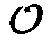 (*n*^{0.94±0.04}) |
| 10⁻⁵ | 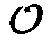 (*n*^{0.92±0.04}) |
| 10⁻⁷ | 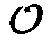 (*n*^{0.91±0.05}) |

**TABLE VIII. Estimated exponent parameters for 1/ξ² obtained from the fits that are plotted in FIG. 10.**

| **Duality Gap** | **Tomography Scaling** |
|---|---|
| 10⁻¹ | 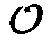 (*n*^{*-*0.19±0.05}) |
| 10⁻³ | 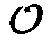 (*n*^{1.10±0.06}) 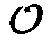 |
| 10⁻⁵ | (*n*^{0.79±0.11}) |
| 10⁻⁷ | 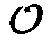 (*n*^{1.16±0.10}) |

### D. Asymptotic scaling of overall runtime

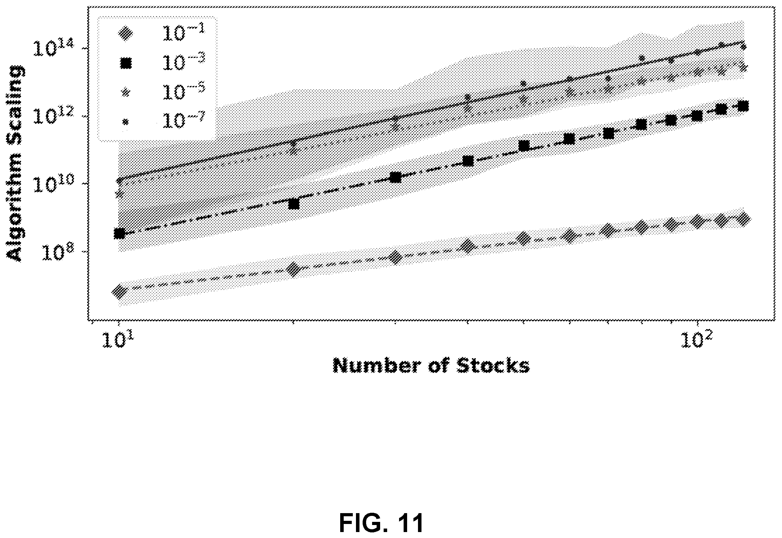

Above fits for *κ_{F}* and *ξ*⁻² as a function of *n* on the range *n* ∈ [10, 120] are provided. Here the quantity *n*^{1.5}*κ_{F}*/*ξ²* is studied, which determines the asymptotic scaling of the runtime of the QIPM. Fig. 11 plots this quantity at the same four duality gap values *µ* ∈ {10⁻¹, 10⁻³, 10⁻⁵, 10⁻⁷}. The implied exponents arising from linear fits on a log-log axis are reported in table IX. They are generally consistent with summing the exponents from the previously reported fits. The data inherit from *ξ*⁻² the feature that the instance-to-instance variation is orders of magnitude larger than the median. Taken at face value, the fits suggest that the scaling of the median algorithmic runtime on the interval *n* ∈ [10, 120] is similar to the *n*^{3.5} scaling of classical IPMs using Gaussian elimination, and worse than the asymptotic *n*^{2.87} arising from classical IPMs using fast matrix-multiplication techniques to solve linear systems (note that this scaling does not apply until *n* becomes very large, so it is not a good practical comparator). However, the large variance and imperfect fits do not give confidence that these trends can be reliably extrapolated to larger *n*. Accordingly, when actual resource counts are computed in the next subsection, the inventors stick to *n* = 100.

Ultimately, it is not essential to pin down the asymptotic scaling of the algorithm, because a determination of this work is that, even if a slight asymptotic polynomial speedup exists, the size of the constant prefactors involved in the algorithm preclude an actual practical speedup, barring significant improvements to multiple aspects of the algorithm. The next subsection elaborates on this point in a more quantitative fashion.

FIG. 11 is a plot of the median value of the estimated algorithm scaling factor computed as the median of *n*^{1.5}*κ_{F}*/*ξ²* for 128 randomly sampled stock portfolios from the DWCF index as a function of portfolio size for duality gaps of 10⁻¹, 10⁻³, 10⁻⁵, and 10⁻⁷. As in Fig. 10, over 5 consecutive points are averaged to reduce iteration-to-iteration variance deriving from adaptive tomography. Also, the actual number of observed samples are used that were used to achieve sufficient tomographic precision in place of the tomographic factor *n*/*ξ*². The shaded regions correspond to the 16th to 84th percentiles. The lines correspond to a linear fit to the log-log data, where the slope is reported in table IX.

TABLE IX shows exponent parameter estimates from the fits to the line generated by plotting *n*^{1.5}*κ_{F}*/*ξ*² in FIG. 11, which determines the overall scaling of the runtime of the QIPM. For comparison, CIPMs using Gaussian elimination have runtime 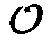 (*n*^{3.5}) and CIPMs using faster methods for solving linear systems have runtime 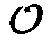 (*n*^{2.87}).

**TABLE IX**

| **Duality Gap** | **Algorithm Scaling** |
|---|---|
| 10⁻¹ | (*n*^{2.01±0.05}) |
| 10⁻³ | 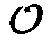 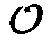 (*n*^{5.56±0.07}) 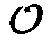 |
| 10⁻⁵ | 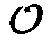 (*n*^{3.36±0.14}) |
| 10⁻⁷ | (*n*^{3.75±0.12}) |

### E. Numerical resource estimates

Rather than examine algorithmic scaling, actual resource counts for the QIPM applied to PO are computed. It is these resource counts that may matter most from a practical perspective. The total circuit size is estimated in terms of the number of qubits, *T*-depth, and *T*-count for a portfolio of 100 assets. This size is chosed because it is small enough that the entire quantum algorithm can be simulated classically. However, at this size, solving the PO problem is not classically hard; generally speaking, the PO problem becomes challenging to solve with classical methods when n is on the order of 10³ to 10⁴. A similar concrete calculation can be performed at larger n by extrapolating trends observed in the numerical simulations herein, but there is not confidence that the fits on *n* ∈ [10, 120] reported above are reliable predictors for larger *n*.

Recall that the only step in the QIPM performed by a quantum computer is the task of producing a classical estimate to the solution of a linear system to error *ξ*. The complexity of this task as it is performed within the QIPM depends on *ξ* as well as the Frobenius condition number *κ_{F}*. The first step of the calculation is to fix values for *ξ* and *κ_{F}* at *n* = 100. They are choosen by taking the median over the 128 samples in the numerical simulation at duality gap *µ* = 10⁻⁷.

Once *κ_{F}* and *ξ* are fixed, concrete values for the various other error parameters can be determined that appear in the algorithm such that overall error *ξ* can be achieved. Tomography dominates the complexity and overall error, but there are a number of other factors that contribute to the error in the final solution. The sources of error are enumerated and labeled here for completeness:
- *ε_{G}*: Error in block-encoding the matrix *G*
- *εₕ:* Error in the unitary that prepares the state |***h***〉
- *ε*ₐᵣ: Gate synthesis error for single-qubit rotations used by CR⁰(*s*) and *CR*¹(*s*) (see FIG. 5)
- *ε*: Tomography error
- *ε_{z}*: Gate synthesis error for each single-qubit rotation used for QSVT eigenstate filtering (see FIG. 2)
- *ε*_{qsp}: Error due to polynomial approximation in eigenstate filtering
- *ε*ₜₛₚ: Error in preparing the state ${\sum }_{i = 1}^{L} \sqrt{{p}_{i}} \left|i\right〉$ used for computing the signs in the tomography routine

Section IV described a quantum circuit that prepares a state |***ṽ***〉 (after postselection) for which ∥|***ṽ***〉 - |***ṽ***〉∥ ≤ *ε*_{QLSP}. If the block-encoding unitaries, state-preparation unitaries, and single-qubit rotations were perfect, then the only contribution to *ε*_{QLSP} would be from eigenstate filtering and we may have *ε*_{QLSP} ≤ *ε*_{qsp}. Note the relationship *d* = 2*κ_{F}*ln(2/*ε*_{qsp}) from proposition 2. Since the block-encoding unitary *U_{G},* the state-preparation unitary *U**ₕ***, and the single-qubit rotations are implemented imperfectly, there is additional error. In preparing the state, the unitary *U_{G}* is called 2*Q* + 2*d* times and the unitary *U**ₕ*** is called 4*Q* + 4*d* times, where *Q* is given in proposition 2. Additionally, there are 2*Q* combined appearances of CR⁰(*s*) and *CR*¹(*s*) gates, where each appearance includes two single-qubit rotations. Note that the appearances of CR⁰(*s*) and *CR*¹(*s*) within the eigenstate filtering portion of the circuit do not contribute to the error because at *s* = 1 these gates can be implemented exactly. Additionally, there are another *d* single-qubit rotations used to implement the eigenstate filtering step. Since operator norm errors add sublinearly, one can thus say that ${ε}_{QLSP} \leq {ε}_{qsp} + \left(2Q+2d\right) {ε}_{G} + \left(4Q+4d\right) {ε}_{h} + 4 {Qε}_{ar} + 2 {dε}_{z} .$ (66)

Now, the result of proposition 4 implies that, in order to assert that the classical estimate ***ṽ***' output by tomography satisfies ∥***ṽ****'* - ***v***∥ ≤ *ξ*, it suffices to have $ξ \geq ε + 1.58 \sqrt{L} {ε}_{tsp} + 1.58 \left[{ε}_{qsp}+\left(2Q+2d\right){ε}_{G}+\left(4Q+4d\right){ε}_{h}+4{Qε}_{ar}+{dε}_{z}\right] ,$ (67) where for convenience recall the definitions (ignoring the $O \left(\sqrt{{κ}_{F}}\right)$ term) of *Q* and d as $Q = 2 {Cκ}_{F}$ (68) $d = 2 {κ}_{F} ln \left(2/{ε}_{qsp}\right)$ (69) Recalling that the dominant term in the complexity of the algorithm scales as *ε*⁻² but logarithmically in the other error parameters, to minimize the complexity assign the majority of the error budget to *ε:* let *ε* = 0.9*ξ*, and split the remaining 0.1*ξ* across the remaining six terms of eq. (67). There is room for optimizing this error budget allocation, but the savings would be at most a small constant factor in the overall complexity.

Note that elsewhere in the draft, *ξ* has been referred to as "tomography precision" since *ε* will dominate the contribution to *ξ*. Here, the resource calculation uses differentiating *ε* from *ξ*, but when speaking conceptually about the algorithm, one can focus on *ξ* as it is the more fundamental parameter: it represents the precision at which the classical-input-classical-output linear system problem is solved, allowing apples-to-apples comparisons between classical and quantum approaches.

With values for *κ_{F}*, *ε_{G}*, *ε**ₕ***, *ε*_{qsp}, *ε_{z}*, and *ε*ₜₛₚ now fixed, the resource count can be completed using the expressions in table V. Note that for gate synthesis error, the following formula is used *R_{y}* = 3 log₂(1/*εᵣ*), where *R_{y}* is the number of *T* gates used to achieve an *εᵣ*-precise Clifford+*T* gate decomposition of the rotation gate. Putting this all together yields the resource estimates for a single run of the (uncontrolled) quantum linear system solver in table X at *n* = 100. We report these estimates both in terms of primitive block-encoding and state-preparation resources, as well as the raw numerical estimates. For the total runtime, the resources used for the controlled state-preparation routine may also be estimated. These quantities are estimated, but to the precision of the reported estimates, the numbers are the same as the controlled version, so they are excluded for brevity.

To estimate total runtime, our estimates are multiplied by the tomography factor *k* (for controlled and for uncontrolled) as well as the number of iterations ${N}_{it} = \left⌈ln\left(ϵ\right)/ln\left(σ\right)\right⌉$ , where *ε* is the target duality gap (which is taken to be *ε* = 10⁻⁷), and $σ = 1.0 - 1 / \left(20\sqrt{2 r}\right)$ *.* While *k* will vary from iteration to iteration, in the calculation it is assumed that the total number of repetitions is given by the simple product (2*k*)*Nᵢₜ*, which, noting that the value of *ξ* plateaus after a certain number of iterations, will give a roughly accurate estimate. Note that these 2*kNᵢₜ* repetitions need not be done coherently, in the sense that the entire system is measured and reprepared in between each repetition. One can bound the tomography factor *k* to be *k* ≤ 57.5*L*ln(*L*)/*ξ*², where *ξ* is determined empirically. However, our numerical simulations of the algorithm yield an associated value of *k* used to generate the estimate to precision *ξ*, so this numerically determined value can be used directly. The observed median value of *k* = 3.3 × 10⁸ from simulation is multiple orders of magnitude smaller than the theoretical bound. Using this substitution for *k* and *Nᵢₜ*, the results are shown in the right column of table I in the introduction.

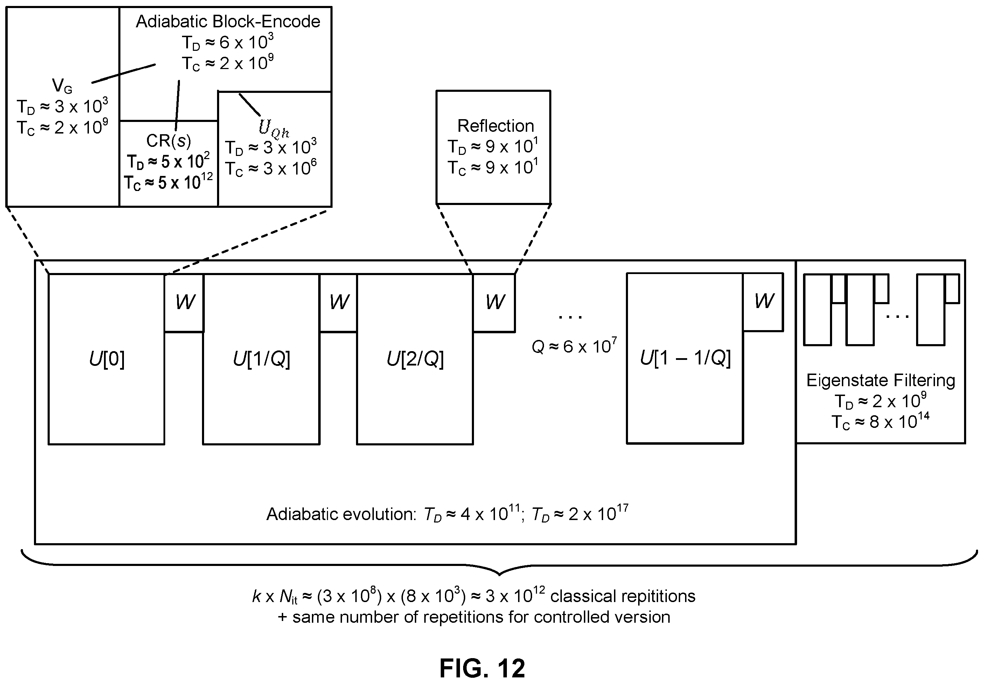

To aid in understanding which portions of the algorithm dominate the complexity, a breakdown of the resources is shown in FIG. 12. The width of the boxes is representative of the *T*-depth, while the height of the boxes represents the *T-count.* The number of classical repetitions, composed of tomography samples as well as IPM iterations used to reach a target duality gap, contributes the largest factor to the algorithmic runtime. Of these two, quantum state tomography contributes more than the iterations used to reach the target duality gap. Our exact calculation confirms that for the individual quantum circuits involved in the QLSS, the discrete adiabatic portion of the algorithm dominates over the eigenstate filtering step in its contribution to the overall quantum circuit *T*-depth. Within the adiabatic subroutine, the primary driver of the *T*-depth and *T-count* is the application of the block-encoding operator Q times (see e.g., eq. (61)), where Q is proportional to the Frobenius condition number. An additional source of a large *T*-count arises from block-encoding the linear system, which causes the *T-count* to scale as 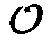 (*L*²)*.*

TABLE X shows estimated number of logical qubits *N_{Q}, T-depth T_{D},* and *T-*count *T_{C}* used to perform the quantum linear system solver (QLSS) subroutine within the QIPM running on a PO instance with *n* = 100 stocks. This calculation uses the empirically observed median value for the condition number at duality gap *µ* = 10⁻⁷, which was *κ_{F}* = 1.6 × 10⁴. The full QIPM repeats this circuit *k* = 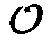 (*n*ln(*n*)*ξ*⁻²) times in each iteration to generate a classical estimate of the output of the QLSS, and also performs *Nᵢₜ* = 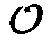 (*n*^{0.5}) iterations, where the linear system being solved changes from iteration to iteration. In the left column, the resources are written as numerical prefactors times the resources used to perform the controlled-block-encoding of the matrix *G* (denoted by a subscript *cbe*), and the state-preparation of the vector |***h***〉 (denoted by a subscript *sp*), defined in tables III and IV. Written this way, one can see the large prefactors occurring from the linear system solver portion of the algorithm. In the right column the exact resources are computed, including those coming from the block-encoding. The notation *AeB* is short for *A* × 10*^{B}.*

**TABLE X**

| **QLSS Prefactors** | **Total** |
|---|---|
| *N_{Q}* = *N_{Qcbe}* + 5 | *N_{Q}* = 8*e*6 |
| *T_{D}* = (1*e*8)*T_{Dcbe} +* (3*e*8)*T_{Dsp}* + (5*e*10) | *T_{D}* = 4*e*11 |
| *T_{C}* = (1*e*8)*T_{Ccbe}* + (3*e*8)*T_{Csp}* + (5*e*10) | *T_{C}* = 2e17 |

### VII. CONCLUSIONS

### A. Bottlenecks

The resource quantities reported are large, even for the classically easy problem size of n = 100 assets in the portfolio optimization instance. Our detailed analysis allows us to see exactly how this large number arises, which is helpful for understanding how to improve it. Several independent factors leading to the large resource estimates are outlined below.
- The block-encoding of the classical data may be called many times by the QLSS. This data is arranged in an *L* × *L* matrix (note that for a PO instance of size *n* with *m* = *2n,* the Newton linear system has size roughly *L* ≈ 14*n*)*.* These block-encodings can be implemented up to error *ε_{G}* in 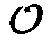 (log(*L*/*ε_{G}*)) T-depth using circuits for quantum random access memory (QRAM) as a subroutine. While the asymptotic scaling is favorable, after close examination of the circuits for block-encoding, in practice the *T*-depth can be quite large: at *n* = 100 and *ε_{G}* = 10⁻¹⁰ (it may be necessary to take *ε_{G}* very small since the condition number of *G* is quite large), block-encoding to precision *ε_{G}* has a *T*-depth of nearly 1000. Notably, this *T*-depth arises *even after implementing several new ideas to minimize the circuit depth.*
- The condition number *κ_{F}* determines how many calls to the block-encoding are to be made, and it is observed that *κ_{F}* may be quite large for the application of portfolio optimization. *Even after an preconditioning, κ_{F} is on the order of* 10⁴ *already for small SOCP instances corresponding to n* = 100 *stocks*, and empirical trends suggest it grows nearly linearly with *n*. However, additional preconditioning may significantly reduce the effective value of *κ_{F}* in this algorithm.
- The constant factor in front of the 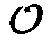 (*κ_{F}*) in QLSSs is also quite large: the theoretical analysis proves an upper bound on the prefactor of 3 × 10⁴. Numerical simulations previously performed suggested that, in practice, it can be one order of magnitude smaller than the theoretical value. Thus, the constant prefactor may be taken to be 2000 in the numerical estimates herein, which still contributes significantly to the estimate.
- Pure state tomography includes preparing many copies of the output |***v***〉 of the QLSS. This disclosure improved the constant prefactors in the theoretical analysis beyond what was known, but even with this improvement, the number of queries used to produce an estimate ***v'*** of the amplitudes of |***v***〉 up to error *ε* in *ℓ*₂ norm is 115*L*ln(*L*)/*ε*², which for *n* = 100 and *ε* = 10⁻³ is on the order of 10¹¹ (although our simulations suggest 2*k* = 7 × 10⁸ suffice in practice).
- QIPMs, like CIPMs, are iterative algorithms; the number of iterations in our implementation is roughly $20 \sqrt{2 r} ln \left({ϵ}^{- 1}\right)$, a number chosen to utilize theoretical guarantees of convergence (note that *r* ≈ 3*n*). Taking *n* = 100 and *ε* = 10⁻⁷, our implementation would use 8 × 10³ iterations. The number of iterations may be significantly decreased if more aggressive choices are made for the step size. For example, similar to the adaptive approach to tomographic precision, one may set longer step sizes first, and shorten the step size when the iteration does not succeed. This sort of optimization may apply equally to CIPMs and QIPMs.

Remarkably, the five factors described above contribute roughly equally to the overall T-depth calculation; the exception being the number of copies used to do tomography, which is a much larger number than the others. Another comment regarding tomography is that, in principle, the *k* tomographic samples can be taken in parallel rather than in series. Running in parallel leads to a huge overhead in memory: one can reduce the tomographic depth by a multiplicative factor *P* at the cost of a multiplicative factor *P* additional qubits. Note that even preparing a single copy uses the large number of nearly ten million logical qubits at *n* = 100. Moreover, it is unlikely that improvements to tomography alone may make the algorithm practical, as the other four factors still contribute roughly 10¹⁶ to the *T-*depth.

Besides the rather large constant factors pointed out above for tomography and especially for the QLSS, note that the multiplicative "log factors" that are typically hidden underneath 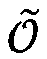 notation in asymptotic do tomography, which is a much larger number than the analyses contribute meaningfully here. For instance, the entire block-encoding depth is 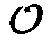 (log(*n*/*ε_{G}*)), which, in practice, is as large as 1000. Moreover, there is an additional ln(*ε*⁻¹) ≈ 16 coming from the iteration count, and a ln(*L*) ≈ 7 from tomography.

This quantitative analysis of bottlenecks for QIPMs can inform likely bottlenecks in other applications where QLSS, tomography, and QRAM subroutines are used. While some parameters such as *κ_{F}* and *ξ* are specific to the application considered here, other observations such as the numerical size of various constant and logarithmic factors (e.g., block-encoding depth) would apply more generally in other situations.

FIG. 12 is a diagram illustrating the breakdown of the quantum resources used for a single coherent run of the uncontrolled version of the quantum algorithm used to produce the state eq. (36). As in table X, take the final duality gap to be *µ* = 10⁻⁷ and the number of assets to be *n* = 100. Choices for the Frobenius condition number *κ_{F}* = 1.6 × 10⁴ and number of tomographic repetitions *k* = 3.3 × 10⁸ are informed by our numerical experiments, as discussed in section VI. A similar breakdown for the controlled version used to produce the state eq. (49) would be basically the same. The eigenstate filtering sub-circuit follows a similar alternating structure to the adiabatic evolution, with the *U*[*j*] block-encodings replaced with either *U*[1] or *U*[1]^{†}, the reflection operator *W* replaced with phase rotations, and only *d* << *Q* total number of iterations (refer to FIG. 2 for details.)

### B. Resource estimate given dedicated QRAM hardware

The bottlenecks above focused mainly on the *T*-depth and did not take into account the total *T*-count or the number of logical qubits, which are also large. Indeed, the estimate of 8 million logical qubits, as reported in table I, is drastically larger than estimates for other quantum algorithms, such as Shor's algorithm and algorithms for quantum chemistry, both of which can be on the order of 10³ logical qubits. By contrast, the current generation of quantum processors have tens to hundreds of *physical* qubits, and no logical qubits; a long way from the resources used for this QIPM.

However, note that, as for other algorithms using repeated access to classical data, the vast majority of the gates and qubits in the QIPM arise in the block-encoding circuits, which are themselves dominated by QRAM-like data-loading subcircuits. These QRAM-like sub-circuits have several special features. Firstly, they are largely composed of controlled-swap gates, each of which can be decomposed into four *T* gates that can even be performed in a single layer, given one additional ancilla and classical feed-forward capability. Furthermore, in some cases, the ancilla qubits can be "dirty", i.e., initialized to any quantum state, and, if designed correctly, the QRAM circuits can possess a natural noise resilience that may reduce the resources used for error correction. Implementing these circuits with full-blown universal and fault-tolerant hardware could be unnecessary given their special structure. Just as classical computers have dedicated hardware for RAM, quantum computers may have dedicated hardware optimized for performing the QRAM operation. Preliminary work on hardware based QRAM data structures (as opposed to QRAM implemented via quantum circuits acting on logical qubits) shows promise in this direction.

Our estimates suggest that the size of the QRAM used to solve an *n* = 100 instance of PO is one megabyte, and the QRAM size for *n* = 10⁴ (i.e., sufficiently large to potentially be challenging by classical standards) is roughly 10 gigabytes, which is comparable to the size of classical RAM one might use on a modern laptop. These numbers could perhaps be reduced by exploiting the structure of the Newton matrix, as certain blocks are repeated multiple times in the matrix, and many of the entries are zero (see eqs. (10) and (19)). Exploiting the sparsity of the matrix can lead to reduced logical qubit count and *T-*count, but not reduced *T*-depth. In fact, it may lead to non-negligible increases in the *T*-depth, since the shallowest block-encoding constructions can be hyper-optimized for low-depth, and are explicitly not compatible with exploiting sparsity.

With this in mind, one can ask the following hypothetical question: suppose access to a sufficiently large dedicated QRAM element in our quantum computer, and furthermore that the QRAM ran at a 4GHz clock speed (which is comparable to modern classical RAM); would the algorithm become more practical in this case? Under the conservative simplifying assumption that each block-encoding and state-preparation unitary uses just a *single* call to QRAM and the rest of the gates are free, a rough answer can be given by referring to the expression in table X, which states that 4 × 10⁸ total block-encoding and state-preparation queries are used. Thus, even if the rest of the estimates stay the same, the number of QRAM calls involved in just a single QLSS circuit for *n* = 100 would be 4 × 10⁸. Accounting for the fact that the QIPM involves an estimated 6 × 10¹² repetitions of similarly sized circuits, the overall number of QRAM calls used to solve the PO problem would be larger than 10²¹, and the total evaluation time would be on the order of ten thousand years. Thus, even at 4GHz speed for the QRAM, the problem remains decidedly intractable. Nonetheless, if the QIPM is made practical, it may involve specialized QRAM hardware in combination with improvements to the algorithm itself. Separate from the QLSS, a relatively small number of state preparation queries is used in tomography to create the state in eq. (50), but this number does not scale with *κ* and it is neglected in this back-of-the-envelope analysis.

### C. Comparison between QIPMs and CIPMs and comments on asymptotic speedup

The discussion above suggests that the current outlook for practicality with a QIPM is pessimistic, but simultaneously highlights several avenues by which to improve the results. Even with such improvements, if QIPMs are to one day be practical, they may need to at least have an asymptotic speedup over CIPMs. Here we comment on this possibility. A step of both QIPMs and CIPMs is the problem of computing a classical estimate of the solution to a linear system, a task that is also of broad use beyond interior point methods. Thus, we can compare different approaches to solving linear systems, and our conclusions are relevant in any application where linear systems are solved. Accordingly, in table XI, the asymptotic runtime of several approaches to solving an *L* × *L* linear system to precision *ξ* are given, including the (QLSS+tomography) approach utilized by QIPMs, as well as two classical approaches. Whereas prior literature primarily compared against Gaussian elimination (which scales as 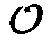 (*L*³))*,* this disclosure notes a comparison against the randomized Kaczmarz method, which scales as $O \left({Lκ}_{F}^{2}ln\left({ξ}^{- 1}\right)\right)$. This scaling comes from the fact that $2 {κ}_{F}^{2} ln \left({ξ}^{- 1}\right)$ iterations are used, and each iteration involves computing several inner products at cost 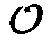 (*L*)*.* It is observed that the worst-case cost of an iteration is 4*L* floating point multiplications, meaning all the constant prefactors involved are more-or-less mild. Thus, the asymptotic quantum advantage of the QIPM is limited to an amount equal to 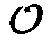 (min(*ξ*²*κ_{F}*, *ξ*²*L*²/*κ_{F}*)), which is at most 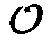 (*L*) when *κ_{F}* ∝ *L* and *ξ* = *O*(1). Encouragingly, our numerical results are consistent with *κ_{F}* ∝ *L*. However, our results are not consistent with *ξ* = 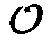 (1), suggesting instead that *ξ* is decreasing with *L*.

TABLE XI shows a comparison of time complexities of different approaches for exactly or approximately solving an *L × L* linear system with Frobenius condition number *κ_{F}* to precision *ξ*. The comparison highlights how a quantum advantage only persists when *κ_{F}* is neither too large nor too small. The constant pre-factor roughly captures the *T*-depth determined for the quantum case (the same pre-factor from Tab. VI after discounting the $20 \sqrt{2}$ IPM iteration factor) and the number of multiplications in the classical case.

**TABLE XI**

| **Solver** | **Type** | **Complexity** | **Pre-factor estimate** |
|---|---|---|---|
| QLSS+Tomography | Quantum, Approximate | *Lκ_{F}ξ*⁻² ln(*L*) ln (*κ_{F}ξ*⁻¹*L*^{14/27}) | 5 × 10⁷ |
| Gaussian Elimination | Classical, Exact | *L*³ | 1/3 |
| Randomized Kaczmarz | Classical, Approximate | ${Lκ}_{F}^{2} ln \left({ξ}^{- 1}\right)$ | 8 |

If *κ_{F}* ∝ *L* and *ξ* = 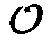 (1), it is determined a total QIPM runtime of 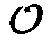 (*n*^{2.5})*,* improving over classical 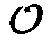 (*n*^{3.5}) for a portfolio with *n* stocks. This speedup is a material asymptotic improvement over the classical complexity, but leveraging this speedup for a *practical* advantage might still be difficult. Firstly, the difference in the constant prefactor between the quantum and classical algorithms would likely negate the speedup unless n is taken to be very large. Secondly, the speedup would necessarily be sub-quadratic. In the context of combinatorial optimization, where quadratic speedups can be obtained easily via Grover's algorithm, even a quadratic speedup is unlikely to exhibit actual quantum advantage after factoring in slower quantum clock speeds and error-correction overheads.

Our results suggest that determining a practical quantum advantage for portfolio optimization might require structural improvements to the QIPM itself. In particular, it may be helpful to explore whether additional components of the IPM can be quantized, and whether the costly contribution of quantum state tomography could be completely circumvented. Naively, circumventing tomography entirely is challenging, as it is useful (e.g., important) to retrieve a *classical* estimate of the solution to the linear system at each iteration in order to update the interior point and construct the linear system at the next iteration. Nevertheless, tomography represents a formidable bottleneck.

While our results are pessimistic on the question of whether quantum interior point methods will deliver quantum advantage for portfolio optimization (and other applications), it is our hope that by highlighting the precise issues leading to daunting resource counts, our work can inspire innovations that render quantum algorithms for optimization more practical. Finally, we conclude by noting that detailed, end-to-end resource estimations of the kind performed here may be helpful (e.g., important) for commercial viability of quantum algorithms and quantum applications. While it is helpful to discover and prove asymptotic speedups of quantum algorithms over classical, an asymptotic speedup alone does not imply practicality. For this, a detailed, end-to-end resource estimate is used, as the quantum algorithm may nevertheless be far from practical to implement.

### VIII. Additional Information

### Additional Information A: Notation

Here we list the symbols that appear in this disclosure for reference.
- Symbols related to portfolio optimization
   - n: number of stocks in the portfolio
   - ***w***: length-n vector indicating fraction of portfolio allocated to each stock (the object to be optimized)
   - *w̅*: length-*n* vector indicating current portfolio allocation
   - ***ζ***: length-*n* vector indicating maximum allowable change to portfolio
   - ***û***: length-*n* vector of average returns
   - Σ: *n × n* covariance matrix capturing deviations from average returns
   - *q*: parameter in objective function that determines relative weight of risk vs. return (eq. (3))
   - *M*: *m* × *n* matrix corresponding to the square-root of Σ, i.e. Σ = *M*^{τ}*M*
   - *m*: number of rows in *M*, often equal to the number of time epochs (section III B)
- Symbols related to second-order cone programs
   - 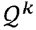 *:* second-order cone of dimension *k* (eq. (4))
   - 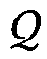 : product set of several second-order cones
   - ***e***: identity element for 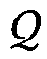 or 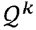 (depending on context)
   - *N*: total number of variables in the SOCP
   - *K*: total number of linear constraints in the SOCP
   - *r*: number of second-order cone constraints in the program
   - ***x***: length-*N* vector; primal variable to be optimized, constrained to 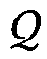
   - ***y***: length-*K* vector; dual variable to be optimized
   - ***s***: length-*N* vector, appears in dual program, constrained to 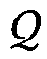
   - *A*: *K* × *N* matrix encoding linear constraints (eq. (5))
   - ***b***: length-*K* vector encoding right-hand side of linear constraints (eq. (5))
   - ***c***: length-*N* vector encoding objective function (eq. (5))
   - *µ*(***x***, ***s***): duality gap of the primal-dual point (***x***, ***s***) (eq. (7))
   - *τ*, *κ*, *θ*: additional scalar variables introduced to implement self-dual embedding (e.g., see section III C 3)
   - *µ*(***x***, *τ*, ***s***, *κ*): duality gap of the point (***x***, *τ, **s***, *κ*) of the self-dual SOCP (eq. (14))
   - *X*, *S*: arrowhead matrices for vectors ***x*** and ***s*** (eq. (21))
   - *B*: basis for null space of self-dual constraint matrix
- Symbols related to second-order cone programs for portfolio optimization
   - *ϕ*: length-n variable introduced during reduction from PO to SOCP; part of ***x*** (eq. (10))
   - ***ρ***: length-*n* variable introduced during reduction from PO to SOCP; part of ***x*** (eq. (10))
   - *t*: scalar variable introduced during reduction from PO to SOCP; part of ***x*** (eq. (10))
   - ***η***: length-*m* variable introduced during reduction from PO to SOCP; part of ***x*** (eq. (10))
- Symbols related to interior point methods (IPMs)
   - *ν*: parameterizes central path (eq. (12))
   - *d_{F}*(***x***, *τ*, ***s***, *κ*): distance of the point (***x***, *τ*, ***s***, *κ*) to the central path of the self-dual SOCP (eq. (13))
   - 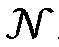 *,* 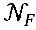 : neighborhoods of the "central path" (eqs. (27) and (28))
   - ***γ***: radius of neighborhood of central path
   - *σ*: step length parameter
   - *L*: size of (square) Newton matrix
   - *ε*: input to IPM specifying error tolerance, algorithm terminates once duality gap falls beneath *ε*
- Relations between parameters
   - Self-dual embedding has 2*N* + *K* + 3 parameters and *N* + *K* + 2 linear constraints
   - Newton matrix has size *L* = 2*N* + *K* + 3 for infeasible approach and *L* = *N* + 1 for feasible approach
   - For PO formulation in eq. (10), *N* = 3*n* + *m* + 1, *r* = 3*n* + 1, *K* = *2n* + *m* + 1
   - In our numerical experiments, we choose *m* = *2n*
- Symbols related to quantum linear system solvers
   - *G*: *L* × *L* matrix encoding linear constraints
   - ***h***: length-*L* vector encoding right-hand-side of linear constraints
   - ***u***: solution to linear system *G**u*** = ***h***
   - ***v***: normalized solution to linear system ***u***/∥***u***∥
   - *ε*_{QLSP}: error in solution to linear system
   - ***ṽ***: normalized output of the QLSS, which should satisfy ∥***v*** - ***ṽ***∥ ≤ *ε*_{QLSP}
   - *ℓ:* $\left⌈{log}_{2} L\right⌉$
   - *U_{G}:* block-encoding unitary for *G*
   - -*ℓ_{G}*: number of ancilla qubits used by *U_{G}*
   - *U**ₕ***: state-preparation unitary for |***h***〉
   - *κ_{F}*(*G*): Frobenius condition number ∥*G*∥*_{F}*∥*G*^{*-*1}∥ of *G*
   - *Q*: number of queries to *U_{G}* and *U**ₕ*** (proposition 1)
   - *C*: constant prefactor of *κ_{F}* (proposition 1)
   - *d*: the degree of the polynomial used in eigenstate filtering (proposition 2)
- Symbols related to block encoding and state preparation
   - *ε_{G}*: block-encoding error for matrix *G*
   - *ε**ₕ***: state-preparation error for vector ***h***
   - *ε*ₐᵣ: Gate synthesis error for rotations needed by CR⁰(*s*) and CR¹(*s*)
   - *ε_{z}*: Gate synthesis error for rotations needed by the QSP phases
   - *ε*_{qsp}: Error due to polynomial approximation in eigenstate filtering
   - *ε*ₜₛₚ: Error in preparing the state ${\sum }_{i = 1}^{L} \sqrt{{p}_{i}} \left|i\right〉$ needed for the tomography routine
   - *N_{Qbe}, T_{Dbe},* and *T_{Cbe}:* number of logical qubits, *T*-depth, and *T-count* required for block-encoding.
   - *N_{Qcbe}*, *T_{Dcbe}*, and *T_{Ccbe}:* number of logical qubits, *T*-depth, and *T*-count required for *controlled*-block-encoding.
   - *N_{Qsp}, T_{Dsp},* and *T_{Csp}*: number of logical qubits, *T*-depth, and *T*-count required for state preparation.
   - *N_{Qcsp}*, *T_{Dcsp}*, and *T_{Ccsp}*: number of logical qubits, *T*-depth, and *T*-count required for *controlled*-state preparation.
- Symbols related to tomography
   - *k*: number of measurements on independent copies of the state
   - *δ*: probability of failure
   - *ε:* guaranteed error of tomographic estimate
   - *ξ*: overall precision of solution to linear system, dominated by tomographic error

### Additional Information B: Deferred proofs

### 1. Quantum state tomography

*Proof of proposition 3.* Consider a single coordinate *αⱼ* with associated probability *pⱼ =* |α*ⱼ*|², and suppose *k* samples are taken to determine an estimate *p̃ⱼ* of *pⱼ*. By Bernstein's inequality, $Pr \left[\left|{{p}^{˜}}_{j}-{p}_{j}\right|>{ε}_{j}\right] \leq 2 exp \left(-\frac{{ε}^{2}}{2 \left({p}_{j}+ε/3\right)}k\right)$ (B1) and so for a given component-wise target deviation in the probability *εⱼ*, choosing $k \geq \frac{2 \left({p}_{j}+ε/3\right)}{{ε}^{2}} ln \left(2/δ′\right) = \frac{2 \left({\left|{α}_{j}\right|}^{2}+ε/3\right)}{{ε}^{2}} ln \left(2/δ′\right)$ (B2) guarantees that *Pr*[|*p̃ⱼ* - *pⱼ*| *> εⱼ*] ≤ *δ*'.

Now pick ${ε}_{j} = \sqrt{3 γ} \left|{α}_{j}\right| ε + {γε}^{2}$ for some yet undetermined *γ* > 0. With this choice $\begin{matrix}\frac{2 \left({\left|{α}_{j}\right|}^{2}+\frac{ε}{3}\right)}{{ε}^{2}} ln \left(2/δ′\right) \\ = \frac{2 \left({\left|{α}_{j}\right|}^{2}+\sqrt{\frac{γ}{3}}ε+\frac{γ}{3}{ε}^{2}\right)}{{\left(\sqrt{3 γ}\left|{α}_{j}\right|ε+{γε}^{2}\right)}^{2}} ln \left(2/δ′\right) \\ \leq \frac{2 \left({\left|{α}_{j}\right|}^{2}+2\sqrt{\frac{γ}{3}}ε+\frac{γ}{3}{ε}^{2}\right)}{3 {γε}^{2} {\left(\left|{α}_{j}\right|+\sqrt{\frac{γ}{3}}ε\right)}^{2}} ln \left(2/δ′\right) \\ = \frac{2}{3 {γε}^{2}} ln \left(2/δ′\right) ,\end{matrix}$ (B3) and hence it suffices to choose $k = \frac{2}{3 {γε}^{2}} ln \left(2/δ′\right)$. Letting *δ*' = δ/*L*, the union bound implies that for $k = \frac{2}{3 {γε}^{2}} ln \left(2L/δ\right)$, all estimates *p̃ⱼ* satisfy |*p̃ⱼ* - *pⱼ*| ≤ *εⱼ.* Now bound the distance between |*α̃ⱼ*| and |*αⱼ*|. First, $\begin{matrix}\left|{{α}^{˜}}_{j}\right| - \left|{α}_{j}\right| \leq \sqrt{{p}_{j} - ε} - \left|{α}_{j}\right| \\ = \sqrt{{\left|{α}_{j}\right|}^{2} + \sqrt{3 γ} \left|{α}_{j}\right| ε - {γε}^{2}} - \left|{α}_{j}\right| \\ \leq \left(\left|{α}_{j}\right|+\sqrt{γ}ε\right) - \left|{α}_{j}\right| \\ = \sqrt{γ} ε .\end{matrix}$ (B4)

Next, bound |*αⱼ*| - |*α̃ⱼ*|*.* If *p*_{*j* ≤} *εⱼ* then ${\left|{α}_{j}\right|}^{2} \leq \sqrt{3 γ} \left|{α}_{j}\right| ε + {γε}^{2} ⇔ \left|{α}_{j}\right| \leq \frac{\left(\sqrt{3}+\sqrt{7}\right) \sqrt{γ}}{2} ε ,$ (B5) while if *pⱼ > εⱼ*, $\begin{matrix}\left|{α}_{j}\right| - \left|{{α}^{˜}}_{j}\right| \leq \left|{α}_{j}\right| - \sqrt{{p}_{j} - {ε}_{j}} \\ = \left|{α}_{j}\right| - \sqrt{{\left|{α}_{j}\right|}^{2} - \sqrt{3 γ} \left|{α}_{j}\right| ε - {γε}^{2}} \\ < \frac{\left(\sqrt{3}+\sqrt{7}\right) \sqrt{γ}}{2} ε ,\end{matrix}$ (B6) which follows because the function $f \left(x\right) = x - \sqrt{{x}^{2} - \sqrt{3} x - 1}$ has its maximum at $f \left(\frac{\sqrt{3} + \sqrt{7}}{2}\right) = \frac{\sqrt{3} + \sqrt{7}}{2}$. Therefore with the choice $γ = {\left(\frac{\sqrt{3} + \sqrt{7}}{2}\right)}^{- 2}$, we can guarantee that |*α̃ⱼ*|-|*αⱼ*∥ ≤ *ε*, which corresponds to $k = \frac{2}{3 {γε}^{2}} ln \left(2L/δ\right) = \frac{5 + \sqrt{21}}{3 {ε}^{2}} ln \left(2L/δ\right)$ (B7) measurements.

Proof of proposition 4. Define $ε ′ = \frac{1}{\sqrt{2 L}} ε \sqrt{1 - {ε}^{2} / 4}$. Then *k* = 2.875*ε*'⁻²ln(6*L*/*δ*). Consider the following three assertions:
1. The estimates *pᵢ* satisfy $\left|\sqrt{{p}_{i}}-\left|{{v}^{˜}}_{i}\right|\sqrt{p}\right| \leq ε ′ / 3$ for all *i*.
2. The estimates ${p}_{i}^{+} = {k}_{i}^{+} / k$ satisfy $\left|\sqrt{{p}_{i}^{+}}-\frac{\left|\sqrt{p}{{v}^{˜}}_{i}+\sqrt{{p}_{i}^{′}}\right|}{2}\right| \leq ε ′ / 3 ,$ and the estimates ${p}_{i}^{-} = {k}_{i}^{-} / k$ satisfy $\left|\sqrt{{p}_{i}^{-}}-\frac{\left|\sqrt{p}{{v}^{˜}}_{i}-\sqrt{{p}_{i}^{′}}\right|}{2}\right| \leq ε ′ / 3 ,$ for all *i*.
3. The actual amplitudes $\sqrt{{p}_{i}^{′}}$ of the state created in the second step satisfy $\left|\sqrt{{p}_{i}^{′}}-\sqrt{{p}_{i}}\right| \leq {ε}_{tsp}$.

From proposition 3, we know that Assertion 1 holds with probability at least 1 - *δ*/3, and Assertion 2 holds with probability at least 1 - 2*δ*/3. Therefore both assertions hold with probability at least 1 - *δ*. Moreover, Assertion 3 holds by assumption. From here on it is assumed that all three assertions hold.

Let *aᵢ* be the real part and *bᵢ* be the imaginary part of the quantity $\sqrt{p} {{v}^{˜}}_{i}$. Let ${r}_{i}^{+} = \left|\sqrt{p}{{v}^{˜}}_{i}+\sqrt{{p}_{i}}\right|$, and ${r}_{i}^{-} = \left|\sqrt{p}{{v}^{˜}}_{i}-\sqrt{{p}_{i}}\right|$. Note that ${r}_{i}^{+}$ and ${r}_{i}^{-}$ are proportional to the absolute value of the ideal amplitudes of the state created in eq. (50). One can show that ${a}_{i} = \frac{{\left({r}_{i}^{+}\right)}^{2} - {\left({r}_{i}^{-}\right)}^{2}}{4 \sqrt{{p}_{i}}} .$ (B8) Define ${f}_{i} \left(x, y\right) = \left({x}^{2}-{y}^{2}\right) / \sqrt{{p}_{i}}$; then ${a}_{i} = {f}_{i} \left({r}_{i}^{+}/2,{r}_{i}^{-}/2\right)$*.* Note that the estimates $\sqrt{{p}_{i}^{\pm }}$ give good approximations of ${r}_{i}^{+} / 2$ and ${r}_{i}^{-} / 2$: $\left|\sqrt{{p}_{i}^{\pm }}-\frac{{r}^{\pm }}{2}\right| \leq \frac{ε ′}{3} ε + \frac{{ε}_{tsp}}{2} ,$ (B9) which follows from Assertions 2 and 3. The amplitudes *ãᵢ* that define the estimate output by the tomography algorithm are given in eq. (52), which can now be rewritten as ${{a}^{˜}}_{i} = \left\{\begin{matrix}0 , & \sqrt{{p}_{i}} \leq \frac{2}{3} ε ′ + {ε}_{tsp} ; else \\ min \left(\sqrt{{p}_{i}},{f}_{i}\left(\sqrt{{p}_{i}^{+}}, \sqrt{{p}_{i}^{-}}\right)\right) , & {f}_{i} \left(\sqrt{{p}_{i}^{+}}, \sqrt{{p}_{i}^{-}}\right) \geq 0 . \\ max \left(-\sqrt{{p}_{i}},{f}_{i}\left(\sqrt{{p}_{i}^{+}}, \sqrt{{p}_{i}^{-}}\right)\right) , & {f}_{i} \left(\sqrt{{p}_{i}^{+}}, \sqrt{{p}_{i}^{-}}\right) < 0\end{matrix}\right.$ (B10)

We prove that the *ãᵢ* values approximate the *aᵢ* values, specifically $\left|{{a}^{˜}}_{i}-{a}_{i}\right| \leq ε ′ + {ε}_{tsp} + \left|{b}_{i}\right| .$ (B11) We will prove it using a case-by-case analysis. Assume that *aᵢ* ≥ 0; the case *aᵢ* < 0 will proceed similarly.

First, consider the case $\sqrt{{p}_{i}} \leq \frac{2}{3} ε ′ + {ε}_{tsp}$. In this case *ãᵢ* = 0 and ${a}_{i} \leq \sqrt{p} \left|{{v}^{˜}}_{i}\right| \leq \sqrt{{p}_{i}} + \frac{ε ′}{3} \leq ε ′ + {ε}_{tsp}$ , so |*ãᵢ* - *aᵢ*| ≤ *ε* + *ε*ₜₛₚ.

Second, consider the case ${f}_{i} \left(\sqrt{{p}_{i}^{+}}, \sqrt{{p}_{i}^{-}}\right) \geq {a}_{i}$. From the definition of *ãᵢ* and Assertion 1, we have ${{a}^{˜}}_{i} \leq \sqrt{{p}_{i}} \leq \sqrt{p} \left|{{v}^{˜}}_{i}\right| + \frac{ε ′}{3}$, and thus $\begin{matrix}{{a}^{˜}}_{i} - {a}_{i} \leq \sqrt{p} \left|{{v}^{˜}}_{i}\right| - {a}_{i} + \frac{ε ′}{3} \\ = \sqrt{{a}_{i}^{2} + {b}_{i}^{2}} - {a}_{i} + \frac{ε ′}{3} \leq \left|{b}_{i}\right| + \frac{ε ′}{3} .\end{matrix}$ (B12) We also have (again invoking Assertion 1) ${a}_{i} - {{a}^{˜}}_{i} \leq {a}_{i} - \sqrt{{p}_{i}} \leq {a}_{i} - \sqrt{p} \left|{{v}^{˜}}_{i}\right| + \frac{ε ′}{3} \leq \frac{ε ′}{3}$ (B13) and thus, $\left|{a}_{i}-{{a}^{˜}}_{i}\right| \leq \left|{b}_{i}\right| + \frac{ε ′}{3}$.

Additionally, consider the case ${f}_{i} \left(\sqrt{{p}_{i}^{+}}, \sqrt{{p}_{i}^{-}}\right) < {a}_{i}$. Defining ${ε}^{˜} = \frac{2}{3} ε ′ + {ε}_{tsp}$, we can lower bound ${f}_{i} \left(\sqrt{{p}_{i}^{+}}, \sqrt{{p}_{i}^{-}}\right)$: $\begin{matrix}{f}_{i} \left(\sqrt{{p}_{i}^{+}}, \sqrt{{p}_{i}^{-}}\right) = \frac{{\left(2\sqrt{{p}_{i}^{+}}\right)}^{2} - {\left(2\sqrt{{p}_{i}^{+}}\right)}^{2}}{4 \sqrt{{p}_{i}}} \\ \geq \frac{{\left({r}_{i}^{+}-{ε}^{˜}\right)}^{2} - {\left({r}_{i}^{-}+{ε}^{˜}\right)}^{2}}{4 \sqrt{{p}_{i}}} \\ = \frac{{\left({r}_{i}^{+}\right)}^{2} - {\left({r}_{i}^{-}\right)}^{2}}{4 \sqrt{{p}_{i}}} - {ε}^{˜} \frac{{r}_{i}^{+} + {r}_{i}^{-}}{2 \sqrt{{p}_{i}}} \\ = {a}_{i} - {ε}^{˜} \frac{{r}_{i}^{+} + {r}_{i}^{-}}{2 \sqrt{{p}_{i}}} .\end{matrix}$ (B14) Here in the second line we used eq. (B9) and the fact that ${r}_{i}^{+} \geq \sqrt{{p}_{i}} \geq \frac{2}{3} ε ′ + {ε}_{tsp}$. We now upper bound ${r}_{i}^{+} + {r}_{i}^{-}$: $\begin{matrix}{r}^{+} + {r}^{-} = \sqrt{{\left({a}_{i}+\sqrt{{p}_{i}}\right)}^{2} + {b}_{i}^{2}} + \sqrt{{\left({a}_{i}-\sqrt{{p}_{i}}\right)}^{2} + {b}_{i}^{2}} \\ \leq \left|{a}_{i}+\sqrt{{p}_{i}}\right| + \left|{a}_{i}-\sqrt{{p}_{i}}\right| + 2 \left|{b}_{i}\right| \\ = 2 max \left({a}_{i}, \sqrt{{p}_{i}}\right) + 2 \left|{b}_{i}\right| \\ \leq 2 \left(\sqrt{{p}_{i}}+ε′/3+\left|{b}_{i}\right|\right) ,\end{matrix}$ (B15) where in the fourth line we used ${a}_{i} \leq \sqrt{{a}_{i}^{2} + {b}_{i}^{2}} = \sqrt{p} \left|{v}^{˜}\right| \leq \sqrt{{p}_{i}} + ε ′ / 3$ (Assertion 1). Therefore, $\begin{matrix}{f}_{i} \left(\sqrt{{p}_{i}^{+}}, \sqrt{{p}_{i}^{-}}\right) = {a}_{i} - {ε}^{˜} \frac{{r}_{i}^{+} + {r}_{i}^{-}}{2 \sqrt{{p}_{i}}} \\ \geq {a}_{i} - {ε}^{˜} \frac{2 \left(\sqrt{{p}_{i}}+ε′/3+\left|{b}_{i}\right|\right)}{2 \sqrt{{p}_{i}}} \\ = {a}_{i} - {ε}^{˜} - \frac{{ε}^{˜}}{\sqrt{{p}_{i}}} \left(ε′/3+\left|{b}_{i}\right|\right) \\ \geq {a}_{i} - \left(ε′+{ε}_{tsp}+\left|{b}_{i}\right|\right) ,\end{matrix}$ where in the fourth line we used ${ε}^{˜} / \sqrt{{p}_{i}} \leq 1$. This implies $\begin{matrix}\left|{{a}^{˜}}_{i}-{a}_{i}\right| = {a}_{i} - {{a}^{˜}}_{i} \\ \leq {a}_{i} - min \left({f}_{i}\left(\sqrt{{p}_{i}^{+}}, \sqrt{{p}_{i}^{-}}\right),\sqrt{{p}_{i}}\right) \\ \leq ε ′ + {ε}_{tsp} + \left|{b}_{i}\right| .\end{matrix}$ (B17) Here, we used ${a}_{i} - \sqrt{{p}_{i}} \leq \sqrt{p} \left|{{v}^{˜}}_{i}\right| - \sqrt{{p}_{i}} \leq ε ′ / 3$*.*

We've shown that |*ãᵢ*| - *aᵢ*| ≤ *ε'* + *ε*ₜₛₚ + |*bᵢ*| for all cases. Therefore, $\begin{matrix}{\left‖{a}^{˜}-a\right‖}_{2}^{2} \leq {\sum }_{i} \left[{\left(ε′+{ε}_{tsp}\right)}^{2}+2\left|{b}_{i}\right|\left(ε′+{ε}_{tsp}\right)+{b}_{i}^{2}\right] \\ \leq L {\left(ε′+{ε}_{tsp}\right)}^{2} + 2 \left(ε′+{ε}_{tsp}\right) \sqrt{L {\sum }_{i} {b}_{i}^{2}} + {\sum }_{i} {b}_{i}^{2} \\ = {\left(\sqrt{L}\left(ε′+{ε}_{tsp}\right)+\sqrt{{\sum }_{i} {b}_{i}^{2}}\right)}^{2} ,\end{matrix}$ (B18) and hence $\begin{matrix}{\left‖{a}^{˜}-\sqrt{p}v\right‖}_{2} \leq {\left‖{a}^{˜}-a\right‖}_{2} + {\left‖a-\sqrt{p}v\right‖}_{2} \\ \leq \sqrt{L} \left(ε′+{ε}_{tsp}\right) + \sqrt{{\sum }_{i} {b}_{i}^{2}} + \sqrt{{\sum }_{i} {\left(\sqrt{p}{v}_{i}-{a}_{i}\right)}^{2}} \\ \leq \sqrt{L} \left(ε′+{ε}_{tsp}\right) + \sqrt{2 p} {ε}_{QLSP} ,\end{matrix}$ (B19) where we used ${\sum }_{i} \left({\left({v}_{i}-{a}_{i}/\sqrt{p}\right)}^{2}+{b}_{i}^{2}/p\right) \leq {ε}_{QLSP}^{2}$. Since ***ṽ*'** ∝ ***ã***, for some proportionality factor *λ* we have $\left‖λ{v}^{˜}′-v\right‖ \leq \sqrt{2 L} \left(ε′+{ε}_{tsp}\right) + \sqrt{2} {ε}_{QLSP}$, where we used *p* ≤ 1/2. A bit of geometry will show that if ∥***c*** - ***d***∥₂ ≤ *γ* < 1 and ∥***d***∥₂ **=** 1, then ${\left‖\frac{c}{{\left‖c\right‖}_{2}}-d\right‖}_{2} \leq g \left(γ\right) ≡ 2 sin \left(\frac{1}{2}{sin}^{- 1}γ\right) = \sqrt{1 + γ} - \sqrt{1 - γ}$ . Applying this with ***c*** = *λ****ṽ*'** and ***d*** = ***v*** we obtain $\begin{matrix}{\left‖{v}^{˜}′-v\right‖}_{2} \\ \leq g \left(\sqrt{2 L}\left(ε′+{ε}_{tsp}\right)+\sqrt{2}{ε}_{QLSP}\right) \\ < g \left(\sqrt{2 L}ε′\right) \\ {\left.+\left(\sqrt{2 L}{ε}_{tsp}+\sqrt{2 L}{ε}_{QLSP}\right)\frac{dg}{dx}\right|}_{x = \sqrt{2 L} \left(ε′+{ε}_{tsp}\right) + \sqrt{2} {ε}_{QLSP}} \\ < ε + 1.58 \sqrt{L} {ε}_{tsp} + 1.58 {ε}_{QLSP}\end{matrix}$ (B20) In the second inequality we used the convexity of *g*; in the third inequality we used the fact that $g \left(\sqrt{2 L}ε′\right) = ε , \sqrt{2 L} \left(ε′+{ε}_{tsp}\right) + \sqrt{2} {ε}_{QLSP} < ε + \sqrt{2 L} {ε}_{tsp} + \sqrt{2} {ε}_{QLSP} \leq$ 1/2, and $\sqrt{2} g ′ \left(1/2\right) < 1.58$.

### Additional Information C: Null space matrix for portfolio optimization

In section III C, an inexact-feasible interior point method was described that uses as input a matrix *B* with columns that form a basis for the null space of the feasibility equations for the self-dual SOCP that appear in eq. (19). A straightforward way to find such a *B* in general may be to perform a QR decomposition of the constraint matrix, costing classical *O*(*N*³) runtime (or, using techniques for fast matrix multiplication, between *O*(*N*²) and *O*(*N*³) time). The upshot is that *B* can only be computed once and does not change with each iteration of the algorithm, but depending on other parameters of the problem, this classical runtime may dominate the overall complexity. Alternatively, in many specific cases including ours, a valid matrix *B* can be determined by inspection. For example, suppose that we have a (*N* - *K*) × *N* matrix *Q_{A}* with full column rank for which *AQ_{A}* = 0, a *K* × (*K* - 1) matrix P with full column rank for which ***b̅***^{τ}*P* = 0, and a point ***x***₀ for which *A**x***₀ = ***b**.* Then, letting *γ* = ***b***^{τ}***b̅***/∥***b̅***∥**²**, a valid choice for *B* is $B = \begin{matrix}x \\ y \\ τ \\ θ \\ s \\ κ\end{matrix} \left(\begin{matrix}0 & {Q}_{A} & e & {x}_{0} \\ P & \overline{b} \frac{{\overline{c}}^{⊤} {Q}_{A}}{{\left‖\overline{b}\right‖}^{2}} & - \frac{\left(r+1\right)}{{\left‖\overline{b}\right‖}^{2}} \overline{b} & \frac{{\overline{c}}^{⊤} {x}_{0} - \overline{z}}{{\left‖\overline{b}\right‖}^{2}} \overline{b} \\ 0 & 0 & 1 & 1 \\ 0 & 0 & 1 & 0 \\ - {A}^{⊤} P & - {A}^{⊤} \overline{b} \frac{{\overline{c}}^{⊤} {Q}_{A}}{{\left‖\overline{b}\right‖}^{2}} & \frac{r + 1}{{\left‖\overline{b}\right‖}^{2}} {A}^{⊤} \overline{b} + e & \frac{- \overline{c} {x}_{0} + \overline{z}}{{\left‖\overline{b}\right‖}^{2}} {A}^{⊤} \overline{b} + c \\ {b}^{⊤} P & \left(γ-1\right) {c}^{⊤} {Q}_{A} - γ {e}^{⊤} {Q}_{A} & 1 - γ \left(r+1\right) & - γ \overline{z} + \left(γ-1\right) {c}^{⊤} {x}_{0} - γ {e}^{⊤} {x}_{0}\end{matrix}\right)$ (C1) The leftmost column in the above block matrix corresponds to *K* - 1 basis vectors formed by choosing ***y*** to be a vector perpendicular to ***b̅*** and ***x*** = **0**, *τ* = *θ* = 0. The second column corresponds to *N* - *K* vectors formed by choosing ***x*** to be in the null space of *A*, and letting *τ* = *θ* = 0, with $y = \frac{{\overline{c}}^{τ} x}{{\left‖\overline{b}\right‖}^{2}} \overline{b}$. The third column corresponds to the vector formed by choosing ***x** = **e***, τ = *θ* = 1, and then $y = \frac{- \left(r+1\right)}{{\left‖\overline{b}\right‖}^{2}} \overline{b}$*.* The final column corresponds to choosing ***x** = **x***₀, *τ* = 1, *θ* = 0, and $y = \frac{{\overline{c}}^{τ} {x}_{0} - \overline{z}}{{\left‖\overline{b}\right‖}^{2}} \overline{b}$*.* In each case, the choices of ***x***, ***y***, *τ*, and *θ* uniquely determine the values of ***s*** and *κ*. Note that in practice the second and fourth block rows of *B* can be ignored because in eq. (22) they are left-multiplied by a matrix whose second and fourth block columns are zero.

What remains is to specify *P, Q_{A},* and ***x***₀ for the case of portfolio optimization, given in eq. (10). Finding a valid matrix *P* is straightforward. Note that from eq. (10), we have ***b*** = (**1**; ***w̅** + **ζ***; ***w̅** - **ζ***; **0**). For *j* = 1, ··· , 2*n*, let ***p**ⱼ* have a 1 in its first entry, and a - 1/*b*_{*j+*1} in its (*j* + 1)th entry, with zeros elsewhere. For *j* = 2*n* + 1, ··· , 2*n* + *m*, let ***p**ⱼ* have a single 1 in its (*j* + 1)th entry, and zeros elsewhere. Thus, the ***p**ⱼ* are independent and ***b***^{τ}***p**ⱼ* = 0 for all *j*. Then define the matrix *P* by *P =* (***p***₁, *···* , ***p***_{2*n*+*m*}). Similarly, the columns of a valid matrix *Q_{A}* can be generated as follows: given a choice of ***w*** such that **1**^{τ}***w*** = 0, choose *ϕ* = -***w***, ***ρ*** = ***w***, *t* = 0, and ***η*** = *M**w**.* As there are *n* - 1 linearly independent choices **o**f ***w*** (e.g. the vectors (1; -1; 0; 0; ··· ; 0), (0; 1; -1; 0; ··· ; 0), (0; 0; 1; -1; ··· ; 0), etc.), this leads to *n* - 1 linearly independent columns of *Q_{A}.* A final nth column can be formed by choosing *t* = 1 and ***w*** = *ϕ* = ***ρ*** = **0** and ***η*** = **0**. Next, the point ***x***₀ can be chosen by letting ***w** = **w̅***, *ϕ* = ***ρ*** = ***ζ***, *t* = 0, and ***η** = M**w̅**.*

### Additional Information D: Alternative search directions

The solution (**Δ*x***; **Δ*y***; Δ*τ*; Δ*θ*; **Δ*s***; Δ*κ*) to the Newton systems in eqs. (19) and (22) is one possible *search direction* for the interior point method. Alternative search directions can be found by applying a scale transformation to the convex set. For the *k-*dimensional second-order cone 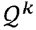 *,* define the set ${G}^{k} = \left\{λT:λ>0,{T}^{τ}\left(\begin{matrix}1 & 0 \\ 0 & - I\end{matrix}\right)T=\left(\begin{matrix}1 & 0 \\ 0 & - I\end{matrix}\right)\right\} .$ (D1) For the product *Q* of multiple cones, let the set 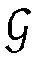 include of direct sums of entries from 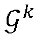 *.* This definition implies that the matrices *G* ∈ 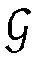 map the set 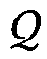 onto itself. Thus for a fixed choice *G* ∈ 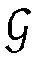 *,* consider a change of variables ***x'** = G*^{τ}***x***, ***s'** = G*⁻¹***s***, ***y**'* = ***y**.* Let *X'* and *S'* be the arrowhead matrices for ***x***' and ***s**'*, and, following the same logic as above, the following Newton system is arrived at: $\left(\begin{matrix}S ′ {G}^{⊤} & 0 & 0 & 0 & X ′ {G}^{- 1} & 0 \\ 0 & 0 & κ & 0 & 0 & τ\end{matrix}\right) \left(\begin{matrix}Δ x \\ Δ y \\ Δ τ \\ Δ θ \\ Δ s \\ Δ κ\end{matrix}\right) = \left(\begin{matrix}σμ e - X ′ S ′ e \\ σμ - κτ\end{matrix}\right) .$ (D2) The solution to this linear set of equations (along with the feasibility equations of eq. (19)) is distinct for different choices of *G.* The choice *G* = *I* recovers eq. (22) and is called the Alizadeh-Haeberly-Overton (AHO) direction. Note that the IPM can reduce the duality gap by a constant factor after $O \left(\sqrt{r}\right)$ iterations for any choice of *G*. However, some choices of *G* can yield additional potentially desirable properties; for example, the Nesterov-Todd search direction scales the cone such that ***x'*** = ***s'***. However, in the numerical simulations of the QIPM, no obvious benefits of choosing a search direction were observed other than the AHO direction.

### Additional Information E: Numerical results for feasible QIPMs

Section VI presented numerical results for the "II-QIPM," for which intermediate points could be infeasible. Here we also present some results for two variants of the "feasible" QIPM, denoted by "IF-QIPM" and "IF-QIPM-QR," as summarized in table II. The IF-QIPM uses the null space basis *B* outlined in Additional Information C, whereas the IF-QIPM-QR version uses a null space basis *B* determined using a QR decomposition. In all cases, the algorithm was simulated for enough iterations to reduce the duality gap to 10⁻³, whereas for the II-QIPM it was simulated down to 10⁻⁷.

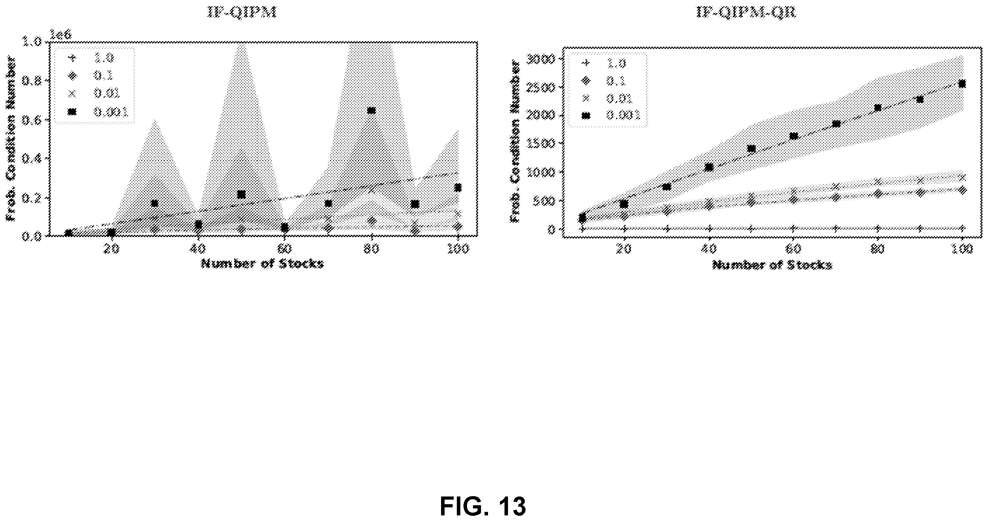

In FIGS. 13 to 15, the analogous results for the feasible IPMs are presented as were displayed in FIGS. 9 to 11 for the infeasible case. The IF-QIPM-QR has the best performance, though this should be weighed against the fact that an expensive QR decomposition was classically pre-computed to implement this method. However, the advantage of the IF-QIPM-QR method is not large enough for any of the qualitative conclusions in section VII to change. The IF-QIPM method has the worst performance, which may be due to the fact that the null-space basis found by inspection turns out to be a very ill-conditioned matrix (its condition number was observed to be in the vicinity of 1000). Additionally, the IF-QIPM appears to have the largest instance-to-instance variation of any of the methods, leading to lower quality numerical fits.

FIG. 13 includes two plots of the Median Frobenius condition number for 128 randomly sampled stock portfolios from the DWCF index as a function of portfolio size for duality gaps of 1.0, 0.1, 0.01, and 0.001. The error bars show the 68th percentile, which corresponds to one standard deviation if the distribution is Gaussian. A linear trend appears to work quite well for the IF-QIPM-QR case, but the IF-QIPM is quite noisy. For each duality gap, a power-law fit of the form *an^{b}* is also ploted. The values of *b* are in table XII.

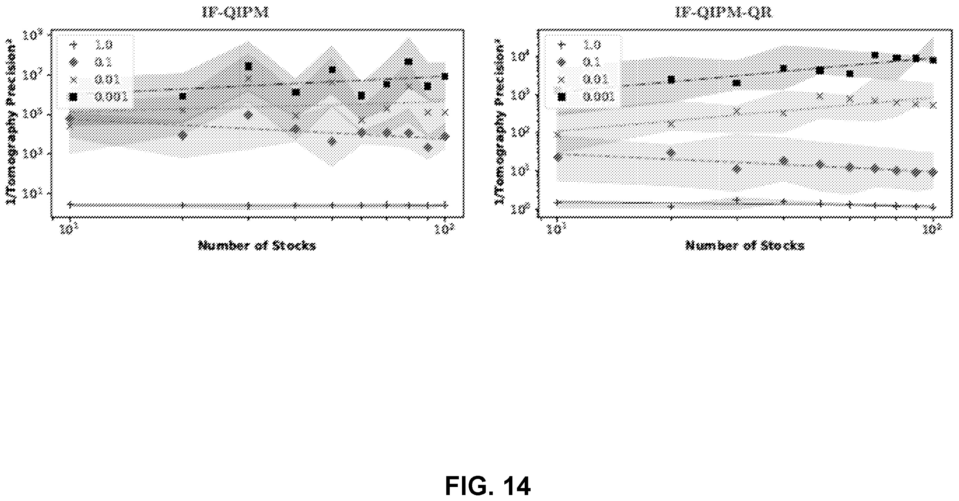

FIG. 14 includes two plots of the Median value of the square of the required inverse tomography precision used to remain in the neighborhood of the central path for 128 randomly sampled stock portfolios from the DWCF index as a function of portfolio size for duality gaps of 1.0, 0.1, 0.01, and 0.001. The error bars show the 68th percentile, which corresponds to one standard deviation if the distribution is Gaussian. For each duality gap, a linear fit on the log-log data is also ploted. The corresponding slope is in table XIII.

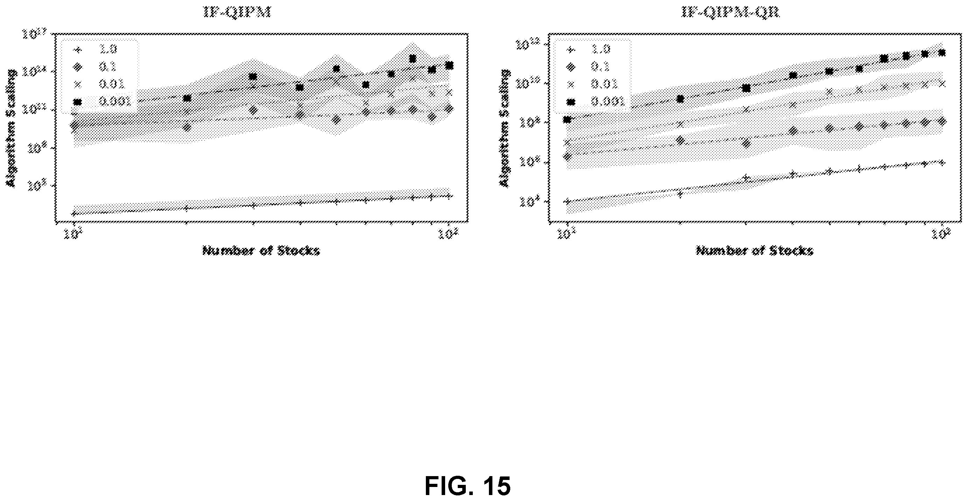

FIG. 15 includes two plots of the Median value of the estimated algorithm scaling factor computed as the median of *n*^{1.5}*κ_{F}*/*ξ*² for 128 randomly sampled stock portfolios from the DWCF index as a function of portfolio size for duality gaps of 1.0, 0.1, 0.01, and 0.001. The error bars show the 68th percentile, which corresponds to one standard deviation if the distribution is Gaussian. For each duality gap, a linear fit on the log-log data is also ploted. The corresponding slope is in table XIV.

TABLE XII sjpws fit parameters for the Frobenius condition number for the four horizontal-axis locations considered on the scaling plot of FIG. 13. The uncertainties correspond to one standard deviation errors on the parameter estimates from the fit. We note that both versions have similar empirical scaling, although the fits are better for IF-QIPM-QR. The constant prefactors are superior for the IF-QIPM-QR version, but calculating the QR decomposition requires a one-time classical cost proportional to 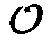 (*L*³)*.*

TABLE XIII shows fit parameters for the square of the inverse of the required tomography precision to stay near the central path, corresponding to fig. 14. The uncertainties correspond to one standard deviation errors on the parameter estimates from the fit.

TABLE XIV shows estimated scaling of the quantum algorithm as a function of portfolio size for the two feasible versions of the quantum algorithm, corresponding to fig. 15. The uncertainties correspond to one standard deviation errors on the parameter estimates from the fit.

**TABLE XII**

| **Dual. Gap** | **IF-QIPM** | **IF-QIPM-QR** |
|---|---|---|
| 1.0 | *κ_{F}*(*G*)*~n*^{0.57±0.60} | *κ_{F}*(*G*)~*n*^{0.228±0.002} |
| 0.1 | *κ_{F}*(*G*)~*n*^{0.58+0.28} | *κ_{F}*(*G*)~*n*^{0.66±0.03} |
| 0.01 | *κ_{F}*(*G*)~*n*^{0.81±0.53} | *κ_{F}*(*G*)~*n*^{0.73±0.03} |
| 0.001 | *κ_{F}*(*G*)~*n*^{1.01±0.77} | *κ_{F}*(*G*)~*n*^{0.98±0.04} |

**TABLE XIII**

| **Dual. Gap** | **IF-QIPM** | **IF-QIPM-QR** |
|---|---|---|
| 1.0 | *ξ*⁻²~ 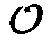 (*n*^{-0.01±0.02}) | *ξ*⁻²~ 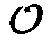 (*n*^{-0.11±0.07}) |
| 0.1 | *ξ*⁻²~ 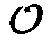 (*n*^{-0.99±0.41}) | *ξ*⁻²~ 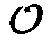 (*n*^{-0.46±0.11}) |
| 0.01 | *ξ*⁻²~ 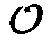 (*n*^{-0.53±0.91}) | *ξ*⁻²~ 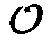 (*n*^{-0.89±0.15}) |
| 0.001 | *ξ*⁻²~ 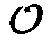 (*n*^{-0.93±0.66}) | *ξ*⁻²~ 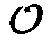 (*n*^{-0.90±0.15}) |

**TABLE XIV**

| **Dual. Gap** | **IF-QIPM** | **IF-QIPM-QR** |
|---|---|---|
| 1.0 | 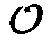 (*n*^{1.41±0.01}) | (*n*^{2.07±0.15}) |
| 0.1 | 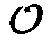 (*n*^{1.23±0.40}) | 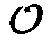 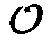 (*n*^{1.77±0.15}) 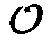 |
| 0.01 | 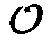 (*n*^{2.87±0.91}) | (*n*^{3.13±0.18}) |
| 0.001 | 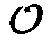 (*n*^{3.54±0.64}) | 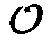 (*n*^{3.50±0.10}) |

The above sections describe example embodiments for purposes of illustration only. Any features that are described as essential, necessessary, required, important, or otherwise implied to be required should be interpreted as only being required for that embodiment and are not necessarily included in other embodiments.

Additionally, the above sections often use the phrase "we" (and other similar phases) to reference an entity that is performing an operation (e.g., a step in an algorithm). These phrases are used for convenience. These phrases may refer to a computing system (e.g., computing system 1700) that is performing the described operations.

### IX. Example Methods

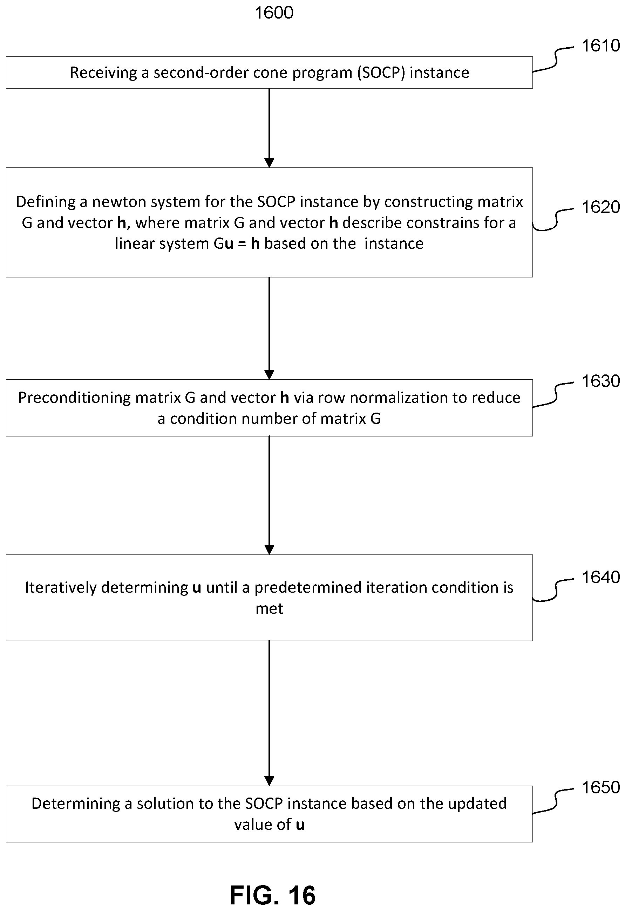

FIG. 16 is a flowchart of an example method 1600, specifically a quantum interior point method (QIPM), for solving a second-order cone program (SOCP) instance using a quantum computing system, according to one or more embodiments. As previously described, a QIPM includes one or more quantum operations that provide a computational advantage over other methods of solving SOCP instances. Specifically, the algorithmic complexity for the quantum method can be better (in some ways) than the classical method. The classical method scales as *n*^{3.5}log (1/*ε*) and the quantum algorithm scales as *n*^{1.5}*k_{F}*log(1/*ε*)/*ξ*².

In the example of FIG. 16, the method 1600 is performed from the perspective of a computing system (e.g., 1700) including a quantum computing system (e.g., 1720). The method 1600 can include greater or fewer steps than described herein. Additionally, the steps can be performed in different order, or by different components than described herein. In some embodiments, the method 1600 is performed by the computing system executing code stored on a (e.g., non-transitory) computer-readable storage medium that causes the computing system to perform the steps of method 1600. Algorithm 1 is an example of method 1600. In some embodiments, one or more steps of the method can be used to determine solutions for optimization problems other than a SOCP.

At step 1610, the computing system receives the SOCP instance (e.g., see input of Algorithm 1). The SOCP instance may include quantities (A, ***b**, c*) as described with respect to eq. 10. The computing system may also receive a list of cone sizes (N₁,...,Nᵣ) and a tolerance *ε* (also referred to as precision *ε*). In some embodiments, computing system receives the SOCP instance with *N>0* variables, *K>0* linear constraints, *r>0* second-order cone constraints, and the tolerance parameter *ε*, where matrix A of the SOCP instance is a *K* × *N* matrix encoding linear constraints, vector ***b*** is a length-*K* vector encoding right-hand side of linear constraints, and vector c is a length-*N* vector encoding an (e.g., objective) function (e.g., see eq. (5)).

At step 1620, the computing system defines a Newton system for the SOCP instance by constructing matrix *G* and vector ***h*** (e.g., steps 4 and 5 of Algorithm 1). Matrix *G* and vector ***h*** describe constrains for a linear system *Gu = **h*** based on the SOCP instance. Defining the system in this way enables the benefits of the quantum approach over classical approaches to be realized.

At step 1630, the computing system preconditiones matrix *G* and vector **h** via row normalization to reduce a condition number of matrix *G* (e.g., steps 6-10 of Algorithm 1). Among other advantages, preconditioning matrix *G* and vector ***h*** reduces their computational complexity (due to the reduced condition number), which reduces computational time.

Preconditioning matrix *G* and vector ***h*** may include determining a diagonal matrix *D* where at least one (e.g., each or every) entry *Dᵢᵢ* is equal to the norm of row *i* of matrix *G*. After determining the the matrix *D,* matrix *G* and vector ***h*** may be redefined according to: *G = D⁻¹G* and *h= D⁻¹**h**,* where *D⁻¹G* has a condition number less that the condition number of previous/original matrix *G*. More information on preconditioning can be found above at, for example, sections I B and V A.

At step 1640, the computing system iteratively determines ***u*** until a predetermined iteration condition is met. For example, see steps 13-18 of Algorithm 1, where in this context *u* is (*x'; y'; τ'; θ'; s';* 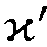 *'*) and the predetermine iteration condition is *(x'; y'; τ'; θ'; s';* 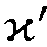 *')* ∈ 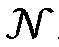 (*γ*)). The iterations may include:

The iterations of step 1640 may include causing the quantum computing system to apply matrix *G* and vector ***h*** to a quantum linear system solver (QLSS) to generate a quantum state (e.g., part of step 15 of Algorithm 1). Causing the quantum computing system to apply matrix *G* and vector *h* to the QLSS to generate the quantum state may include *k > 0* applications of the QLSS and *k* controlled-applications of the QLSS to generate the quantum state. Causing the quantum computing system to apply matrix *G* and vector ***h*** to the QLSS may include causing the quantum computing system to execute a quantum circuit. More information on the QLSS can be found above at, for example, section IV B.

The QLSS may operate on a block encoded version of matrix *G* and a state-prepared version of vector ***h*.** To do this, the method 1600 may include causing matrix *G* to be block encoded onto the quantum computing system and the vector ***h*** to be state encoded onto the quantum computing system. As previously described, block-encodings enable quantum algorithms (the QLSS in this case) to coherently access classical data (*G* and ***h*** in this case). More information on block encoding can be found above at, for example, sections I B and IV C.

The interations of step 1640 may include causing the quantum computing system to perform quantum state tomography on the quantum state (e.g., part of step 15 (e.g., step 27) of Algorithm 1). Causing the quantum computing system to perform quantum state tomography may include causing the quantum computing system to execute a quantum circuit. Conceptually, the quantum state tomography "reads out" the results of calculations "stored" in the quantum state.

The output of the of the quantum state tomography may be a unit vector ***ṽ'*** indicating an iteration direction for *u* (e.g., ***ṽ'*** is (Δ*x;* Δ***y**;* Δ*τ;* Δ*θ;* Δ***s**;* Δ 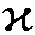 ) of Algorithm 1). The unit vector ***ṽ'*** may be characterized by ∥***ṽ****'* - ***v***∥ ≤ *ξ* with probability equal to or greater than a predetermined probability threshold (e.g., probability at least 1-δ, where δ is, for example, 0.1), where v ∝ *G⁻¹h and ξ* is a tomography precision parameter (e.g., see steps 24 and 28 of Algorithm 1).

In some embodiments, the quantum state tomography is performed according to a tomography precision parameter *ξ* that decreases with each new iteration (e.g., see *ξ* in Algorithm 1). The tomography precision parameter *ξ* may decrease by *ξ*/2 with each new iteration (see e.g., step 14 of Algorithm 1). More information on quantum tomography can be found above at, for example, sections IV D and V A.

The interations of step 1640 may include updating a value of u based on a current value of *u* and the output of the quantum state tomography (e.g., steps 16-17 of Algorithm 1). For example, updating the value of u may include determining an updated step length σ ≠ *0* based on the unit vector ***ṽ'***, and adding the current value of *u* to the product of: (1) the updated step length σ and (2) the unit vector v' (e.g., see steps 16-17 of Algorithm 1, where "step length" refers to the updated step length, σ refers to the current step length, the current value of ***u*** is *(x; y; τ*; *θ; s;* 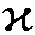 )*,* and the updated value of *u* is *(x'; y'; τ'; θ'*; ***s**';* 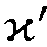 ). As used herein, a value of a vector (e.g., *u* or ***ṽ'***) may refer to the value of a single component or of multiple components of that vector.

In some embodiments, the updated step length σ is given by by: $\frac{μ \left(x, τ, s, ϰ\right) \left(1-σ\right) \left(r+1\right)}{- {\left(Δx\right)}^{⊤} s - {\left(Δs\right)}^{⊤} x - \left(Δϰ\right) τ - \left(Δτ\right) ϰ}$ where Δ***x**,* Δ***s**,* Δ 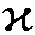 *,* and Δ*τ* are components of the unit vector ***ṽ'***; *x, s,* x, and *τ* are components of current *u; µ*(***x**, τ, s, x)* is a duality gap; σ is the current step length; and r is the number of second-order cone constraints of the SOCP instance. The updated step length may be determined such that a duality gap *µ* of the updated value of *u* is a factor of σ (the current step length) smaller than the current value of u within a second order deviation in the step length σ. The duality gap *µ* may describe a difference between the current value of *u* and an exact solution to the linear system *Gu = h.* More information on step length can be found above at, for example, sections I B, V A, and IV A.

At step 1650, the computing system determines a solution to the SOCP instance based on the updated value of *u* (e.g., steps 19-21 of Algorithm 1). In the example of Algorithm 1, the solution to the SOCP instance (within precision *ε*) is vector *x* of *(x; **y***; *τ*; *θ*; *s;* 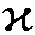 ))*.*

In some embodiments, steps 1620-1640 are repeated iteratively (e.g., see loop of steps 3-21 of Algorithm 1). For example, a target precision ε for the solution to the SOCP instance is received (referred to as "tolerance" or "precision" in Algorithm 1), and steps 1620-1640 are repeated and a duality gap *µ* is iteratively updated based on the output of the quantum state tomography (e.g., the new duality gap *µ* is the product of current duality gap *µ* and the updated step length σ (e.g., see also step 20 of Algorithm 1) until the duality gap *µ* is less than the target precision ε (e.g., see condition at step 3 of Algorithm 1), where the duality gap *µ* describes a difference between the current value of *u* and an exact solution to the linear system *Gu = h.* In these embodiments, matrix *G* and vector *h* may be constructed (in step 1620) further based on the (e.g., updated) value of *u* (e.g., *u* is (*x; y; τ*; *θ; s;* 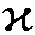 ) and *G* and *h* depend at least on one of these quantities in steps 4 and 5 of Algorithm 1).

### X. Description of a Computing System

Embodiments described above may be implemented using one or more computing systems. Example computing systems are described below.

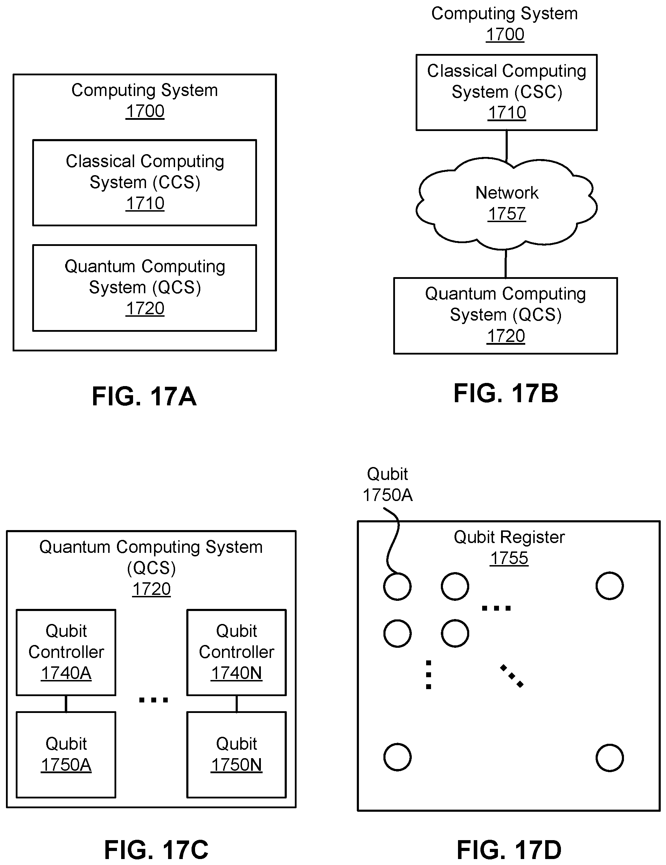

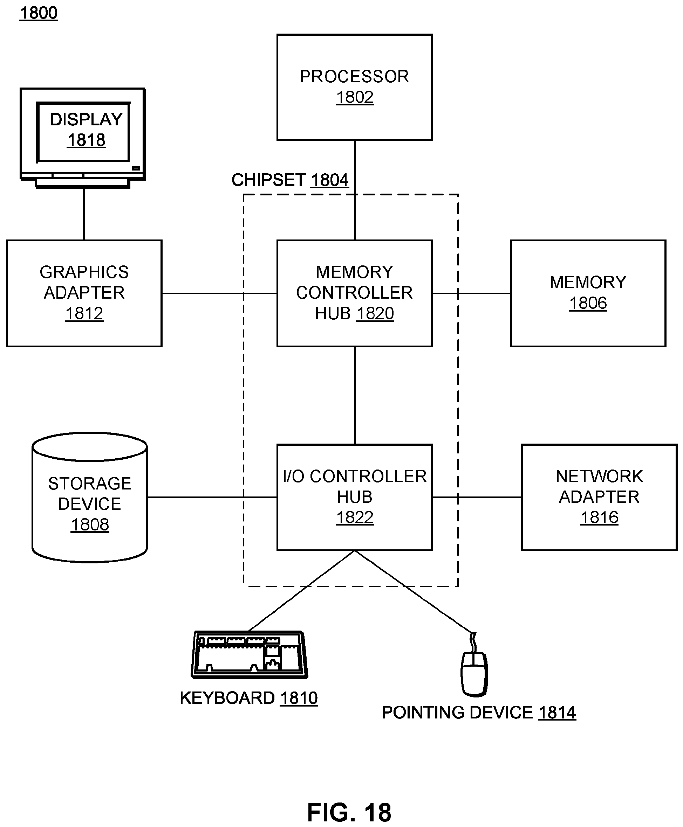

FIG. 17A is a block diagram that illustrates a computing system 1700, according to some embodiments. In the example of FIG. 17A, the computing system 1700 includes a classical computing system 1710 (also referred to as a non-quantum computing system) and a quantum computing system 1720, however a computing system may just include a classical computing system or a quantum computing system. An embodiment of the classical computing system 1710 is described further with respect to FIG. 18. While the classical computing system 1710 and quantum computing system 1720 are illustrated together, they may be physically separate systems. For example, FIG. 17B illustrates an example cloud computing architecture where the computing system 1710 and the quantum computing system 1720 communicate via a network 1757. The computing system 1700 may include different, additional, or fewer elements than illustrated (e.g., multiple quantum computing systems 1720).

The classical computing system 1710 may operate or control the quantum computing system 1720. For example, the classical computing system 1710 causes the quantum computing system 1720 to perform one or more operations, such as to execute a quantum algorithm or quantum circuit (e.g., the classical computing system 1710 generates and transmits instructions for the quantum computing system 1720 to execute a quantum algorithm or quantum circuit). For example, the computing system 1710 causes the quantum computing system 1720 to perform one or more steps of method 1600. Although only one classical computing system 1710 is illustrated in FIG. 17A, any number of classical computing system 1710 or other external systems may be connected to the quantum computing system 1720.

FIG. 17C is a block diagram that illustrates the quantum computing system 1720, according to some embodiments. The quantum computing system 1720 includes any number of quantum bits ("qubits") 1750 and associated qubit controllers 1740. As illustrated in FIG. 17D, the qubits 1750 may be in a qubit register 1755 of the quantum computing system 1720 (or multiple registers). Qubits are further described below. A qubit controller 1740 is a module that controls one or more qubits 1750. A qubit controller 1740 may include one or more classical processors such as one or more CPUs, one or more GPUs, one or more FPGAs, or some combination thereof. A qubit controller 1740 may perform physical operations on one or more qubits 1750 (e.g., it can perform quantum gate operations on a qubit 1740). In the example of FIG. 17C, a separate qubit controller 1740 is illustrated for each qubit 1750, however a qubit controller 1740 may control multiple (e.g., all) qubits 1750 of the quantum computing system 1720 or multiple controllers 1740 may control a single qubit. For example, the qubit controllers 1740 can be separate processors, parallel threads on the same processor, or some combination of both.

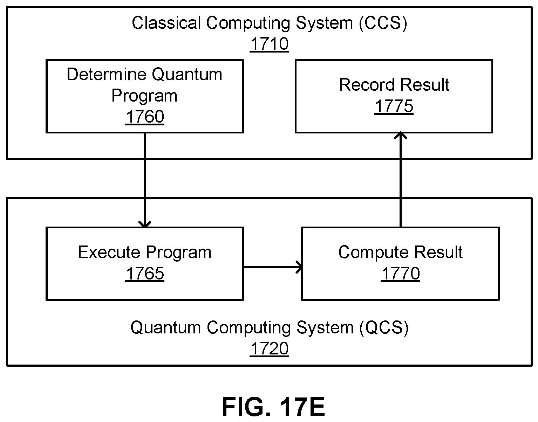

FIG. 17E is a flow chart that illustrates an example execution of a quantum routine on the computing system 1700. The classical computing system 1710 generates 1760 a quantum program to be executed or processed by the quantum computing system 1720. The quantum program may include instructions or subroutines to be performed by the quantum computing system 1720. In an example, the quantum program is a quantum circuit. The quantum computing system 1720 executes 1765 the program and computes 1770 a result (referred to as a shot or run). Computing the result may include performing a measurement of a quantum state generated by the quantum computing system 1720 that resulted from executing the program. Practically, this may be performed by measuring values of one or more of the qubits 1750. The quantum computing system 1720 typically performs multiple shots to accumulate statistics from probabilistic execution. The number of shots and any changes that occur between shots (e.g., parameter changes) may be referred to as a schedule. The schedule may be specified by the program. The result (e.g., quantum state data) (or accumulated results) is recorded 1775 by the classical computing system 1710. Results may be returned after a termination condition is met (e.g., a threshold number of shots occur). The classical computing system 1710 may determine a quantity based on the received results.

The quantum computing system 1720 exploits the laws of quantum mechanics in order to perform computations. A quantum processing device, a quantum computer, a quantum processor system, and a quantum processing unit (QPU) are each examples of a quantum computing system. The quantum computing system 1700 can be a universal or a non-universal quantum computing system (a universal quantum computing system can execute any possible quantum circuit (subject to the constraint that the circuit doesn't use more qubits than the quantum computing system)). In some embodiments, the quantum computing system 1700 is a gate model quantum computer. As previously described, quantum computing systems use so-called qubits, or quantum bits (e.g., 1750A). While a classical bit has a value of either 0 or 1, a qubit is a quantum mechanical system that can have a value of 0, 1, or a superposition of both values. Example physical implementations of qubits include superconducting qubits, spin qubits, trapped ions, arrays of neutral atoms, and photonic systems (e.g., photons in waveguides). Additionally, the disclosure is not specific to qubits. The disclosure may be generalized to apply to quantum computing systems 1720 whose building blocks are qudits (d-level quantum systems, where *d>*2) or quantum continuous variables, rather than qubits.

A quantum circuit is an ordered collection of one or more gates. A sub-circuit may refer to a circuit that is a part of a larger circuit. A gate represents a unitary operation performed on one or more qubits. Quantum gates may be described using unitary matrices. The depth of a quantum circuit is the least number of steps used to execute the circuit on a quantum computing system. The depth of a quantum circuit may be smaller than the total number of gates because gates acting on non-overlapping subsets of qubits may be executed in parallel. A layer of a quantum circuit may refer to a step of the circuit, during which multiple gates may be executed in parallel. In some embodiments, a quantum circuit is executed by a quantum computing system. In this sense, a quantum circuit can be thought of as comprising a set of instructions or operations that a quantum computing system can execute. To execute a quantum circuit on a quantum computing system, a user may inform the quantum computing system what circuit is to be executed. A quantum computing system may include both a core quantum device and a classical peripheral/control device (e.g., a qubit controller 1740) that is used to orchestrate the control of the quantum device. It is to this classical control device that the description of a quantum circuit may be sent when one seeks to have a quantum computer execute a circuit.

The parameters of a parameterized quantum circuit may refer to parameters of the gates. For example, a gate that performs a rotation about the y axis may be parameterized by a real number that describes the angle of the rotation.

The description of a quantum circuit to be executed on one or more quantum computing systems may be stored in a non-transitory computer-readable storage medium. The term "computer-readable storage medium" should be taken to include a single medium or multiple media (e.g., a centralized or distributed database, or associated caches and servers) able to store instructions. The term "computer-readable medium" shall also be taken to include any medium that is capable of storing instructions for execution by the quantum computing system and that cause the quantum computing system to perform any one or more of the methodologies disclosed herein. The term "computer-readable medium" includes, but is not limited to, data repositories in the form of solid-state memories, optical media, and magnetic media.

FIG. 18 is an example architecture of a classical computing system 1710, according to some embodiments. The quantum computing system 1720 may also have one or more components described with respect to FIG. 18. FIG. 18 depicts a high-level block diagram illustrating physical components of a computer system used as part or all of one or more entities described herein, in accordance with an embodiment. A computer may have additional, less, or variations of the components provided in FIG. 18. Although FIG. 18 depicts a computer 1800, the figure is intended as a functional description of the various features which may be present in computer systems rather than a structural schematic of the implementations described herein. In practice, and as recognized by those of ordinary skill in the art, items shown separately could be combined and some items could be separated.

Illustrated in FIG. 18 are at least one processor 1802 coupled to a chipset 1804. Also coupled to the chipset 1804 are a memory 1806, a storage device 1808, a keyboard 1810, a graphics adapter 1812, a pointing device 1814, and a network adapter 1816. A display 1818 is coupled to the graphics adapter 1812. In one embodiment, the functionality of the chipset 1804 is provided by a memory controller hub 1820 and an I/O hub 1822. In another embodiment, the memory 1806 is coupled directly to the processor 1802 instead of the chipset 1804. In some embodiments, the computer 1800 includes one or more communication buses for interconnecting these components. The one or more communication buses optionally include circuitry (sometimes called a chipset) that interconnects and controls communications between system components.

The storage device 1808 is any non-transitory computer-readable storage medium, such as a hard drive, compact disk read-only memory (CD-ROM), DVD, or a solid-state memory device or other optical storage, magnetic cassettes, magnetic tape, magnetic disk storage or other magnetic storage devices, optical disk storage devices, flash memory devices, or other non-volatile solid state storage devices. Such a storage device 1808 can also be referred to as persistent memory. The pointing device 1814 may be a mouse, track ball, or other type of pointing device, and is used in combination with the keyboard 1810 to input data into the computer 1800. The graphics adapter 1812 displays images and other information on display 1818. The network adapter 1816 couples the computer 1800 to a local or wide area network.

The memory 1806 holds instructions and data used by the processor 1802. The memory 1806 can be non-persistent memory, examples of which include high-speed random access memory, such as DRAM, SRAM, DDR RAM, ROM, EEPROM, flash memory.

As is known in the art, a computer 1800 can have different or other components than those shown in FIG. 18. In addition, the computer 1800 can lack certain illustrated components. In one embodiment, a computer 1800 acting as a server may lack a keyboard 1810, pointing device 1814, graphics adapter 1812, or display 1818. Moreover, the storage device 1808 can be local or remote from the computer 1800 (such as embodied within a storage area network (SAN)).

As is known in the art, the computer 1800 is adapted to execute computer program modules for providing functionality described herein. As used herein, the term "module" refers to computer program logic utilized to provide the specified functionality. Thus, a module can be implemented in hardware, firmware, or software. In one embodiment, program modules are stored on storage device 1808, loaded into the memory 1806, and executed, individually or together, by one or more processors (e.g., 1802).

### XI. Additional Considerations

Some portions of the above disclosure describe the embodiments in terms of algorithmic processes or operations. These algorithmic descriptions and representations are commonly used by those skilled in the computing arts to convey the substance of their work effectively to others skilled in the art. These operations, while described functionally, computationally, or logically, are understood to be implemented by computer programs comprising instructions for execution, individually or together, by one or more processors, equivalent electrical circuits, microcodes, or the like. Furthermore, it has also proven convenient at times, to refer to these arrangements of functional operations as modules, without loss of generality. In some cases, a module can be implemented in hardware, firmware, or software.

As used herein, any reference to "one embodiment" or "an embodiment" means that a particular element, feature, structure, or characteristic described in connection with the embodiment is included in at least one embodiment. The appearances of the phrase "in one embodiment" in various places in the specification are not necessarily all referring to the same embodiment. Similarly, use of "a" or "an" preceding an element or component is done merely for convenience. This description should be understood to mean that one or more of the elements or components are present unless it is obvious that it is meant otherwise. As used herein, the terms "comprises," "comprising," "includes," "including," "has," "having" or any other variation thereof, are intended to cover a non-exclusive inclusion. For example, a process, method, article, or apparatus that comprises a list of elements is not necessarily limited to only those elements but may include other elements not expressly listed or inherent to such process, method, article, or apparatus. Further, unless expressly stated to the contrary, "or" refers to an inclusive or and not to an exclusive or. For example, a condition A or B is satisfied by any one of the following: A is true (or present) and B is false (or not present), A is false (or not present) and B is true (or present), and both A and B are true (or present).

In addition, use of the "a" or "an" are employed to describe elements and components of the embodiments. This is done merely for convenience and to give a general sense of the disclosure. This description should be read to include one or at least one and the singular also includes the plural unless it is obvious that it is meant otherwise. Where values are described as "approximate" or "substantially" (or their derivatives), such values should be construed as accurate +/- 10% unless another meaning is apparent from the context. From example, "approximately ten" should be understood to mean "in a range from nine to eleven."

Alternative embodiments are implemented in computer hardware, firmware, software, and/or combinations thereof. Implementations can be implemented in a computer program product tangibly embodied in a machine-readable storage device for execution by a programmable processor system including one or more processors that can act individually or together; and method steps can be performed by a programmable processor system executing a program of instructions to perform functions by operating on input data and generating output. Embodiments can be implemented advantageously in one or more computer programs that are executable on a programmable system including one or more programmable processors coupled to receive data and instructions from, and to transmit data and instructions to, a data storage system, at least one input device, and at least one output device. Each computer program can be implemented in a high-level procedural or object-oriented programming language, or in assembly or machine language if desired; and in any case, the language can be a compiled or interpreted language. Suitable processors include, by way of example, both general and special purpose microprocessors. Generally, a processor will receive instructions and data from a read-only memory and/or a random-access memory. Generally, a computer will include one or more mass storage devices for storing data files; such devices include magnetic disks, such as internal hard disks and removable disks; magneto-optical disks; and optical disks. Storage devices suitable for tangibly embodying computer program instructions and data include all forms of non-volatile memory, including by way of example semiconductor memory devices, such as EPROM, EEPROM, and flash memory devices; magnetic disks such as internal hard disks and removable disks; magneto-optical disks; and CD-ROM disks. Any of the foregoing can be supplemented by, or incorporated in, ASICs (application-specific integrated circuits) and other forms of hardware.

Although the above description contains many specifics, these should not be construed as limiting the scope of protection defined by the claims, but merely as illustrating different examples. It should be appreciated that the scope of protection includes other embodiments not discussed in detail above. Various other modifications, changes, and variations which will be apparent to those skilled in the art may be made in the arrangement, operation, and details of the methods and apparatuses disclosed herein without departing from the scope of protection.

## Claims

1. A quantum interior point method for solving a second-order cone program instance using a computing system (1700), the computing system comprising a quantum computing system (1720) and a classical computing system (1710), the method comprising:
(a) receiving (1610) the second-order cone program instance;
(b) defining (1620) a Newton system for the second-order cone program instance by constructing matrix *G* and vector ***h*,** where the matrix *G* and the vector ***h*** describe constraints for a linear system *Gu = h* based on the second-order cone program instance;
(c) preconditioning (1630), by the classical computing system, the matrix *G* and the vector ***h*** via row normalization, wherein the preconditioning reduces a condition number of the matrix *G*, wherein preconditioning the matrix *G* and the vector ***h*** comprises:
determining a diagonal matrix *D* where at least one entry *Dᵢᵢ* is equal to a norm of row i of the matrix G; and
redefining the matrix *G* and the vector *h* according to: *G = D⁻¹G* and $h = {D}^{- 1} h ;$
(d) iteratively determining (1640) u until a predetermined iteration condition is met, each iteration comprising:
causing the quantum computing system to apply the matrix *G* and the vector ***h*** to a quantum linear system solver to generate a quantum state;
causing the quantum computing system to perform quantum state tomography on the quantum state; and
updating a value of *u* based on a current value of *u* and an output of the quantum state tomography; and
(e) determining (1650) a solution to the second-order cone program instance based on the updated value of *u.*

2. The method of claim 1, wherein *D⁻¹G* has a condition number less that the condition number of the previous matrix *G*.

3. The method of claim 1, wherein the output of the quantum state tomography is a unit vector ***ṽ'*** indicating an iteration direction for *u.*

4. The method of claim 3, wherein the unit vector ***ṽ'*** is **characterized by** ∥***ṽ'*** - ***v***∥ ≤ *ξ* with probability equal to or greater than a predetermined probability threshold, where v ∝ *G*⁻*¹**h*** and ***ξ*** is a tomography precision parameter.

5. The method of claim 4, wherein updating the value of u comprises:
determining a step length σ ≠ *0* based on the unit vector ***ṽ'***; and
adding the current value of *u* to the product of: (1) the step length σ and (2) the unit vector ***ṽ'***.

6. The method of claim 5, wherein the step length is given by: $\frac{μ \left(x, τ, s, ϰ\right) \left(1-σ\right) \left(r+1\right)}{- {\left(Δx\right)}^{⊤} s - {\left(Δs\right)}^{⊤} x - \left(Δϰ\right) τ - \left(Δτ\right) ϰ}$ where Δ***x**,* Δ***s**,* Δ 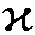 *,* and Δ*τ* are components of the unit vector ***ṽ'***; *x, s,* 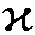 , and *τ* are components of current *u; µ*(***x**, τ, s,* 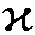 ) is a duality gap; σ is the step length; and *r* is a number of second-order cone constraints of the second-order cone program instance.

7. The method of claim 5, wherein the step length σ is determined such that a duality gap *µ* of the updated value of *u* is a factor of σ smaller than the current value of *u* within a second order deviation in the step length σ.

8. The method of claim 7, wherein the duality gap *µ* describes a difference between the current value of *u* and an exact solution to the linear system *Gu = h.*

9. The method of claim 1, wherein the quantum state tomography is performed according to a tomography precision parameter *ξ* that decreases with each new iteration, where optionally the tomography precision parameter *ξ* decreases by *ξ*/2 with each new iteration.

10. The method of claim 1, wherein causing the quantum computing system to apply the matrix *G* and the vector h to the quantum linear system solver to generate the quantum state comprises *k > 0* applications of the quantum linear system solver and *k* controlled-applications of the quantum linear system solver to generate the quantum state.

11. The method of claim 1, further comprising:
receiving a target precision ε for the solution to the second-order cone program instance; and
repeating steps (b)-(d) and iteratively updating a duality gap *µ* based on the output of the quantum state tomography until the duality gap *µ* is less than the target precision ε, where the duality gap *µ* describes a difference between the current value of *u* and an exact solution to the linear system *Gu = h.*

12. The method of claim 11, wherein the matrix *G* and the vector *h* are constructed further based on the updated value of *u.*

13. The method of claim 1, wherein causing the quantum computing system to apply the matrix *G* and the vector *h* to the quantum linear system solver comprises causing the quantum computing system to execute a quantum circuit.

14. The method of claim 1, wherein the quantum linear system solver operates on a block encoded version of the matrix *G* and a state-prepared version of the vector ***h*,** where optionally the method further comprises: causing the matrix *G* to be block encoded onto the quantum computing system and the vector ***h*** to be state encoded onto the quantum computing system.

15. A non-transitory computer-readable storage medium storing code that, when executed by a computing system (1700) comprising a classical computing system (1710) and a quantum computing system (1720), causes the computing system to perform the method of any of claims 1 - 14.

## Patentansprüche

1. Quanten-Innere-Punkte-Verfahren zur Lösung einer Instanz eines Kegelprogramms zweiter Ordnung, das ein Computersystem (1700) verwendet, das ein Quanten-Computersystem (1720) und ein klassisches Computersystem (1710) umfasst, wobei das Verfahren umfasst:
(a) Empfangen (1610) der Instanz des Second-Order-Cone-Programms;
(b) Definieren (1620) eines Newton-Systems für die Instanz des Second-Order-Cone-Programms durch Konstruieren einer Matrix *G* und eines Vektors h, wobei die Matrix *G* und der Vektor *h* Randbedingungen für ein lineares System *Gu = h* auf der Grundlage der Kegelprogramminstanz zweiter Ordnung beschreiben;
(c) Vorkonditionieren (1630) der Matrix *G* und des Vektors h durch das klassische Computersystem mittels Zeilennormierung, wobei das Vorkonditionieren eine Konditionszahl der Matrix *G* verringert, wobei das Vorkonditionieren der Matrix *G* und des Vektors h umfasst:
Bestimmung einer Diagonalmatrix *D,* bei der mindestens ein Eintrag *Dᵢᵢ* gleich einer Norm der Zeile i der Matrix *G* ist; und
Neudefinieren der Matrix *G* und des Vektors *h* gemäß: *G = D*⁻¹*G und h = D*⁻¹***h***;
(d) iteratives Bestimmen (1640) von u, bis eine vorgegebene Iterationsbedingung erfüllt ist, wobei jede Iteration umfasst:
Bewirken, dass das Quanten-Computersystem die Matrix *G* und den Vektor h auf einen Quanten-Linearsystemlöser anwendet, um einen Quantenzustand zu erzeugen;
Bewirken, dass das Quanten-Computersystem eine Quantenzustandstomografie an dem Quantenzustand durchführt; und
Aktualisieren eines Werts von u auf der Grundlage eines aktuellen Werts von u und einer Ausgabe der Quantenzustandstomografie; und
(e) Bestimmen (1650) einer Lösung für die Instanz des Second-Order-Cone-Programms auf der Grundlage des aktualisierten Werts von u.

2. Verfahren nach Anspruch 1, wobei *D*⁻¹*G* eine Konditionszahl aufweist, die kleiner ist als die Konditionszahl der vorherigen Matrix *G*.

3. Verfahren nach Anspruch 1, wobei die Ausgabe der Quantenzustandstomografie ein Einheitsvektor ***ṽ'*** ist, der eine Iterationsrichtung für u angibt.

4. Verfahren nach Anspruch 3, wobei der Einheitsvektor v **gekennzeichnet ist durch** ∥***ṽ'***-***v***∥ ≤ *ξ* mit einer Wahrscheinlichkeit, die gleich oder größer als ein vorbestimmter Wahrscheinlichkeitsschwellenwert ist, wobei *v* ∝ *G*⁻¹***h*** ist und *ξ* ein Tomografie-Genauigkeitsparameter ist.

5. Verfahren nach Anspruch 4, wobei das Aktualisieren des Werts von u umfasst:
Bestimmen einer Schrittlänge σ ≠ 0 auf der Grundlage des Einheitsvektors ***ṽ'***; und
Addieren des aktuellen Werts von u zum Produkt aus: (1) der Schrittlänge σ und (2) dem Einheitsvektor ***ṽ'***.

6. Verfahren nach Anspruch 5, wobei die Schrittlänge gegeben ist durch: $\frac{μ \left(x, τ, s, ϰ\right) \left(1-σ\right) \left(r+1\right)}{- {\left(Δx\right)}^{⊤} s - {\left(Δs\right)}^{⊤} x - \left(Δϰ\right) τ - \left(Δτ\right) ϰ}$ wobei Δ*x,* Δ*s,* Δ 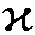 und Δτ Komponenten des Einheitsvektors ***ṽ'* sind;** x, s, 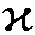 und τ Komponenten des aktuellen u sind; µ(**x**, **τ**, s, 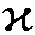 ) eine Dualitätslücke ist; σ die Schrittlänge ist; und r eine Anzahl von Randbedingungen des Kegels zweiter Ordnung der Instanz des Second-Order-Cone-Programms ist.

7. Verfahren nach Anspruch 5, wobei die Schrittlänge σ so bestimmt wird, dass eine Dualitätslücke µ des aktualisierten Werts von u um einen Faktor σ kleiner ist als der aktuelle Wert von u innerhalb einer Abweichung zweiter Ordnung in der Schrittlänge σ.

8. Verfahren nach Anspruch 7, wobei die Dualitätslücke µ eine Differenz zwischen dem aktuellen Wert von u und einer exakten Lösung des linearen Systems *Gu* = *h*beschreibt.

9. Verfahren nach Anspruch 1, wobei die Quantenzustandstomografie gemäß einem Tomografie-Genauigkeitsparameter *ξ* durchgeführt wird, der mit jeder neuen Iteration abnimmt, wobei optional der Tomografie-Genauigkeitsparameter *ξ* mit jeder neuen Iteration um *ξ*/2 abnimmt.

10. Verfahren nach Anspruch 1, wobei das Bewirken, dass das Quanten-Computersystem die Matrix *G* und den Vektor *h* auf den Quanten-Linearsystemlöser anwendet, um den Quantenzustand zu erzeugen, umfasst: *k* > 0 Anwendungen des Quanten-Linearsystemlösers und *k* gesteuerte Anwendungen des Quanten-Linearsystemlösers, um den Quantenzustand zu erzeugen.

11. Verfahren nach Anspruch 1, ferner umfassend:
Empfangen einer Zielgenauigkeit ε für die Lösung der Instanz des Second-Order-Cone-Programms; und
Wiederholen der Schritte (b)-(d) und iteratives Aktualisieren einer Dualitätslücke µ auf der Grundlage der Ausgabe der Quantenzustandstomografie, bis die Dualitätslücke µ kleiner als die Zielgenauigkeit ε ist, wobei die Dualitätslücke µ eine Differenz zwischen dem aktuellen Wert von u und einer exakten Lösung des linearen Systems *Gu = h* beschreibt.

12. Verfahren nach Anspruch 11, wobei die Matrix *G* und der Vektor *h* ferner auf der Grundlage des aktualisierten Werts von u konstruiert werden.

13. Verfahren nach Anspruch 1, wobei das Bewirken, dass das Quanten-Computersystem die Matrix *G* und den Vektor *h* auf den Quanten-Linearsystemlöser umfasst: Bewirken, dass das Quanten-Computersystem eine Quantenschaltung ausführt.

14. Verfahren nach Anspruch 1, wobei der Quanten-Linearsystemlöser auf einer blockcodierten Version der Matrix *G* und einer zustandspräparierten Version des Vektors h arbeitet, wobei optional das Verfahren ferner umfasst: Bewirken, dass die Matrix *G* auf dem Quanten-Computersystem blockcodiert wird und der Vektor *h* auf dem Quanten-Computersystem zustandscodiert wird.

15. Nichtflüchtiges computerlesbares Speichermedium, auf dem Code gespeichert ist, der, wenn er durch ein Computersystem (1700) ausgeführt wird, das ein klassisches Computersystem (1710) und ein Quanten-Computersystem (1720) umfasst, bewirkt, dass das Computersystem das Verfahren nach einem der Ansprüche 1 bis 14 durchführt.

## Revendications

1. Procédé de points intérieurs quantique pour résoudre une instance de programme conique du second ordre utilisant un système informatique (1700), le système informatique comprenant un système informatique quantique (1720) et un système informatique classique (1710), le procédé comprenant :
(a) la réception (1610) de l'instance de programme conique du second ordre ;
(b) la définition (1620) d'un système de Newton pour l'instance de programme conique du second ordre en construisant une matrice *G* et un vecteur *h,* où la matrice *G* et le vecteur *h* décrivent des contraintes pour un système linéaire *Gu = h* sur la base de l'instance de programme conique du second ordre ;
(c) le préconditionnement (1630), par le système de calcul classique, de la matrice *G* et du vecteur h via une normalisation de lignes, dans lequel le préconditionnement réduit un nombre de conditionnement de la matrice *G*, dans laquelle le préconditionnement de la matrice *G* et du vecteur h comprend :
la détermination d'une matrice diagonale *D* où au moins une entrée *Dᵢᵢ*) est égale à une norme de ligne i de la matrice *G* ; et
la redéfinition de la matrice *G* et du vecteur *h* selon : *G = D*⁻¹*G* et ***h** = D*⁻¹***h***;
(d) la détermination itérative (1640) ***u*** jusqu'à ce qu'une condition d'itération prédéterminée soit satisfaite, chaque itération comprenant :
ce qui amène le système informatique quantique à appliquer la matrice *G* et le vecteur *h* à un solveur de systèmes linéaires quantiques pour générer un état quantique ;
ce qui amène le système d'informatique quantique à réaliser une tomographie d'état quantique sur l'état quantique ; et
la mise à jour d'une valeur de u sur la base d'une valeur actuelle de u et d'une sortie de la tomographie d'état quantique ; et
(e) la détermination (1650) d'une solution à l'instance de programme conique du second ordre sur la base de la valeur mise à jour de u.

2. Procédé selon la revendication 1, dans lequel *D*⁻¹*G* présente un nombre de conditionnement inférieur au nombre de conditionnement de la matrice précédente *G*.

3. Procédé selon la revendication 1, dans lequel la sortie de la tomographie d'état quantique est un vecteur unitaire ***ṽ****'* indiquant une direction d'itération pour u.

4. Procédé selon la revendication 3, dans lequel le vecteur unitaire ***ṽ****'* est **caractérisé par** ∥***ṽ'***-***v***∥ ≤ *ξ* avec une probabilité égale ou supérieure à un seuil de probabilité prédéterminé, où ***v*** ∝ *G*⁻¹***h*** et *ξ* sont un paramètre de précision de tomographie.

5. Procédé selon la revendication 4, dans lequel la mise à jour de la valeur de u comprend :
la détermination d'une longueur de pas σ ≠ 0 sur la base du vecteur unitaire ***ṽ****'* ; et
l'ajout de la valeur actuelle de u au produit de : (1) la longueur de pas σ et (2) le vecteur unitaire ***ṽ'***.

6. Procédé selon la revendication 5, dans lequel la longueur de pas est donnée par : $\frac{μ \left(x, τ, s, ϰ\right) \left(1-σ\right) \left(r+1\right)}{- {\left(Δx\right)}^{⊤} s - {\left(Δs\right)}^{⊤} x - \left(Δϰ\right) τ - \left(Δτ\right) ϰ}$ où Δ*x,* Δ*s,* Δ 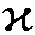 et Δi sont des composantes du vecteur unitaire ***ṽ'*** ; x, s, 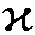 et τ sont des composantes du courant u ; µ(**x**, **τ**, s, 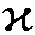 ) est un écart de dualité ; σ est la longueur de pas ; et r est un nombre de contraintes coniques du second ordre de l'instance de programme conique du second ordre.

7. Procédé selon la revendication 5, dans lequel la longueur de pas σ est déterminée de telle sorte qu'un écart de dualité µ de la valeur mise à jour de u est un facteur de σ inférieur à la valeur actuelle de u dans une déviation du second ordre dans la longueur de pas σ.

8. Procédé selon la revendication 7, dans lequel l'écart de dualité µ décrit une différence entre la valeur actuelle de u et une solution exacte du système linéaire *Gu = h.*

9. Procédé selon la revendication 1, dans lequel la tomographie d'état quantique est réalisée selon un paramètre de précision de tomographie *ξ* qui diminue à chaque nouvelle itération, où, facultativement, le paramètre de précision de tomographie *ξ* diminue de *ξ*/2 à chaque nouvelle itération.

10. Procédé selon la revendication 1, dans lequel le fait d'amener le système informatique quantique à appliquer la matrice G et le vecteur h au solveur de systèmes linéaires quantique pour générer l'état quantique comprend *k* > 0 des applications du solveur de systèmes linéaires quantique et *k* des applications commandées du solveur de systèmes linéaires quantique pour générer l'état quantique.

11. Procédé selon la revendication 1, comprenant en outre :
la réception d'une précision cible ε pour la solution de l'instance de programme conique du second ordre ; et
la répétition des étapes (b)-(d) et la mise à jour de manière itérative d'un écart de dualité µ sur la base de la sortie de la tomographie d'état quantique jusqu'à ce que l'écart de dualité µ soit inférieur à la précision cible ε, où l'écart de dualité µ décrit une différence entre la valeur actuelle de u et une solution exacte du système linéaire *Gu = h.*

12. Procédé selon la revendication 11, dans lequel la matrice G et le vecteur h sont construits en outre sur la base de la valeur mise à jour de u.

13. Procédé selon la revendication 1, dans lequel le fait d'amener le système informatique quantique à appliquer la matrice *G* et le vecteur *h* au solveur de systèmes linéaires quantique comprend le fait d'amener le système informatique quantique à exécuter un circuit quantique.

14. Procédé selon la revendication 1, dans lequel le solveur de systèmes linéaires quantique opère sur une version codée par blocs de la matrice *G* et une version préparée en état du vecteur h, où le procédé comprend en outre, facultativement : le fait d'amener la matrice *G* à être codée par blocs sur le système de calcul quantique et le vecteur *h* à être codé en état sur le système de calcul quantique.

15. Support de stockage non transitoire lisible par ordinateur stockant un code qui, lorsqu'il est exécuté par un système informatique (1700) comprenant un système informatique classique (1710) et un système informatique quantique (1720), amène le système informatique à réaliser le procédé selon l'une quelconque des revendications 1 à 14.
